# EUROPEAN PATENT SPECIFICATION

(11) **EP 2 971 647 B1**
(45) Date of publication and mention of the grant of the patent: **24.10.2018**
(21) Application number: 14720795.5
(22) Date of filing: 13.03.2014
(51) Int. Cl.: F02C 1/06, F02C 3/34, F02C 6/00

(54) **SYSTEM AND METHOD FOR HIGH EFFICIENCY POWER GENERATION USING A CARBON DIOXIDE CIRCULATING WORKING FLUID**
SYSTEM UND VERFAHREN ZUR HOCHEFFIZIENTEN STROMERZEUGUNG MITHILFE EINES ZIRKULIERENDEN KOHLENSTOFFDIOXIDARBEITSMEDIUMS
SYSTÈME ET PROCÉDÉ POUR LA PRODUCTION D'ÉNERGIE ÉLECTRIQUE À EFFICACITÉ ÉLEVÉE À L'AIDE D'UN FLUIDE DE TRAVAIL DE CIRCULATION DE DIOXYDE DE CARBONE

(30) Priority: 15.03.2013 US 201313843313
(43) Date of publication of application: 20.01.2016
(73) Proprietor: 8 Rivers Capital, LLC, Durham, North Carolina 27701 (US)
(72) Inventor: ALLAM, Rodney John, Lanhill Chippenham Wiltshire SN14 6LY (GB); PALMER, Miles R., Chapel Hill, North Carolina 27516 (US); BROWN, JR., Glenn William, Durham, North Carolina 27705 (US); FETVEDT, Jeremy Eron, Raleigh, North Carolina 27612 (US); FORREST, Brock Alan, Durham, North Carolina 27705 (US)
(74) Representative: Hoeger, Stellrecht & Partner Patentanwälte mbB
(86) International application number: PCT/US2014/026181
(87) International publication number: WO 2014/151656

(56) References cited:
- WO-A1-2004/044388
- WO-A1-2004/044388
- US-A- 4 498 289
- US-A- 4 498 289
- US-A1- 2002 134 085
- US-A1- 2011 179 799

## Description

### FIELD OF THE INVENTION

The present invention is directed to systems and methods for generation of power, such as electricity, through use of a circulating fluid to transfer energy generated through high efficiency combustion of a fuel. Particularly, the system and method can use carbon dioxide as the circulating fluid.

### BACKGROUND OF THE INVENTION

It is estimated that fossil fuels will continue to provide the bulk of the world's electric power requirements for the next 100 years while non-carbon power sources are developed and deployed. Known methods of power generation through combustion of fossil fuels and/or suitable biomass, however, are plagued by rising energy costs and an increasing production of carbon dioxide (CO₂) and other emissions. Global warming is increasingly seen as a potentially catastrophic consequence of increased carbon emissions by the developed and developing nations. Solar and wind power do not appear capable of replacing fossil fuel combustion in the near term, and nuclear power has dangers associated with both proliferation and nuclear waste disposal.

Conventional means of power production from fossil fuels or suitable biomass now are increasingly being burdened with a requirement for CO₂ capture at high pressure for delivery to sequestration sites. This requirement is proving difficult to fulfill, however, since present technology only provides for very low thermal efficiencies for even the best designs for CO₂ capture. Moreover, capital costs for achieving CO₂ capture are high, and this results in significantly higher electricity costs compared to systems that emit CO₂ into the atmosphere. Accordingly, there is an ever growing need in the art for systems and methods for high efficiency power generation allowing for a reduction in CO₂ emission and/or improved ease of sequestration of produced CO₂.

U.S. 4,498,289 describes a direct fired power system generating and employing a combustion gas which includes carbon dioxide or a working fluid including a combustion chamber for burning a mixture which includes oxygen, carbonaceous fuel and recycled carbon dioxide working fluid at a first pressure of above 1100 PSI thereby providing a combustion gas which includes carbon dioxide and water at substantially the first pressure and above 31 °C. WO 2004/044388 describes an oxygen fired power generation system with a high pressure combustor having a water recycle temperature control subassembly and an intermediate pressure combustor having a CO₂ recycle temperature control subassembly.

### SUMMARY OF THE INVENTION

The present invention provides a method of power generation according to claim 1 and a power generation system according to claim 10.

In certain aspects, the invention provides power production systems that can produce power at high efficiency with low capital cost and also can produce substantially pure CO₂ at pipeline pressure for sequestration. The CO₂ also may be recycled into the power production system.

The inventive systems and methods are characterized by the ability to use a wide variety of fuel sources. For example, the high efficiency combustor used according to the invention can make use of gaseous (e.g., natural gas or coal derived gases), liquid (e.g., hydrocarbons, bitumen) and solid (e.g., coal, lignite, pet-coke) fuels. Even further fuels, as otherwise described herein, could be used.

In other aspects, the methods and systems of the invention are particularly useful in that they can exceed the best efficiency of current coal fired power stations that do not provide for the capture of CO₂. Such current power stations can provide, at best, about 45% efficiency (lower heating value, or "LHV") with 1.7 inches mercury condenser pressure using a bituminous coal. The present system can exceed such efficiency while also delivering CO₂ for sequestration or other disposal at required pressures.

In still another aspect, the present invention provides the ability to reduce the physical size and capital cost of a power generation system compared to current technologies using a similar fuel. Thus, the methods and systems of the present invention can significantly reduce construction costs associated with power production systems.

Still further, the methods and systems of the present invention can provide for the recovery of virtually 100% of the CO₂ used and/or produced, especially CO₂ derived from carbon present in the fuel. Particularly, the CO₂ can be provided as a dried, purified gas at pipeline pressure. Moreover, the invention provides the ability to separately recover other fuel and combustion derived impurities for other use and/or disposal.

In one particular aspect, the present invention is directed to a method of power generation incorporating the use of a circulating fluid, such as CO₂. In specific embodiments, a method of power generation according to the invention can comprise introducing a carbon containing fuel, O₂, and a CO₂ circulating fluid into a transpiration cooled combustor. Specifically, the CO₂ can be introduced at a pressure of at least about 8 MPa (preferably at least about 12 MPa) and a temperature of at least about 200 °C (preferably at least about 400 °C). The method further can comprise combusting the fuel to provide a combustion product stream comprising CO₂. Particularly, the combustion product stream can have a temperature of at least about 800 °C. Further, the method can comprise expanding the combustion product stream across a series of turbines to generate power and release a turbine discharge stream comprising CO₂. Preferably, the combustion product is expanded across a pressure ratio of at least about 20. In specific embodiments, it can be desirable for the CO₂ to be introduced into the combustor at a pressure of at least about 10 MPa, a pressure of at least about 20 MPa, a temperature of at least about 400 °C, or a temperature of at least about 700 °C. Even further possible processing parameters are described herein.

In some embodiments, the CO₂ circulating fluid can be introduced to the transpiration cooled combustor as a mixture with one or both of the O₂ and the carbon containing fuel. In other embodiments, the CO₂ circulating fluid can be introduced to the transpiration cooled combustor as all or part of a transpiration cooling fluid directed through one or more transpiration fluid supply passages formed in the transpiration cooled combustor. In specific embodiments, the CO₂ circulating fluid can be directed into the combustor only as the transpiration fluid.

The combustion may be characterized specifically by the actual combustion temperature. For example, combusting can be carried out at a temperature of at least about 1,500 °C. In other embodiments, combusting can be carried out at a temperature of about 1,600 °C to about 3,300 °C.

The invention also may be characterized by the purity of the O₂ in the O₂ stream. For example, in some embodiments, ambient air may be useful. In specific embodiments, however, it can be beneficial to purify the oxygen content. For example, the O₂ can be provided as a stream wherein the molar concentration of the O₂ is at least 85%. Even further specific concentrations are described herein.

In specific embodiments, the combustion product stream can have a temperature of at least about 1,000 °C. Moreover, the combustion product stream can have a pressure that is at least about 90% of the pressure of the CO₂ introduced into the combustor or is at least about 95% of the pressure of the CO₂ introduced into the combustor.

The invention may be characterized by the ratio of the specific materials introduced into the combustion chamber. For example, the ratio of CO₂ in the CO₂ circulating fluid to carbon in the fuel introduced to the combustor, on a molar basis, can be about 10 to about 50 or can be about 10 to about 30. Even further possible ratios are provided herein.

The invention further may be characterized in that at least a portion of the CO₂ in the turbine discharge stream can be recycled and reintroduced into the combustor. At least a portion of the CO₂ may be discharged from the system (such as for sequestration or other disposal), for example through a pipeline.

In specific embodiments, the CO₂ in the turbine discharge stream can be in a gaseous state. Particularly, the turbine discharge stream can have a pressure of less than or equal to 7 MPa.

In other embodiments, the inventive methods further can comprise passing the turbine discharge stream through at least one heat exchanger that cools the turbine discharge stream and provides a CO₂ circulating fluid stream having a temperature of less than about 200 °C. This can be useful for providing the CO₂ circulating fluid stream under conditions that can facilitate removal of one or more secondary components (i.e., components other than CO₂). In specific embodiments, this can comprise passing the turbine discharge stream through a series of at least two heat exchangers. More specifically, the first heat exchanger in the series can receive the turbine discharge stream and reduce the temperature thereof, the first heat exchanger being formed of a high temperature alloy that withstands a temperature of at least about 900 °C.

The inventive methods also can comprise performing one or more separation steps on the CO₂ circulating fluid stream to remove one or more secondary components that are present in the circulating fluid stream in addition to CO₂, as noted above. Specifically, the one or more secondary components may comprise water.

The inventive methods also may comprise pressurizing a CO₂ stream. For example, after expanding of the combustion product stream and cooling of the turbine discharge stream, it can be beneficial to pressurize the stream for recycle back to the combustor. Specifically, the methods can comprise passing the CO₂ circulating fluid stream through one or more compressors (e.g., pumps) to pressurize the CO₂ circulating fluid stream to a pressure of at least about 8 MPa. This further may comprise passing the CO₂ circulating fluid stream through a series of at least two compressors to pressurize the CO₂ circulating fluid stream. In certain embodiments, the CO₂ circulating fluid stream can be pressurized to a pressure of at least about 15 MPa. Even further pressure ranges may be desirable, as otherwise described herein. In other embodiments, the pressurized CO₂ circulating fluid stream specifically can be provided in a supercritical fluid state. In some embodiments, at least a portion of the CO₂ in the pressurized CO₂ circulating fluid stream can be introduced into a pressurized pipeline for sequestration (or other disposal, as already noted above).

In addition to pressurizing, the inventive methods also can comprise heating the previously cooled CO₂ circulating fluid stream for introduction back into the combustor (i.e., recycling of the CO₂ circulating fluid stream). In some embodiments, this can comprise heating the pressurized CO₂ circulating fluid stream to a temperature of at least about 200 °C, at least about 400 °C, or at least about 700 °C. In certain embodiments, the pressurized CO₂ circulating fluid stream can be heated to a temperature that is less than the temperature of the turbine discharge stream by no more than about 50 °C. Even further possible temperature ranges are provided herein. Specifically, such heating can comprise passing the pressurized CO₂ circulating fluid stream through the same heat exchanger(s) used to cool the turbine discharge stream. Such heating also can comprise input of heat from an external source (i.e., other than heat re-captured from the heat exchangers). In specific embodiments, heating can comprise the use of heat withdrawn from an O₂ separation unit. Preferably, this additional heat is introduced at the cold end of the heat exchanger unit (or, when a series of heat exchangers is used, prior to the heat exchanger in the series working over the highest temperature range).

In certain embodiments, the invention can be characterized by nature of the combustion product stream, which can allow for the implementation of multiple turbines. For example, in some embodiments, the combustion product stream can be a reducing fluid comprising one or more combustible components (e.g., components selected from the group consisting of H₂, CO, CH₄, H₂S, NH₃, and combinations thereof). This may be controlled by the ratio of O₂ to fuel used. In some embodiments, the combustion product stream steam may contain fully oxidized components, such as CO₂, H₂O, and SO₂, as well as the reduced components listed above. The actual composition achieved can depend on the ratio of O₂ to fuel used in the feed to the transpiration combustor. More specifically, the turbine used in such embodiments can comprise two or more units each having an inlet and an outlet. In specific embodiments, the turbine units can be operated such that the operating temperature at the inlet of each unit is substantially the same. This can comprise adding an amount of O₂ to the fluid stream at the outlet of the first turbine unit (or the preceding turbine unit where three or more units are used). Provision of the O₂ can allow for combustion of the one or more combustible components described above, which raises the temperature of the stream prior to entry to the next turbine in the series. This results in the ability to maximize the power produced from the combustion gases in the presence of the circulating fluid.

In other embodiments, the turbine discharge stream can be an oxidizing fluid. For example, the turbine discharge stream may comprise an excess amount of O₂.

In some embodiments, the invention can be characterized by the state of the various streams. For example, after the step of expanding the combustion product stream across the series of turbines, the turbine discharge stream can be in a gaseous state. This gas can be passed through at least one heat exchanger to cool the gaseous turbine discharge stream for separation of the CO₂ from any secondary components. Thereafter, at least a portion of the separated CO₂ can be pressurized and transformed into a supercritical fluid state and again be passed through the same heat exchanger(s) to heat the CO₂ for recycling into the combustor. In specific embodiments, the temperature difference between the temperature of the turbine discharge stream entering the heat exchanger (or the first heat exchanger when a series is used) from the expanding step and the temperature of the heated, pressurized, supercritical fluid CO₂ exiting the same heat exchanger for recycling into the combustor can be less than about 50 °C.

As noted above, the fluid stream exiting from the fuel combustor may comprise the CO₂ circulating fluid as well as one or more further components, such as combustion products. In some embodiments, it can be useful to recycle at least a portion of the CO₂ and reintroduce it into the fuel combustor. Thus, the circulating fluid can be a recycle fluid. Of course, CO₂ from an external source could be used as the circulating fluid. The turbine exhaust may be cooled in an economizer heat exchanger, and the withdrawn heat can be used to heat the high pressure recycle CO₂. The cooled turbine exhaust leaving the low temperature end of the heat exchanger can contain components derived from the fuel or the combustion process, such as H₂O, SO₂, SO₃, NO, NO₂, Hg, and HCl. In further embodiments, these components can be removed from the stream using suitable methods. Other components in this stream may comprise inert gaseous impurities derived from the fuel or oxidant such as N₂, Argon (Ar), and excess O₂. These may be removed by separate suitable processes. In further embodiments, the turbine exhaust must be at a pressure which is less than the condensing pressure of CO₂ in the turbine exhaust at the temperature of available cooling means so that no CO₂ liquid phase can form when the turbine exhaust is cooled as this will allow efficient separation of water as liquid from the gaseous CO₂ which will contain the minimal amount of water vapor to allow water to be condensed. In further embodiments, the purified CO₂ can now be compressed to produce the high pressure recycle CO₂ circulating fluid stream together with at least a portion of the CO₂ in the fluid representing oxidized carbon derived from carbon in the fuel feed to the combustor, which can be introduced into a pressurized pipeline for sequestration. The ability to transfer CO₂ directly from the combustion process into a pressurized pipeline with minimal further treatment or compression due to the high pressure of the turbine exhaust stream is a distinct advantage over conventional methods where CO₂ is recovered at close to atmospheric pressure (i.e., around 0.1 MPa) or is emitted to the atmosphere. Moreover, the CO₂ for sequestration according to the present invention may be transferred in a manner that is more efficient and economical than heretofore known.

The specific heat of the recycle CO₂ fluid entering the heat exchanger, ideally at above the critical pressure, is high and reduces as the temperature rises. It is particularly beneficial for at least a portion of the heat at the lowest temperature levels to be derived from an external source. This could for example be a low pressure steam supply which would provide heat on condensation. In further embodiments this source of heat could be derived from the operation of the air compressors used in the cryogenic air separation plant supplying oxidant to the combustor in the adiabatic mode with no inter-cooling and extraction of the heat of compression with a closed cycle stream of heat transfer fluid used to provide heat to the recycle CO₂ stream.

In one embodiment, a method of power generation according to the present invention can comprise the following steps:
introducing a fuel, O₂, and a CO₂ circulating fluid into a combustor, the CO₂ being introduced at a pressure of at least about 8 MPa and a temperature of at least about 200 °C;
combusting the fuel to provide a combustion product stream comprising CO₂, the combustion product stream having a temperature of at least about 800 °C;
expanding the combustion product stream across a series of turbines to generate power, the series of turbines having an inlet for receiving the combustion product stream and an outlet for release of a turbine discharge stream comprising CO₂, wherein the combustion product is expanded across a pressure ratio of at least about 20;
withdrawing heat from the turbine discharge stream by passing the turbine discharge stream through a heat exchange unit to provide a cooled turbine discharge stream;
removing from the cooled turbine discharge stream one or more secondary components that are present in the cooled turbine discharge stream in addition to CO₂ to provide a purified, cooled turbine discharge stream;
compressing the purified, cooled turbine discharge stream with a first compressor to a pressure above the CO₂ critical pressure to provide a supercritical CO₂ circulating fluid stream;
cooling the supercritical CO₂ circulating fluid stream to a temperature where its density is at least about 200 kg/m³;
passing the supercritical, high density CO₂ circulating fluid through a second compressor to pressurize the CO₂ circulating fluid to the pressure required for input to the combustor;
passing the supercritical, high density, high pressure CO₂ circulating fluid through the same heat exchange unit such that the withdrawn heat is used to increase the temperature of the CO₂ circulating fluid;
supplying an additional quantity of heat to the supercritical, high density, high pressure CO₂ circulating fluid so that the difference between the temperature of the CO₂ circulating fluid exiting the heat exchange unit for recycle to the combustor and the temperature of the turbine discharge stream is less than about 50 °C; and
recycling the heated, supercritical, high density CO₂ circulating fluid into the combustor.

In particular embodiments, the systems and methods may be particularly useful for combining with existing power systems and methods (e.g., convention coal fired power stations, nuclear reactors, and other systems and methods that may make use of conventional boiler systems). Thus, in some embodiments, between the expanding step and the withdrawing step described above, the inventive methods can comprise passing the turbine discharge stream through a second heat exchange unit. Such second heat exchange unit can use heat from the turbine discharge stream to heat one or more streams derived from a steam power system (e.g., a conventional boiler system, including coal fired power stations and nuclear reactor). The thus heated steam streams then can be passed through one or more turbines to generate power. The streams exiting the turbines can be processed by cycling back through the components of the conventional power system (e.g., the boiler).

In further embodiments, the inventive method may be characterized by one or more of the following:
cooling the turbine discharge stream to a temperature below its water dew point;
further cooling the turbine discharge stream against an ambient temperature cooling medium;
condensing water together with the one or more secondary components to form a solution comprising one or more of H₂SO₄, HNO₃, HCl, and mercury;
pressurizing the cooled turbine discharge stream to a pressure of less than about 15 MPa;
withdrawing a product CO₂ stream from the supercritical, high density, high pressure CO₂ circulating fluid stream prior to passing through the heat exchange unit;
using as the fuel a stream of partial combustion products;
combusting a carbon containing fuel with O₂ in the presence of a CO₂ circulating fluid, the carbon containing fuel, O₂, and CO₂ circulating fluid being provided in ratios such that the carbon containing fuel is only partially oxidized to produce the partially oxidized combustion product stream comprising an incombustible component, CO₂, and one or more of H₂, CO, CH₄, H₂S, and NH₃;
providing the carbon containing fuel, O₂, and CO₂ circulating fluid in ratios such that the temperature of the partially oxidized combustion product stream is sufficiently low that all of the incombustible component in the stream is in the form of solid particles;
passing the partially oxidized combustion product stream through one or more filters;
using the filter to reduce the residual amount of incombustible component to less than about 2 mg/m³ of the partially oxidized combustion product;
using coal, lignite, or petroleum coke as the fuel;
providing a particulate fuel as a slurry with CO₂;

In further embodiments, the invention may be described as relating to a method of power generation comprising the following steps:
introducing a carbon containing fuel, O₂, and a CO₂ circulating fluid into a transpiration cooled combustor, the CO₂ being introduced at a pressure of at least about 8 MPa and a temperature of at least about 200 °C;
combusting the fuel to provide a combustion product stream comprising CO₂, the combustion product stream having a temperature of at least about 800 °C;
expanding the combustion product stream across a series of turbines to generate power, the series of turbines having an inlet for receiving the combustion product stream and an outlet for release of a turbine discharge stream comprising CO₂, wherein the combustion product stream is expanded across a pressure ratio of at least about 20;
passing the turbine discharge stream through a series of at least two heat exchangers that withdraw heat from the turbine discharge stream and provide the CO₂ circulating fluid stream;
removing from the CO₂ circulating fluid stream one or more secondary components that are present in the circulating fluid stream in addition to CO₂;
passing the CO₂ circulating fluid stream through a series of at least two compressors that increases the pressure of the CO₂ circulating fluid to at least about 8 MPa and transforms the CO₂ in the circulating fluid from a gaseous state to a supercritical fluid state; and
passing the supercritical CO₂ circulating fluid through the same series of at least two heat exchangers that uses the withdrawn heat to increase the temperature of the CO₂ circulating fluid to at least about 200 °C (or, optionally, to a temperature that is less than the temperature of the turbine discharge stream by no more than about 50 °C). This specifically may comprise introduction of additional heat from an external heat source (i.e., a source of heat not derived directly from the passage of the turbine discharge stream through the heat exchanger(s)).

In further embodiments, the invention may be characterized as providing a high efficiency method of generating power from combustion of a carbon containing fuel with no atmospheric release of CO₂. Specifically, the method can comprise the following steps:
introducing the carbon containing fuel, O₂, and a recycled CO₂ circulating fluid into a transpiration cooled combustor in a defined stoichiometric ratio, the CO₂ being introduced at a pressure of at least about 8 MPa and a temperature of at least about 200 °C;
combusting the fuel to provide a combustion product stream comprising CO₂, the combustion product stream having a temperature of at least about 800 °C;
expanding the combustion product stream across a series of turbines to generate power, the series of turbines having an inlet for receiving the combustion product stream and an outlet for release of a turbine discharge stream comprising CO₂, wherein the combustion product stream is expanded across a pressure ratio of at least about 20;
passing the turbine discharge stream through a series of at least two heat exchangers that withdraw heat from the turbine discharge stream and provide the CO₂ circulating fluid stream;
passing the CO₂ circulating fluid stream through a series of at least two compressors that increases the pressure of the CO₂ circulating fluid to at least about 8 MPa and transforms the CO₂ in the circulating fluid from a gaseous state to a supercritical fluid state;
passing the CO₂ circulating fluid stream through a separation unit wherein the stoichiometrically required amount of CO₂ is recycled and directed to the combustor and any excess CO₂ is withdrawn without atmospheric release; and
passing the recycled CO₂ circulating fluid through the same series of at least two heat exchangers that uses the withdrawn heat to increase the temperature of the CO₂ circulating fluid to at least about 200 °C prior to introduction into the combustor (or, optionally, to a temperature that is less than the temperature of the turbine discharge stream by no more than about 50 °C);
wherein the efficiency of the combustion is greater than 50%, said efficiency being calculated as the ratio of the net power generated in relation to the total lower heating value thermal energy for the carbon containing fuel combusted to generate the power.

In another aspect, the invention can be described as provide a power generation system. Specifically, a power generation system according to the invention can comprise a transpiration cooled combustor, a series of power production turbines, at least one heat exchanger, and at least one compressor.

In specific embodiments, the transpiration cooled combustor can have at least one inlet for receiving a carbon-containing fuel, O₂, and a CO₂ circulating fluid stream. The combustor further can have at least one combustion stage that combusts the fuel in the presence of the CO₂ circulating fluid and provides a combustion product stream comprising CO₂ at a defined pressure (e.g., at least about 8 MPa) and temperature (e.g., at least about 800 °C).

The series of power production turbines can be in fluid communication with the combustor and can have an inlet for receiving the combustion product stream and an outlet for release of a turbine discharge stream comprising CO₂. The series of turbines can be adapted to expand the combustion product stream across a pressure ratio of at least about 20.

The at least one heat exchanger can be in fluid communication with the turbine for receiving the turbine discharge stream. The heat exchanger(s) can transfer heat from the turbine discharge stream to the CO₂ circulating fluid stream.

The at least one compressor can be in fluid communication with the at least one heat exchanger. The compressor(s) can be adapted for pressurizing the CO₂ circulating fluid stream to a desired pressure.

In addition to the foregoing, a power generation system according to the invention further can comprise one or more separation devices positioned between the at least one heat exchanger and the at least one compressor. Such separation device(s) can be useful for removal of one or more secondary components present in the CO₂ circulating fluid in addition to the CO₂.

Still further, the power generation system can comprise an O₂ separation unit that includes one or more components that generates heat. Thus, the power generation system also can comprise one or more heat transfer components that transfers heat from the O₂ separation unit to the CO₂ circulating fluid upstream from the combustor. Optionally, the power generation system can comprise an external heat source. This could for example be a low pressure steam supply which would provide heat on condensation. The power generation system thus could include one or more heat transfer components that transfers heat from the steam to the CO₂ circulating fluid upstream from the combustor.

In further embodiments, a power generation system of the invention may include one or more of the following:
a first compressor adapted to compress the CO₂ circulating fluid stream to a pressure that is above the CO₂ critical pressure;
a second compressor adapted to compress the CO₂ circulating fluid stream to a pressure required for input to the combustor;
a cooling device adapted to cool the CO₂ circulating fluid stream to a temperature where its density is greater than about 200 kg/m³;
one or more heat transfer components that transfers heat from an external source to the CO₂ circulating fluid upstream from the combustor and downstream from the second compressor;
a second combustor located upstream from and in fluid communication with the transpiration cooled combustor;
one or more filters or separation devices located between the second combustor and the transpiration cooled combustor;
a mixing device for forming a slurry of a particulate fuel material with a fluidizing medium;
a milling device for particularizing a solid fuel.

In other embodiments, the present invention can provide a power generation system that may comprise the following: one or more injectors for providing fuel, a CO₂ circulating fluid, and an oxidant; a transpiration cooled combustor having at least one combustion stage that combusts the fuel and provides an exhaust fluid stream at a temperature of at least about 800 °C and a pressure of at least about 4 MPa (preferably at least about 8 MPa); a series of power production turbines having an inlet and an outlet and wherein power is produced as the fluid stream expands, the turbine being designed to expand the fluid stream across a pressure ratio of at least about 20; a heat exchanger for cooling the fluid stream leaving the turbine outlet and for heating the CO₂ circulating fluid; and one or more devices for separating the fluid stream exiting the heat exchanger into CO₂ and one or more further components for recovery or disposal. In further embodiments, the power generation system may also comprise one or more devices for delivering at least a portion of the CO₂ separated from the fluid stream into a pressurized pipeline.

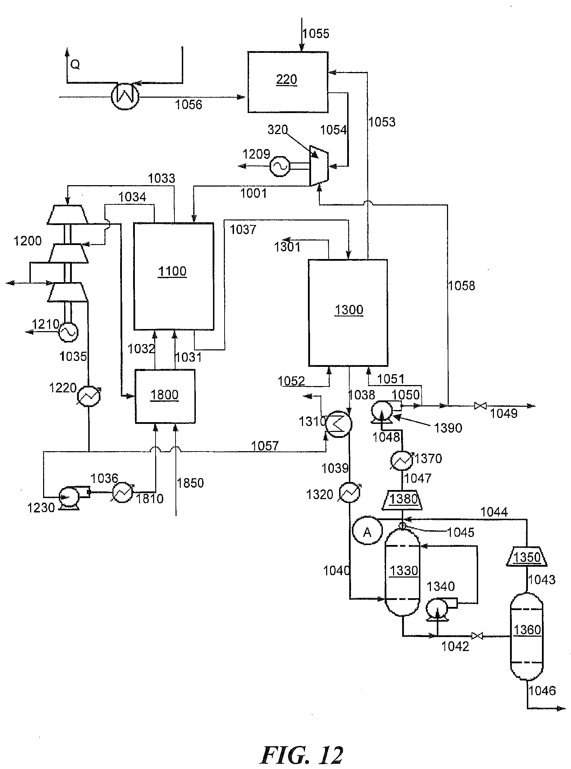

In specific embodiments, a system according to the invention may comprise one or more components as described herein retrofit with an conventional power production system, such as a coal fired power station, a nuclear reactor, or the like. For example, a power system could comprise two heat exchange units (e.g., a primary heat exchange unit and a secondary heat exchange unit). The primary heat exchange unit could be substantially a unit as otherwise described herein, and the secondary heat exchange unit could be a unit useful for transferring heat from the turbine discharge stream to one or more steam streams (e.g., from a boiler associated with the conventional power production system) to superheat the steam streams. Thus, a power generation system according to the invention may comprise a secondary heat exchange unit located between and in fluid communication with the turbine and the primary heat exchange unit. The power generation system likewise can comprise a boiler in fluid communication with the secondary heat exchange unit via at least one steam stream. Still further, the power generation system can comprise at least one further power production turbine having an inlet for receiving the at least one steam stream from the secondary heat exchange unit. Thus, the system may be described as comprising a primary power production turbine and a secondary power production turbine. The primary power production turbine may be the turbine in fluid communication with the inventive combustor. The secondary power production turbine may be the turbine in fluid communication with a steam stream, particularly a superheated steam stream that is superheated with heat from the discharge stream from the primary power production turbine. Such a system retrofit with one or more components from a convention power production system is described herein, particularly in relation to **FIG. 12** and Example 2. The use of the terms primary power production turbine and secondary power production turbine should not be construed as limiting the scope of the invention and are only used to provide clarity of description.

In another aspect of the invention an external stream may be heated in the high temperature end of the heat exchanger by heat transfer from the cooling turbine exhaust stream and, as a result, the high pressure recycle stream will leave the heat exchanger and enter the combustor at a lower temperature. In this case, the amount of fuel burned in the combustor may be increased so that the turbine inlet temperature is maintained. The heating value of the extra fuel burned is equivalent to the extra heat load imposed on the heat exchanger.

In some embodiments, the invention can be characterized as providing a process plant producing shaft power from the circulation of a predominantly CO₂ circulating fluid. In further embodiments, the invention provides processes in which certain conditions may be met. In specific embodiments, the invention further may be characterized by one or more of the following actions or devices useful for carrying out such actions:
compressing the CO₂ circulating fluid to a pressure in excess of the critical pressure of CO₂;
directly combusting a solid, liquid, or gaseous hydro-carbonaceous fuel in substantially pure O₂ with provision for mixing a CO₂ rich supercritical recycle fluid to achieve a required power turbine inlet temperature - e.g., greater than about 500 °C (or other temperature range as described herein);
expanding a supercritical stream formed of combustion products and recycled CO₂ rich fluid in a series of turbines with production of shaft power, particularly expanding to a pressure that is above about 2 MPa and is below the pressure at which a CO₂ liquid phase appears when the fluid is cooled to a temperature consistent with the use of ambient temperature cooling means (e.g., about 7.3 - 7.4 MPa);
introducing a turbine exhaust into a heat exchanger in which the turbine exhaust is cooled, and the heat is transferred to a recycled CO₂ rich supercritical fluid;
cooling a CO₂ containing stream leaving a heat exchanger against an ambient temperature cooling means and separating a water liquid phase that contains at least minor concentrations of CO₂ and a gaseous CO₂ phase that contains at least a minor concentration of water vapor;
carrying out a water separation in a manner that allows a desired residence time (e.g., up to 10 seconds) with intimate contact between gaseous CO₂ and liquid water or a weak acid phase such that reactions involving SO₂, SO₃, H₂O, NO, NO₂, O₂, and/or Hg can take place resulting in the conversion of greater than 98% of sulfur present in a stream to H₂SO₄ and the conversion of greater than 90% of nitrogen oxides present in a stream to HNO₃, and for the conversion of greater than 80% of mercury in a stream to soluble mercury compounds;
separating non condensable components (such as N₂, Ar, and O₂) from a gaseous CO₂ phase by cooling to a temperature close to the CO₂ freezing point with a gas/liquid phase separation leaving the N₂, Ar, and O₂ predominantly in the gas phase;
compressing a purified gaseous CO₂ stream in a gas compressor to a pressure at which cooling by ambient temperature cooling means will yield a high density CO₂ fluid (e.g., with a density of at least about 200 kg/m³, preferably at least about 300 kg/m³, or more preferably at least about 400 kg/m³);
cooling compressed CO₂ with ambient cooling means to form a high density CO₂ supercritical fluid (e.g., with a density of at least about 200 kg/m³, preferably at least about 300 kg/m³, or more preferably at least about 400 kg/m³);
compressing a high density CO₂ fluid in a compressor to a pressure above the critical pressure of CO₂;
separating a high pressure CO₂ stream into two separate streams - one that enters the cold end of a heat exchanger and a second that is heated using an external heating source available at a temperature below about 250 °C;
facilitating efficient heat transfer (including the use of an optional external heat source) such that the difference between the temperature of a turbine discharge stream entering the hot end of a heat exchanger and the temperature of a recycle CO₂ circulating fluid leaving the hot end of the same heat exchanger is less than about 50 °C (or other temperature threshold as described herein);
compressing a CO₂ circulating fluid to a pressure of about 8 MPa to about 50 MPa (or other pressure range as described herein);
mixing of an O₂ stream with at least a portion of a recycled CO₂ circulating fluid stream and a carbon containing fuel stream to form a single fluid stream (or slurry if a powdered, solid fuel is used), which is below the auto-ignition temperature of the fuel, and the proportions of which are adjusted to give an adiabatic flame temperature of about 1,200 °C to 3,500 °C (or other temperature range as described herein);
mixing at least a portion of a recycled CO₂ circulating fluid with combustion products to form a mixed fluid stream at a temperature in the range of about 500 °C to 1,600 °C (or other temperature range as described herein);
producing a turbine discharge stream having a pressure of about 2 MPa to about 7.3 MPa (or other pressure range as described herein);
externally heating a portion of a high pressure CO₂ circulating fluid stream using heat of compression derived from the operation of one or more air compressors of a cryogenic O₂ plant (particularly in the adiabatic mode) and/or a CO₂ compressor (particularly in the adiabatic mode), the heat being transferred by circulation of a suitable heat transfer fluid (including the CO₂ fluid itself);
heating one or more external fluid streams in a heat exchanger with equivalent extra fuel being burned in a burner, wherein one or more of the external fluid streams may comprise steam, which can be super heated in the heat exchanger;
using heat supplied by condensing steam provided from an external source to externally heat a portion of a recycled CO₂ circulating fluid stream;
cooling in a heat exchanger a CO₂ containing stream (which leaves the cold end of the heat exchanger) to provide heat for heating an externally provided fluid stream;
providing an O₂ feed stream wherein the molar concentration of the O₂ is at least about 85% (or other concentration range as described herein);
operating a combustor such that the concentration of O₂ in a total gas stream leaving the combustor (i.e., a combustion product stream) and entering a turbine is greater than about 0.1% molar;
carrying out a power production process such that only one combustor is used to substantially completely combust the carbon containing fuel input into the combustor;
operating a combustor such that the quantity of O₂ in the O₂ stream entering the combustor is below the quantity required for stoichiometric combustion of the fuel stream entering the combustor and thus causing production of one or both of H₂ and carbon monoxide (CO) in the combustion product stream; and
carrying out a process using two or more turbines each having a defined exit pressure wherein one or both of H₂ and CO are present in the discharge stream leaving the first turbine (and subsequent turbines, if applicable, with the exception of the final turbine in the turbine series) and part or all of the H₂ and CO is combusted by the addition of a stream of O₂ before the inlet of the second and subsequent turbines to raise the operating temperature of each of the second or more turbines to a higher value resulting in an excess O₂ in the exit stream from the last turbine, such excess being greater than about 0.1% molar.

In further embodiments, the present invention may provide one or more of the following:
heating a CO₂ circulating fluid in a heat exchange system against the cooling turbine exhaust stream such that the turbine exhaust stream is cooled to a temperature below its water dew point;
cooling the turbine exhaust stream against an ambient temperature cooling medium and condensing water together with fuel and combustion derived impurities comprising H₂SO₄, HNO₃, HCl, and other impurities such as Hg and other metals in the form of ionic compounds in solution;
compressing the purified CO₂ circulating fluid to a pressure above its critical pressure but below 10MPa in a first compressor;
cooling the circulating fluid to a point where its density is greater than 600kg/m3;
compressing the high density CO₂ circulating fluid in a compressor to the pressure required to overcome pressure drop in the system and feed the circulating CO₂ fluid into the combustion chamber;
removing a product CO₂ product stream containing substantially all of the CO₂ formed by combustion of carbon in the fuel stream, the CO₂ stream being taken from either the discharge flow of the first compressor or the second compressor;
supplying an additional quantity of heat to the CO₂ circulating fluid at a temperature level which is above the water dew-point of the cooling turbine exhaust stream either directly to the heat exchanger or by heating a side-stream comprising part of the CO₂ circulating fluid so that the temperature difference between the circulating CO₂ fluid and the turbine exhaust at the hot end of the heat exchanger is less that 50 °C;
using a fuel comprising a carbon containing fuel having an incombustible residue which is partially oxidized with O₂ in a transpiration cooled combustor to produce a stream comprising H₂, CO, CH₄, H₂S, NH₃ and incombustible residue, the combustor being fed with part of the circulating CO₂ fluid to cool the partially oxidized combustion products to a temperature of 500 °C to 900 °C where the ash is present as solid particulate which can be completely removed from the outlet fluid stream by a filtration system;
providing for a temperature difference between the cooling turbine exhaust stream and the heating circulating CO₂ fluid stream at the point at which the side-stream flow remixes with the separately heated circulating CO₂ fluid flow that is between 10 °C and 50 °C;
providing for a pressure of the turbine exhaust stream leaving the cold end of the heat exchanger such that no liquid CO₂ is formed when this stream is cooled prior to water and impurity separation;
using least part of the turbine exhaust stream to superheat multiple steam streams derived from steam power systems associated with conventional boiler systems and nuclear reactors;
providing additional low level heat to the circulating CO₂ stream as steam at one or more pressure levels taken from an external steam source such as a power station;
using the expander exhaust stream leaving the cold end of the heat exchanger system to provide heating for at least part of the condensate leaving the steam condenser of the steam power generation system;
providing additional low level heat for the circulating CO₂ stream from the hot exhaust of an open cycle gas turbine;
passing a partially oxidized coal derived gas plus CO₂ as fuel to a second combustor for complete combustion;
operating a single combustor with an O₂ to fuel ratio such that part of the fuel is oxidized to oxidation products comprising CO₂, H₂O, and SO₂ and the rest of the fuel is oxidized to components comprising H₂, CO, and H₂S;
operating two turbines which over the total required pressure ratio with O₂ injected into the discharge flow of the first turbine to combust the reduced components to reheat the intermediate pressure flow to a higher temperature before it is expanded through the second turbine.

Further to the above embodiments, the present invention is particularly useful in that the elements and steps of the inventive systems and methods described herein can be utilized in a variety of combinations that can provide surprising increases in efficiency (e.g., measured on a lower heating value (LHV) basis) and that can beneficially reduce the capital costs associated with known systems and methods for energy production, including previous systems and methods using a CO₂ working fluid, as well as provide power production at a significantly reduced cost per unit of power produced. Certain, non-limiting examples of systems and methods according to the present invention that can provide such advantages include the following.

A plurality of turbines particularly are used. In a specific example thereof, two turbines can be used, and the system can be adapted for oxy-fuel combustion of a hydrocarbon or carbonaceous fuel between the two turbines. Such multi-turbine embodiments can be useful to increase the inlet temperature of the turbine downstream from the interposed combustor. In multi-turbine embodiments comprising three or more turbines, two or more interposing combustors may be included. Moreover, in certain embodiments, the number of turbines and combustors in a multi-turbine system can be equal such that combustion is carried out prior to each turbine expansion (e.g., two combustion steps that are each followed by turbine expansion). In the following, further advantages of multi turbine embodiments are discussed in relation to a two turbine exemplary embodiment, and it is understood that such discussion can be extended to multi-turbine embodiments comprising three, four, or even more turbines that can run in series or in parallel and that encompass only interposed combustion as well as combustion prior to each turbine expansion. In further embodiments, an array of radial turbines may be used.

In some embodiments, the second turbine in a two stage turbine system can have a discharge pressure at near atmospheric pressure. Such discharge pressure can provide a net CO₂ product that is likewise near atmospheric pressure. Such discharge pressure thus can be beneficial to maximize power output for a fixed flow of recycle CO₂ in the system. In particular, this can maximize the pressure ratio of the total turbine system.

In some embodiments, the second turbine inlet can be defined by the total flow leaving the first turbine. In other embodiments, the second turbine inlet can be defined at least in part by a portion of the first turbine discharge flow. As an exemplary embodiment, a flow in the second turbine can contains the net CO₂ product derived from combustion of the total fuel used in one or more combustors.

In some embodiments, the first turbine can be a high pressure turbine. As such, it can be useful to allow the high pressure turbine inlet temperature to be fixed at the highest value possible so as to maximize the power output of the high pressure turbine while keeping the outlet temperature of the second turbine at a constant temperature. For example, the constant temperature can be fixed by the maximum operating temperature of a recuperative heat exchanger at its design pressure, and this pressure can be fixed by one or both of the pressure of the recycle CO₂ combustor and the inlet pressure of the first turbine.

In some embodiments, a recycle CO₂ stream may be heated to a high temperature and passed through the first turbine without first passing through a combustor. The exhaust from the first turbine then can be the inlet for the combustor that forms an exhaust to be the inlet for the second combustor. In particular, the inlet temperature for the first turbine may have a lower limit that is equal to the exit temperature of the recycle CO₂ stream from the first turbine.

In some embodiments, excess heat in the second turbine discharge flow above that required to heat the high pressure recycle CO₂ stream can be utilized to preheat the oxygen and fuel gas streams entering the first and second stage combustors (or entering a sole combustor in embodiments wherein on a single combustor is interposed in a two stage turbine.

In some embodiments, an oxygen stream from the oxygen production plant at a pressure of 1 bar (0.1 MPa) or higher can be mixed with CO₂ to form a diluted oxidant for fuel combustion. In particular, this oxidant stream can be compressed and preheated against all or part of exhaust from one or both of the first and second turbines and delivered to form at least part of the oxidant required in the first or second stage combustor.

In some embodiments, recycle CO₂ at near atmospheric pressure following liquid water separation can be compressed to a pressure above the solidification pressure of CO₂ in the range of about 6 bar (0.6 MPa) to about 10 bar (1 MPa) and liquefy the CO₂ which can then be pumped to the high pressure of the recycle CO₂ system, thus reducing the recycle compressor pump power requirement. The agent for providing the refrigeration for liquefaction of the CO₂ can be, for example, liquefied natural gas (LNG). In particular, LNG that has been pumped to a high pressure for delivery into a pipeline system and can be heated from a low temperature to a temperature near ambient simultaneously with refrigeration of the CO₂. Optionally the second turbine can discharge at a pressure of about 6 bar (0.6 MPa) to about and 8 bar (0.8 MPa) and thus avoid the need for a CO₂ recycle compressor.

Further embodiments are encompassed by the present invention as described in relation to the various figures and/or as disclosed in the further description of the invention provided herein.

### BRIEF DESCRIPTION OF THE DRAWINGS

Having thus described the invention in general terms, reference will now be made to the accompanying drawings, which is not necessarily drawn to scale, and wherein:
FIG. 1 is a schematic illustration of a transpiration-cooled combustor apparatus;
FIG. 2 is a schematic illustration of an exemplary cross-section of a wall of a transpiration member in a combustor apparatus;
FIG. 3A and FIG. 3B schematically illustrate a hot fit process for a transpiration member assembly of a combustor apparatus;
FIG. 4 schematically illustrates a combustion product contaminant removal apparatus;
FIG. 5 is a flow diagram illustrating a power cycle;
FIG. 6 is a flow diagram illustrating the flow of a CO₂ circulating fluid through a separation unit;
FIG. 7 is a flow diagram illustrating pressurization using a series of two or more compressors or pumps in a pressurization unit;
FIG. 8 is a flow diagram illustrating a heat exchanger unit wherein three individual heat exchangers are used in series;
FIG. 9 is a flow diagram illustrating a turbine unit utilizing two turbines operated in series in the reducing mode;
FIG. 10 is a flow diagram illustrating a system and method for power production using two combustors;
FIG. 11 is a flow diagram illustrating a system and method for power production;
FIG. 12 is a flow diagram illustrating a system and method for power production incorporating a conventional coal fired boiler; and
FIG 13 is a flow diagram illustrating a system and method for power production including two turbines operating in series with two combustors.

### DETAILED DESCRIPTION OF THE INVENTION

The present disclosure relates to methods of power generation. Such methods can comprise: expanding a compressed recycle CO₂ stream at a pressure of at least about 12 MPa across a series of a first turbine and a last turbine over a pressure ratio of at least about 20 so as to output from the last turbine a last turbine discharge stream that optionally is at a pressure of less than about 0.15 MPa; heating a discharge stream from the first turbine prior to passage into the last turbine in a combustor by combusting a hydrocarbon or carbonaceous fuel in the presence of an oxidant and the first turbine discharge stream so as to form a combustor exhaust stream at a temperature of at least about 800 °C; cooling the last turbine discharge stream in a recuperator heat exchanger; isolating at least a portion of the CO₂ from the cooled turbine discharge stream to form the recycle CO₂ stream; compressing the recycle CO₂ stream; and passing the recycle CO₂ stream to the series of turbines. The present disclosure also relates to power generation systems. Such systems can comprise: a first turbine and a second turbine in series that are adapted to expand a high pressure recycle CO₂ stream between a high pressure of about 10 MPa to about 60 MPa over a pressure ratio that is greater than 20; a combustor in a working arrangement with an outlet of the first turbine and an inlet of the second turbine and adapted to heat the high pressure recycle CO₂ stream; a recuperator heat exchanger in a working arrangement with an outlet of the second turbine and adapted to transfer heat between a discharge stream from the outlet of the second turbine and the high pressure recycle CO₂ stream; and at least one compressor in a working arrangement with the recuperator heat exchanger and adapted to pressurizing the recycle CO₂ stream to a pressure of at least about 10 MPa; wherein the recuperator heat exchanger is in a working arrangement with the first turbine such that the heated, compressed recycle CO₂ stream passes to the first turbine.

The invention is described more fully hereinafter referencing various embodiments. These embodiments are provided so that this disclosure will be thorough and complete, and will fully convey the scope of the invention to those skilled in the art; however, it is understood that embodiments that do not include a plurality of turbines and/or do not expand a stream comprising recycled CO₂ across a pressure ratio of at least about 20 do not form part of the present invention but represent background art that is useful for understanding the invention. As used in the specification, and in the appended claims, the singular forms "a", "an", "the", include plural referents unless the context clearly dictates otherwise.

The present invention provides systems and methods for producing power through use of a high efficiency fuel combustor (such as a transpiration cooled combustor) and an associated circulating fluid (such as a CO₂ circulating fluid). The circulating fluid is provided in the combustor along with an appropriate fuel, any necessary oxidant, and any associated materials that may be useful for efficient combustion. In specific embodiments, the methods can be carried out using a combustor that operates at very high temperatures (e.g., in the range of about 1,600 °C to about 3,300 °C, or other temperature ranges as disclosed herein), and the presence of the circulating fluid can function to moderate the temperature of a fluid stream exiting the combustor so that the fluid stream can be utilized in energy transfer for power production. Specifically, a combustion product stream can be expanded across a series of turbines to generate power. The expanded gas stream can be cooled to remove various components from the stream, such as water, and heat withdrawn from the expanded gas stream can be used to heat the CO2 circulating fluid. The purified circulating fluid stream can then be pressurized and heated for recycle through the combustor. If desired, part of the CO2 from the combustion product stream (i.e., arising from CO2 formed by combustion of the carbon containing fuel in the presence of oxygen) can be drawn off for sequestration or other disposal, such as transfer to a CO2 pipeline. The system and methods can make use of specific process parameters and components to maximize efficiency of the system and method, particularly while avoiding releasing CO2 to the atmosphere. As particularly described herein, the circulating fluid is exemplified by the use of CO2 as the circulating fluid. While use of a CO2 circulating fluid is an advantageous embodiment according to the invention, such disclosure should not be construed as necessarily limiting the scope of the circulating fluid that may be used in the invention unless otherwise stated.

In certain embodiments, a power generation system according to the invention can uses a circulating fluid comprising predominantly CO₂. In other words, the chemical nature of the circulating fluid immediately prior to input into the combustor is such that the circulating fluid comprises predominately CO₂. In this sense, the word "predominately" can mean the fluid comprises at least about 90% by molar concentration, at least about 91% by molar concentration, at least about 92% by molar concentration, at least about 93% by molar concentration, at least about 94% by molar concentration, at least about 95% by molar concentration, at least about 96% by molar concentration, at least about 97% by molar concentration, at least about 98% by molar concentration, or at least about 99% by molar concentration CO₂. The circulating fluid immediately prior to entering the combustor preferably comprises substantially only CO₂. In this sense, the phrase "substantially only" can mean at least about 99.1% by molar concentration, at least about 99.25% by molar concentration, at least about 99.5% by molar concentration, at least about 99.75% by molar concentration, at least about 99.8% by molar concentration, or at least about 99.9% by molar concentration CO₂. In the combustor, the CO₂ can comingle with one or more further components that can be derived from the fuel, any oxidant, and any derivatives from the fuel combustion. Thus, the circulating fluid exiting the combustor, which can be described herein as a combustion product stream, may comprise CO₂ along with lesser amounts of other materials, such as H₂O, O₂, N₂, Ar, SO₂, SO₃, NO, NO₂, HCl, Hg, and traces of other components that can be derived from the combustion process (e.g., particulates, such as ash or liquefied ash), including further combustibles. As described in greater detail below, the combustion process can be controlled such that the nature of the fluid stream can be either reducing or oxidizing, which can provide particularly described benefits.

The systems and methods of the invention can incorporate one or more combustors useful for combustion of a suitable fuel, as described herein. Preferably, at least one combustor used according to the present invention is a high efficiency combustor capable of providing substantially complete combustion of a fuel at a relatively high combustion temperature. High temperature combustion can be particularly useful to provide for substantially complete combustion of the fuel and thus maximize efficiency. In various embodiments, high temperature combustion can mean combustion at a temperature of at least about 1,200 °C, at least about 1,300 °C, at least about 1,400 °C, at least about 1,500 °C, at least about 1,600 °C, at least about 1,750 °C, at least about 2,000 °C, at least about 2,500 °C, or at least about 3,000 °C. In further embodiments, high temperature combustion can mean combustion at a temperature of about 1,200 °C to about 5,000 °C, about 1,500 °C to about 4,000 °C, about 1,600 °C to about 3,500 °C, about 1,700 °C to about 3,200 °C, about 1,800 °C to about 3,100 °C, about 1,900 °C to about 3,000 °C, or about 2,000 °C to about 3,000 °C.

Various combustors may be used according to the present invention. In some embodiments, only a single combustor may be used in the present systems and methods. In some embodiments, a plurality of combustors may be used and may be run in series or in parallel in combination with a plurality of expansion turbines. The advantages of multi- turbine embodiments utilizing one combustor or a plurality of combustors are further discussed herein in relation to exemplary embodiments of such systems and methods. Because of the flexibility, the combustors that may be used according to the present disclosure include any combustors adapted to function under the varying conditions of temperature and pressure according to the several embodiments encompassed by the present invention. Combustors useful according to the present disclosure can include any combustor adapted for combustion at the temperatures and pressures described herein, including high temperature combustion. As a non-limiting example, a useful combustor may be any combustor comprising a liner that is adapted for cooling with a cooling medium (e.g., a recycle CO₂ stream in some embodiments of the present disclosure). Exemplary cooling means may include passage of a cooling medium through one or more of slots, holes, back side cooling, and trip strips.

In certain embodiments, transpiration cooled combustors may be used. One example of a transpiration cooled combustor that may be used in the invention is described in U.S. Patent Application No. 12/714,074, filed February 26, 2010. In some embodiments, a transpiration cooled combustor useful according to the invention may include one or more heat exchange zones, one or more cooling fluids, and one or more transpiration fluids. Transpiration cooling can be useful to prevent corrosion, fouling, and erosion in the combustor and may be particularly desirable when such combustion conditions exist.

In one particular aspect, a transpiration cooled combustor useful according to the invention can include a combustion chamber at least partially defined by a transpiration member, wherein the transpiration member is at least partially surrounded by a pressure containment member. The combustion chamber can have an inlet portion and an opposing outlet portion. The inlet portion of the combustion chamber can be configured to receive the carbon containing fuel to be combusted within the combustion chamber at a combustion temperature to form a combustion product. The combustion chamber can be further configured to direct the combustion product toward the outlet portion. The transpiration member can be configured to direct a transpiration substance therethrough toward the combustion chamber for buffering interaction between the combustion product and the transpiration member. In addition, the transpiration substance may be introduced into the combustion chamber to achieve a desired outlet temperature of the combustion product. In particular embodiments, the transpiration substance can at least partially comprise the circulating fluid. The walls of the combustion chamber may be lined with a layer of porous material through which is directed and flows the transpiration substance, such as CO₂ and/or H₂O.

In still further aspects, the inner transpiration member **2332** may extend from the inlet portion **222A** to the outlet portion **222B** of the transpiration member **230.** In some instances, the perforated/porous structure of the inner transpiration member **2332** may extend substantially completely (axially) from the inlet portion **222A** to the outlet portion **222B** such that the transpiration fluid **210** is directed into substantially the entire length of the combustion chamber **222.** That is, substantially the entirety of the inner transpiration member **2332** may be configured with a perforated/porous structure such that substantially the entire length of the combustion chamber **222** is transpiration-cooled. More particularly, in some aspects, the cumulative perforation/pore area may be substantially equal to the surface area of the inner transpiration member **2332.** In still other aspects, the perforations/pores may be spaced apart at an appropriate density such that substantially uniform distribution of the transpiration substance from the inner transpiration member **2332** into the combustion chamber **222** is achieved (i.e., no "dead spots" where the flow or presence of the transpiration substance **210** is lacking). In one example, a square inch of the inner transpiration member **2332** may include an array of perforations/pores on the order of 250 × 250 per square inch, so as to provide about 62,500 pores / in², with such perforations/pores being spaced about 0.004 inches (about 0.1 mm) apart. The ratio of pore area to total wall area (% porosity) may be for example about 50%. The pore array may be varied over a wide range to adapt to other system design parameters, such as the desired pressure drop versus flow rate across the transpiration member. Array sizes of about 10 x 10 to about 10,000 x 10,000 per inch with porosity percentages of about 10% to about 80% can utilized in some examples.

The flow of the transpiration substance through this porous transpiration layer, and optionally through additional provisions, can be configured to achieve a desired total exit fluid stream outlet temperature from the combustor. In some embodiments, as further described herein, such temperature can be in the range of about 500 °C to about 2,000 °C. This flow may also serve to cool the transpiration member to a temperature below the maximum allowable operational temperature of the material forming the transpiration member. The transpiration substance may also serve to prevent impingement of any liquid or solid ash materials or other contaminants in the fuel which might corrode, foul, or otherwise damage the walls. In such instances, it may be desirable to use a material for the transpiration member with a reasonable thermal conductivity so that incident radiant heat can be conducted radially outwards through the porous transpiration member and then be intercepted by convective heat transfer from the surfaces of the porous layer structure to the fluid passing radially inwards through the transpiration layer. Such a configuration may allow the subsequent part of the stream directed through the transpiration member to be heated to a temperature in a desirable range, such as about 500 °C to about 1,000 °C, while simultaneously maintaining the temperature of the porous transpiration member within the design range of the material used therefor. Materials for the porous transpiration member may include, for example, porous ceramics, refractory metal fiber mats, hole-drilled cylindrical sections, and/or sintered metal layers or sintered metal powders. A second function of the transpiration member may be to ensure a substantially even radially inward flow of transpiration fluid, as well as longitudinally along the combustor, to achieve good mixing between the transpiration fluid stream and the combustion product while promoting an even axial flow of along the length of the combustion chamber. A third function of the transpiration member can be to achieve a velocity of diluent fluid radially inward so as to provide a buffer for or otherwise intercept solid and/or liquid particles of ash or other contaminants within the combustion products from impacting the surface of the transpiration layer and causing blockage or other damage. Such a factor may only be of importance, for example, when combusting a fuel, such as coal, having a residual inert non-combustible residue. The inner wall of the combustor pressure vessel surrounding the transpiration member may also be insulated to isolate the high temperature transpiration fluid stream within the combustor.

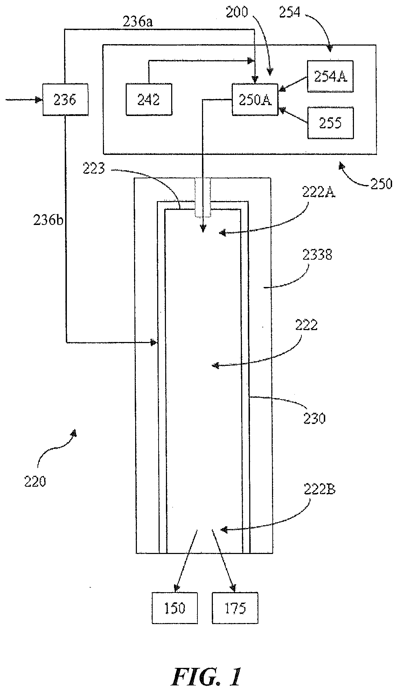

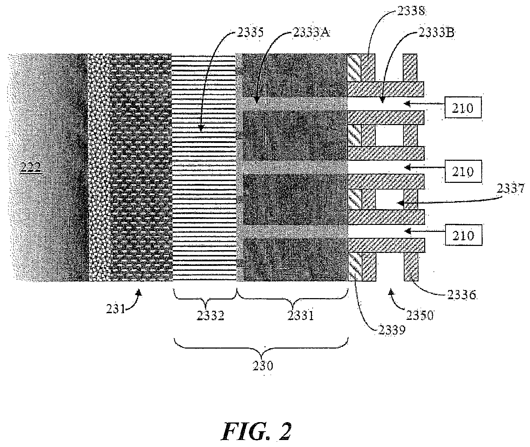

One embodiment of a combustor apparatus capable of use according to the present invention is schematically illustrated in **FIG. 1****,** the combustor apparatus being generally indicated by the numeral **220.** In this example, the combustor apparatus **220** may be configured to combust a particulate solid such as coal to form a combustion product, though any other suitable combustible carbon containing material, as disclosed herein, may also be used as a fuel. The combustion chamber **222** may be defined by a transpiration member **230,** which is configured to direct a transpiration fluid therethrough into the combustion chamber **222** (i.e., to facilitate transpiration cooling and/or to buffer interaction between the combustion product and the transpiration member **230**). One skilled in the art will appreciate that the transpiration member **230** may be substantially cylindrical, so as to define a substantially cylindrical combustion chamber **222** having an inlet portion **222A** and an opposing outlet portion **222B.** The transpiration member **230** may be at least partially surrounded by a pressure containment member **2338.** The inlet portion **222A** of the combustion chamber **222** may be configured to receive a fuel mixture from a mixing arrangement, generally indicated by the numeral **250.** In other embodiments, such mixing arrangement may be absent, and one or more of the materials input into the combustor may be separately added via independent inlets. According to particular embodiments, the fuel mixture can be combusted within the combustion chamber **222** at a particular combustion temperature to form a combustion product, wherein the combustion chamber **222** is further configured to direct the combustion product toward the outlet portion **222B.** A heat removal device **2350** (see, e.g., **FIG. 2**) may be associated with the pressure containment member **2338** and configured to control a temperature thereof. In particular instances, the heat removal device **2350** may comprise a heat transfer jacket at least partially defined by a wall **2336** opposing the pressure containment member **2338,** wherein a liquid may be circulated in water-circulating jackets **2337** defined therebetween. In one embodiment, the circulated liquid may be water.

In one particular aspect, the porous inner transpiration member **2332** is thus configured to direct the transpiration fluid into the combustion chamber **222,** such that the transpiration substance **210** enters the combustion chamber **222** at a substantially right angle (90°) with respect to the inner surface of the inner transpiration member **2332.** Among other advantages, the introduction of the transpiration substance **210** at the substantially right angle with respect to the inner transpiration member **2332** may facilitate or otherwise enhance the effect of directing slag liquid or solid droplets or other contaminants or hot combustion fluid vortices away from the inner surface of the inner transpiration member **2332.** The lack of contact between the slag liquid or solid droplets may prevent the coalescence of said droplets into large droplets or masses, which is known in the prior art to occur upon contact between droplets or particles and solid walls. The introduction of the transpiration substance **210** at the substantially right angle with respect to the inner transpiration member **2332** may facilitate or otherwise enhance the effect of preventing the formation of combustion fluid vortices with sufficient velocity perpendicular to and in proximity to the inner transpiration member which may impinge on and damage the inner transpiration member. In such instances, the outer transpiration member **2331,** the pressure containment member **2338,** the heat transfer jacket **2336** and/or the insulation layer **2339** may be configured, either individually or in combination, to provide a "manifold" effect (i.e., to provide a substantially uniformly distributed supply) with regard to the delivery of the transpiration substance / fluid **210** to and through the inner transpiration member **2332** and into the combustion chamber **222.** That is, a substantially uniform supply (in terms of flow rate, pressure, or any other suitable and appropriate measure) of the transpiration substance **210** into the combustion chamber **222** may be achieved by configuring the outer transpiration member **2331,** the pressure containment member **2338,** the heat transfer jacket **2336** and/or the insulation layer **2339** to provide a uniform supply of the transpiration substance **210** to the inner transpiration member **2332,** or the supply of the transpiration substance **210** about the outer surface of the inner transpiration member **2332** may be particularly customized and configured such that a substantially uniform distribution of the transpiration substance **210** within the combustion chamber **222** is achieved. Such substantially uniform distribution may prevent the formation of hot combustion fluid vortices which may otherwise form by interaction of non-uniform transpiration flow with the combustion fluid flow and which vertices may impinge on and damage the inner transpiration member.

The mixing arrangement **250** (when present) can be configured to mix a carbonaceous fuel **254** with enriched oxygen **242** and a circulating fluid **236** to form a fuel mixture **200.** The carbonaceous fuel **254** may be provided in the form of a solid carbonaceous fuel, a liquid carbonaceous fuel, and/or a gaseous carbonaceous fuel. The enriched oxygen **242** may be oxygen having a molar purity of greater than about 85%. The enriched oxygen **242** may be supplied, for example, by any air separation system/technique known in the art, such as, for example, a cryogenic air separation process, or a high temperature ion transport membrane oxygen separation process (from air), could be implemented. The circulating fluid **236** may be carbon dioxide, as described herein. In instances where the carbonaceous fuel **254** is a particulate solid, such as powdered coal **254A,** the mixing arrangement **250** may be further configured to mix the particulate solid carbonaceous fuel **254A** with a fluidizing substance **255.** According to one aspect, the particulate solid carbonaceous fuel **254A** may have an average particle size of between about 50 microns and about 200 microns. According to yet another aspect, the fluidizing substance **255** may comprise water and/or liquid CO₂ having a density of between about 450 kg/m³ and about 1100 kg/m³. More particularly, the fluidizing substance **255** may cooperate with the particulate solid carbonaceous fuel **254A** to form a slurry **250A** having, for example, between about 25 weight % and about 55 weight % of the particulate solid carbonaceous fuel **254A.** Though the oxygen **242** is shown in **FIG. 1** as being mixed with the fuel **254** and the circulating fluid **236** prior to introduction to the combustion chamber **222,** in some instances, the oxygen **242** may be separately introduced into the combustion chamber **222,** as necessary or desired.

The mixing arrangement **250,** in some aspects, may comprise, for example, an array of spaced apart injection nozzles (not shown) arranged about an end wall **223** of the transpiration member **230** associated with the inlet portion **222A** of the cylindrical combustion chamber **222.** Injecting the fuel / fuel mixture into the combustion chamber **222** in this manner may provide, for example, a large surface area of the injected fuel mixture inlet stream which may, in turn, facilitate rapid heat transfer to the injected fuel mixture inlet stream by radiation. The temperature of the injected fuel mixture may thus be rapidly increased to the ignition temperature of the fuel and may thus result in a compact combustion. The injection velocity of the fuel mixture may be in the range, for example, of between about 10 m/sec and about 40 m/sec, though these values may depend on many factors, such as the configuration of the particular injection nozzles. Such an injection arrangement may take many different forms. For example, the injection arrangement may comprise an array of holes, for instance, in the range of between about 0.5 mm and about 3 mm diameter, wherein the fuel injected would be injected therethrough at a velocity of between about 10 m/s and about 40 m/s.

As more particularly shown in **FIG. 2****,** the combustion chamber **222** can be defined by the transpiration member **230,** which may be at least partially surrounded by a pressure containment member **2338.** In some instances, the pressure containment member **2338** may further be at least partially surrounded by a heat transfer jacket **2336,** wherein the heat transfer jacket **2336** can cooperate with the pressure containment member **2338** to define one or more channels **2337** therebetween, through which a low pressure water stream may be circulated. Through an evaporation mechanism, the circulated water may thus be used to control and/or maintain a selected temperature of the pressure containment member **2338,** for example, in a range of about 100 °C to about 250 °C. In some aspects, an insulation layer **2339** may be disposed between the transpiration member **230** and the pressure containment member **2338.**

In some instances, the transpiration member **230** may comprise, for example, an outer transpiration member **2331** and an inner transpiration member **2332,** the inner transpiration member **2332** being disposed opposite the outer transpiration member **2331** from the pressure containment member **2338,** and defining the combustion chamber **222.** The outer transpiration member **2331** may be comprised of any suitable high temperature-resistant material such as, for example, steel and steel alloys, including stainless steel and nickel alloys. In some instances, the outer transpiration member **2331** may be configured to define first transpiration fluid supply passages **2333A** extending therethrough from the surface thereof adjacent to the insulation layer **2339** to the surface thereof adjacent to the inner transpiration member **2332.** The first transpiration fluid supply passages **2333A** may, in some instances, correspond to second transpiration fluid supply passages **2333B** defined by the pressure containment member **2338,** the heat transfer jacket **2336** and/or the insulation layer **2339.** The first and second transpiration fluid supply passages **2333A, 2333B** may thus be configured to cooperate to direct a transpiration fluid therethrough to the inner transpiration member **2332.** In some instances, as shown, for example, in **FIG. 1****,** the transpiration fluid **210** may comprise the circulating fluid **236,** and may be obtained from the same source associated therewith. The first and second transpiration fluid supply passages **2333A, 2333B** may be insulated, as necessary, for delivering the transpiration fluid **210** (i.e., CO₂) in sufficient supply and at a sufficient pressure such that the transpiration fluid **210** is directed through the inner transpiration member **2332** and into the combustion chamber **222.** Such measures involving the transpiration member **230** and associated transpiration fluid **210,** as disclosed herein, may allow the combustor apparatus **220** to operate at the relatively high pressures and relatively high temperatures otherwise disclosed herein.

In this regard, the inner transpiration member **2332** may be comprised of, for example, a porous ceramic material, a perforated material, a laminate material, a porous mat comprised of fibers randomly orientated in two dimensions and ordered in the third dimension, or any other suitable material or combinations thereof exhibiting the characteristics required thereof as disclosed herein, namely multiple flow passages or pores or other suitable openings **2335** for receiving and directing the transpiration fluid through the inner transpiration member **2332.** Non-limiting examples of porous ceramic and other materials suitable for such transpiration-cooling systems include aluminum oxide, zirconium oxide, transformation-toughened zirconium, copper, molybdenum, tungsten, copper-infiltrated tungsten, tungsten-coated molybdenum, tungsten-coated copper, various high temperature nickel alloys, and rhenium-sheathed or coated materials. Sources of suitable materials include, for example CoorsTek, Inc., (Golden, CO) (zirconium); UltraMet Advanced Materials Solutions (Pacoima, CA) (refractory metal coatings); Orsam Sylvania (Danvers, MA) (tungsten / copper); and MarkeTech International, Inc. (Port Townsend, WA) (tungsten). Examples of perforated materials suitable for such transpiration-cooling systems include all of the above materials and suppliers (where the perforated end structures may be obtained, for example, by perforating an initially nonporous structure using methods known in the manufacturing art). Examples of suitable laminate materials include all of the above materials and suppliers (where the laminate end structures may be obtained, for example, by laminating nonporous or partially porous structures in such a manner as to achieve the desired end porosity using methods known in the manufacturing art).

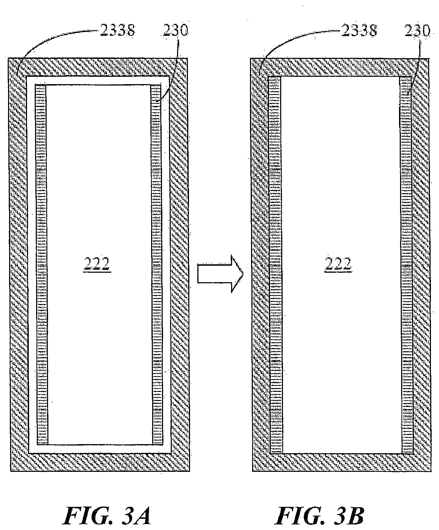

**FIGS. 3A and 3B** illustrate that, in one aspect of a combustor apparatus **220,** the structure defining the combustion chamber **222** may be formed through a "hot" interference fit between the transpiration member **230** and the surrounding structure, such as the pressure containment member **2338** or the insulation layer **2339** disposed between the transpiration member **230** and the pressure containment member **2338.** For example, when relatively "cold," the transpiration member **230** may be dimensioned to be smaller, radially and/or axially, with respect to the surrounding pressure containment member **2338.** As such, when inserted into the pressure containment member **2338,** a radial and/or axial gap may be present therebetween (see, e.g., **FIG. 3A**). Of course, such dimensional differences may facilitate insertion of the transpiration member **230** into the pressure containment member **2338.** However, when heated, for example, toward the operational temperature, the transpiration member **230** may be configured to expand radially and/or axially to reduce or eliminate the noted gaps (see, e.g., **FIG. 3B**). In doing so, an interference axial and/or radial fit may be formed between the transpiration member **230** and the pressure containment member **2338.** In instances involving a transpiration member **230** with an outer transpiration member **2331** and an inner transpiration member **2332,** such an interference fit may place the inner transpiration member **2332** under compression. Suitable high temperature resistant brittle materials, such as a porous ceramic, may be used for the inner transpiration member **2332.**

With the inner transpiration member **2332** thus configured, the transpiration substance **210** may comprise, for example, carbon dioxide (i.e., from the same source as the circulating fluid **236**) directed through the inner transpiration member **2332** such that the transpiration substance **210** forms a buffer layer **231** (i.e., a "vapor wall") immediately adjacent to the inner transpiration member **2332** within the combustion chamber **222,** wherein the buffer layer **231** may be configured to buffer interaction between the inner transpiration member **2332** and the liquefied incombustible elements and heat associated with the combustion product. That is, in some instances, the transpiration fluid **210** can be delivered through the inner transpiration member **2332,** for example, at least at the pressure within the combustion chamber **222,** wherein the flow rate of the transpiration fluid **210** (i.e., CO₂ stream) into the combustion chamber **222** is sufficient for the transpiration fluid **210** to mix with and cool the combustion products to form an exit fluid mixture at a sufficient temperature with respect to the inlet requirement of the subsequent downstream process (i.e., a turbine may require an inlet temperature, for instance, of about 1,225°C), but wherein the exit fluid mixture remains sufficiently high to maintain slag droplets or other contaminants in the fuel in a fluid or liquid state. The liquid state of the incombustible elements of the fuel may facilitate, for example, separation of such contaminants from the combustion product in liquid form, preferably in a free flowing, low viscosity form, which will be less likely to clog or otherwise damage any removal system implemented for such separation. In practice, such requirements may depend on various factors such as the type of solid carbonaceous fuel (i.e., coal) employed and the particular characteristics of the slag formed in the combustion process. That is, the combustion temperature within the combustion chamber **222** can be such that any incombustible elements in the carbonaceous fuel are liquefied within the combustion product.

In particular aspects, the porous inner transpiration member **2332** is thus configured to direct the transpiration fluid and into the combustion chamber **222** in a radially inward manner so as to form a fluid barrier wall or buffer layer **231** about the surface of the inner transpiration member **2332** defining the combustion chamber **222** (see, e.g., **FIG. 2**). The surface of the inner transpiration member **2332** is also heated by combustion product. As such, the porous inner transpiration member **2332** may be configured to have a suitable thermal conductivity such that the transpiration fluid **210** passing through the inner transpiration member **2332** is heated, while the porous inner transpiration member **2332** is simultaneously cooled, resulting in the temperature of the surface of the inner transpiration member **2332** defining the combustion chamber **222** being, for example, about 1,000 °C in the region of the highest combustion temperature. The fluid barrier wall or buffer layer **231** formed by the transpiration fluid **210** in cooperation with the inner transpiration member **2332** thus buffers interaction between the inner transpiration member **2332** and the high temperature combustion products and the slag or other contaminant particles and, as such, buffers the inner transpiration member **2332** from contact, fouling, or other damage. Further, the transpiration fluid **210** may be introduced into the combustion chamber **222** via the inner transpiration member **2332** in such a manner so as to regulate an exit mixture of the transpiration fluid **210** and the combustion product about the outlet portion **222B** of the combustion chamber **222** at a desired temperature (e.g., about 500 °C to about 2,000 °C).

In specific embodiments, the combustor apparatus **220** thus may be configured as a high efficiency, transpiration-cooled combustor apparatus capable of providing relatively complete combustion of a fuel **254** at a relatively high operating temperature as described herein. Such a combustor apparatus **220** may, in some instances, implement one or more cooling fluids, and/or one or more transpiration fluids **210.** In association with the combustor apparatus **220,** additional components may also be implemented. For example, an air separation unit may be provided for separating N₂ and O₂, and a fuel injector device may be provided for receiving O₂ from the air separation unit and combining the O₂ with a CO₂ circulating fluid, and a fuel stream comprising a gas, a liquid, a supercritical fluid, or a solid particulate fuel slurried in a high density CO₂ fluid.

In another aspect, the transpiration-cooled combustor apparatus **220** may include a fuel injector for injecting a pressurized fuel stream into the combustion chamber **222** of the combustor apparatus **220,** wherein the fuel stream may comprise a processed carbonaceous fuel **254,** a fluidizing medium **255** (which may comprise the circulating fluid **236,** as discussed herein), and oxygen **242.** The oxygen (enriched) **242** and the CO₂ circulating fluid **236** can be combined as a homogeneous supercritical mixture. The quantity of oxygen present may be sufficient to combust the fuel and produce combustion products having a desired composition. The combustor apparatus **220** may also include a combustion chamber **222,** configured as a high pressure, high temperature combustion volume, for receiving the fuel stream, as well as a transpiration fluid **210** entering the combustion volume through the walls of a porous transpiration member **230** defining the combustion chamber **222.** The feed rate of the transpiration fluid **210** may be used to control the combustor apparatus outlet portion / turbine inlet portion temperature to a desired value and/or to cool the transpiration member **230** to a temperature compatible with the material forming the transpiration member **230.** The transpiration fluid **210** directed through the transpiration member **230** provides a fluid / buffer layer at the surface of the transpiration member **230** defining the combustion chamber **222,** wherein the fluid / buffer layer may prevent particles of ash or liquid slag resulting from certain fuel combustion from interacting with the exposed walls of the transpiration member **230.**

The combustion chamber **222** may further be configured such that the fuel stream (and the circulating fluid **236**) can be injected or otherwise introduced into the combustion chamber **222** at a pressure greater than the pressure at which combustion occurs. The combustor apparatus **220** may include a pressure containment member **2338** at least partially surrounding the transpiration member **230** defining the combustion chamber **230,** wherein an insulating member **2339** can be disposed between the pressure containment member **2338** and the transpiration member **230.** In some instances, a heat removal device **2350,** such as a jacketed water cooling system defining water-circulating jackets **2337,** may be engaged with the pressure containment member **2338** (i.e., externally to the pressure containment member **2338** forming the "shell" of the combustor apparatus **220**). The transpiration fluid **210** implemented in connection with the transpiration member **230** of the combustor apparatus **220** can be, for example, CO₂ mixed with minor quantities of H₂O and/or an inert gas, such as N₂ or argon. The transpiration member **230** may comprise, for example, a porous metal, a ceramic, a composite matrix, a layered manifold, any other suitable structure, or combinations thereof. In some aspects, the combustion within the combustion chamber **222** can produce a high pressure, high temperature combustion product stream, which may be subsequently directed to a power-producing apparatus, such as a series of turbines, for expansion in relation thereto, as more fully described herein.

The relatively high pressures implemented by embodiments of a combustor apparatus as disclosed herein, may function to concentrate the energy produced thereby to a relatively high intensity in a minimal volume, essentially resulting in a relatively high energy density. The relatively high energy density allows downstream processing of this energy to be performed in a more efficient manner than at lower pressures, and thus provides a viability factor for the technology. Aspects of the present disclosure may thus provide an energy density at orders of magnitude greater than existing power plants (i.e., by 10-100 fold). The higher energy density increases the efficiency of the process, but also reduces the cost of the equipment needed to implement the energy transformation from thermal energy to electricity, by reducing the size and mass of the equipment, thus the cost of the equipment.

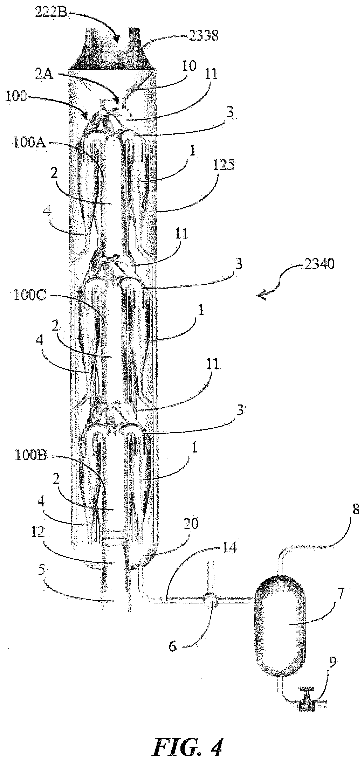

As otherwise discussed herein, the combustor apparatus used in the inventive methods and systems can be useful for combustion of a variety of different carbon containing fuel sources. In specific embodiments, the carbon containing fuel can be substantially completely combusted such that no liquid or solid incombustible materials are included in the combustion product stream. In some embodiments, however, a solid carbon containing fuel (e.g., coal) that may be used in the invention may result in the presence of incombustible materials. In specific embodiments, the combustor apparatus may include the capability of achieving a combustion temperature which causes the incombustible elements in the solid carbon containing fuel to be liquefied during the combustion process. In such instances, provisions for removing the liquefied incombustible elements may be applied. Removal may be accomplished, for example, using cyclone separators, impingement separators, or beds of graded refractory granular filters arranged in an annular configuration, or combinations thereof. In particular embodiments, the droplets may be removed from the high temperature circulating fluid stream by a series of cyclone separators such as, for example, a separator apparatus **2340** as shown in **FIG. 4****.** Generally, aspects of such a cyclonic separator implemented by the present disclosure may comprise a plurality of serially-arranged centrifugal separator devices **100,** including an inlet centrifugal separator device **100A** configured to receive the combustion product / exit fluid stream and the liquefied incombustible elements associated therewith, and an outlet centrifugal separator device **100B** configured to exhaust the combustion product / exit fluid stream having the liquefied incombustible elements substantially removed therefrom. Each centrifugal separator device **100** includes a plurality of centrifugal separator elements or cyclones **1** operably arranged in parallel about a central collector pipe **2,** wherein each centrifugal separation element, or cyclone **1,** is configured to remove at least a portion of the liquefied incombustible elements from the combustion product / exit fluid stream, and to direct the removed portion of the liquefied incombustible elements to a sump **20.** Such a separator apparatus **2340** may be configured to operate at an elevated pressure and, as such, may further comprise a pressure-containing housing **125** configured to house the centrifugal separator devices and the sump. According to such aspects, the pressure-containing housing **125** may be an extension of the pressure containment member **2338** also surrounding the combustor apparatus **220,** or the pressure-containing housing **125** may be a separate member capable of engaging the pressure containment member **2338** associated with the combustor apparatus **220.** In either instance, due to the elevated temperature experienced by the separator apparatus **2340** via the exit fluid stream, the pressure-containing housing **125** may also include a heat-dispersion system, such as a heat transfer jacket having a liquid circulated therein (not shown), operably engaged therewith for removing heat therefrom. In some aspects, a heat recovery device (not shown) may be operably engaged with the heat transfer jacket, wherein the heat recovery device may be configured to receive the liquid circulated in the heat transfer jacket and to recover thermal energy from that liquid.

In particular embodiments, the (slag removal) separator apparatus **2340,** shown in **FIG. 4****,** can be configured to be serially disposed with the combustor apparatus **220** about the outlet portion **222B** thereof for receiving the exit fluid stream / combustion products therefrom. The transpiration-cooled exit fluid stream from the combustor apparatus **220,** with the liquid slag (incombustible elements) droplets therein, can be directed to enter a central collector provision **2A** of the inlet centrifugal separator device **100A** via a conical reducer **10.** In one aspect, the separator apparatus **2340** may include three centrifugal separator devices **100A, 100B, 100C** (though one skilled in the art will appreciate that such a separator apparatus may include one, two, three, or more centrifugal separator devices, as necessary or desired). In this instance, the three centrifugal separator devices **100A, 100B, 100C** operably arranged in series provides a 3 stage cyclonic separation unit. Each centrifugal separator device includes, for example, a plurality of centrifugal separator elements (cyclones **1**) arranged about the circumference of the corresponding central collector pipe **2.** The central collector provisions **2A** and the central collector pipes **2** of the inlet centrifugal separator device **100A,** and the medial centrifugal separator device **100C** are each sealed at the outlet end thereof. In those instances, the exit fluid stream is directed into branch channels **11** corresponding to each of the centrifugal separator elements (cyclones **1**) of the respective centrifugal separator device **100.** The branch channels **11** are configured to engage the inlet end of the respective cyclone **1** to form a tangential inlet therefor (which causes, for instance, the exit fluid stream entering the cyclone **1** to interact with the wall of the cyclone **1** in a spiral flow). The outlet channel **3** from each cyclone **1** is then routed into the inlet portion of the central collector pipe **2** of the respective centrifugal separator device **100.** At the outlet centrifugal separator device **100B,** the exit fluid stream (having the incombustible elements substantially separated therefrom) is directed from the central collector pipe of the outlet centrifugal separator device **100B** and via a collector pipe **12** and an outlet nozzle **5,** such that the "clean" exit fluid stream can then be directed to a subsequent process, such as that associated with the transformation apparatus. The exemplary three stage cyclonic separation arrangement thus allows removal of slag down to, for example, below 5 ppm by mass in the exit fluid stream.

At each stage of the separator apparatus **2340,** the separated liquid slag is directed from each of the cyclones **1** via outlet tubes **4** which extend toward a sump **20.** The separated liquid slag is then directed into an outlet nozzle or pipe **14** extending from the sump **20** and the pressure-containing housing **125** for removal and/or recovery of components therefrom. In accomplishing the removal of the slag, the liquid slag may be directed though a water-cooled section **6** or otherwise through a section having a high pressure, cold water connection, wherein interaction with the water causes the liquid slag to solidify and/or granulate. The mixture of solidified slag and water may then be separated in a vessel (collection provision) **7** into a slag/water fluid mixture which can be removed, particularly following pressure reduction, through a suitable valve **9,** while any residual gas may be removed via a separate line **8.** A pair of vessels with associated systems operating in sequence can allow for continuous operation of the system in some embodiments.

Since the separator apparatus **2340** can be implemented in conjunction with the relatively high temperature combustion product stream (i.e., at a temperature sufficient to maintain the incombustible elements in liquid form with a relatively low viscosity), it may be desirable, in some instances, that surfaces of the separator apparatus **2340** exposed to one of the combustion product / exit fluid stream and the liquefied incombustible elements associated therewith be comprised of a material configured to have at least one of a high temperature resistance, a high corrosion resistance, and a low thermal conductivity. Examples of such materials may include zirconium oxide and aluminum oxide, though such examples are not intended to be limiting in any manner. As such, in certain aspects, the separator apparatus **2340** can be configured to substantially remove the liquefied incombustible elements from the combustion product / exit fluid stream and to maintain the incombustible elements in a low viscosity liquid form at least until removal thereof from the sump **20.** Of course, in embodiments where a non-solid fuel is used and incombustible materials are not included in the combustion product stream, the addition of the slag separator can be unnecessary.

In some embodiments, the separator apparatus **2340** may be used to separate particulate solid ash residue from the combustion of any fuel which produces an incombustible solid residue, such as coal. For example, the coal could be ground to a desired size (e.g., a size such that less than 1% by weight of the particulate or powdered coal comprises particles greater than 100 µm in size) and slurried with liquid CO₂. In specific embodiments, the liquid CO₂ could be at a temperature of about -40 °C to about -18 °C. The slurry may comprise about 40% to about 60% by weight of coal. The slurry then can be pressurized to the required combustion pressure. Referring to **FIG. 1****,** the recycle stream **236** could be split in relation to the mode of entry into the combustor **220.** A first portion (stream **236a**) could be input to the combustor **220** via the mixing arrangement **250,** and a second portion (stream **236b**) could be input to the combustor **220** by being passed through the transpiration cooling layer **230.** As described above it is possible to operate the burner **220** with a ratio of O₂ to fuel which results in the formation of a reducing gas mixture (e.g., comprising H₂, CH₄, CO, H₂S, and/orNH₃). The portion of stream **236** entering the combustor through the transpiration cooling layer **230** can be used to cool the mixture of the combustion gases and the CO₂ circulating fluid to a temperature substantially below the ash solidification temperature (e.g., in the range of about 500 °C to about 900 °C. The total gas stream **5** from the separator apparatus **2340** can be passed through a filtration unit, which reduces the residual solid ash particulate level to a very low value (e.g., below about 2 mg/m³ of gas passing through the filter). This cleaned gas can then be combusted in a second combustor where it can be diluted with a further portion of the recycle fluid stream **236.** In such embodiments, the recycle fluid stream **236** could be apportioned between the two combustors, as necessary.

Any carbon containing material may be used as a fuel according to the present invention. In particular, because of the high pressures and high temperatures maintained by the oxygen-fueled combustor apparatus used in the inventive methods and systems, useful fuels include, but are not limited to, various grades and types of coal, wood, oil, fuel oil, natural gas, coal-based fuel gas, tar from tar sands, bitumen, biomass, algae, graded combustible solid waste refuse, asphalt, used tires, diesel, gasoline, jet fuel (JP-5, JP-4), gases derived from the gasification or pyrolysis of hydro-carbonaceous material, ethanol, solid and liquid biofuels. This may be considered an important departure from prior art systems and methods. For example, known art systems for combustion of solid fuels, such as coal, require considerably different designs than systems for combustion of non-solid fuels, such as natural gas.

The fuels can be suitably processed to allow for injection into the combustion apparatus at sufficient rates and at pressures above the pressure within the combustion chamber. Such fuels may be in liquid, slurry, gel, or paste form with appropriate fluidity and viscosity at ambient temperatures or at elevated temperatures. For example, the fuel may be provided at a temperature of about 30 °C to about 500 °C, about 40 °C to about 450 °C, about 50 °C to about 425°C, or about 75 °C to about 400 °C. Any solid fuel materials may be ground or shredded or otherwise processed to reduce particles sizes, as appropriate. A fluidization or slurrying medium can be added, as necessary, to achieve a suitable form and to meet flow requirements for high pressure pumping. Of course, a fluidization medium may not be needed depending upon the form of the fuel (i.e., liquid or gas). Likewise, the circulated circulating fluid may be used as the fluidization medium, in some embodiments.

Transpiration fluids suitable in a combustor useful according to the invention can include any fluid capable of flowing in sufficient quantity and pressure through the inner liner to form the vapor wall. In the present embodiment, CO₂ can be an ideal transpiration fluid in that the vapor wall formed has good thermal insulating properties as well as visible and UV light absorption properties. CO₂ can be used as a supercritical fluid. Other examples of transpiration fluid include H₂O, cooled combustion product gases recycled from downstream, oxygen, hydrogen, natural gas, methane, and other light hydrocarbons. Fuels may especially be used as transpiration fluids during startup of the combustor to achieve appropriate operating temperatures and pressures in the combustor prior to injection of the main fuel source. Fuels may also be used as transpiration fluids to adjust the operating temperature and pressure of the combustor during switchover between main fuel sources, such as when switching from coal to biomass as the primary fuel. In some embodiments, two or more transpiration fluids can be used. Further, different transpiration fluids can be used in different positions along the combustor. For example, a first transpiration fluid can be used in a high temperature heat exchange zone and a second transpiration fluid can be used in a lower temperature heat exchange zone. The transpiration fluid can be optimized for the temperature and pressure conditions of the combustion chamber where the transpiration fluid forms the vapor wall. In the present example the transpiration fluid is preheated recycle CO₂.

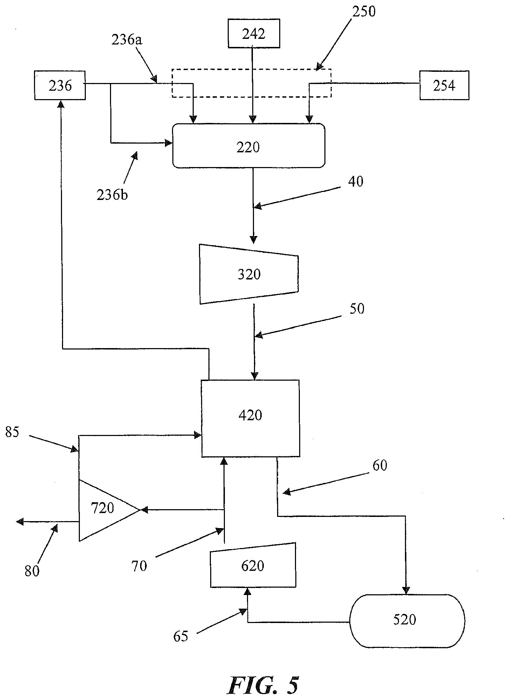

In one aspect, the present invention provides methods of power generation. Specifically, the methods make use of a CO₂ circulating fluid that is preferably recycled through the method, as described herein. The inventive methods also make use of high efficiency combustors including, as a non-limiting example, a transpiration cooled combustor. Further combustors likewise may be used. In particular, the invention is intended to encompass any type of combustor that may be recognized as being useful in light of the present disclosure. In certain embodiments, the methods generally can be described in relation to the flow diagram shown in **FIG. 5****.** As seen therein, a combustor **220** is provided, and various inputs are provided therein. A carbon containing fuel **254** and O₂ **242** (as necessary) can be introduced into the combustor **220** along with a circulating fluid **236** (CO₂ in the present embodiment). A mixing arrangement **250** illustrated by a dashed line indicates that this component is optionally present. Specifically, any combination of two or all three materials (fuel, O₂, and CO₂ circulating fluid) may be combined in the mixing arrangement **250** prior to introduction into the combustor **220.** While a single combustor is illustrated in FIG. 5, it is understood that a plurality of combustors may be utilized in systems and methods according to the present disclosure, as further exemplified herein. Thus, while the following discussion may be made in reference to a single combustor, it is understood that the disclosed working conditions may be applied independently to two or more combustors in the same cycle.

In various embodiments, it can be desirable for the materials entering the combustor to exhibit specific physical characteristics that can facilitate desirable, efficient operation of the power generation method. For example, in certain embodiments, it can be desirable for the CO₂ in the CO₂ circulating fluid to be introduced into the combustor at a defined pressure and/or temperature. Specifically, it can be beneficial for the CO₂ introduced into the combustor to have a pressure of at least about 8 MPa. In further embodiments, the CO₂ introduced into the combustor can be at a pressure of at least about 10 MPa, at least about 12 MPa, at least about 14 MPa, at least about 15 MPa, at least about 16 MPa, at least about 18 MPa, at least about 20 MPa, at least about 22 MPa, at least about 24 MPa, or at least about 25 MPa. In other embodiments, the pressure can be about 8 MPa to about 50 MPa, about 12 MPa to about 50 MPa, about 15 MPa to about 50 MPa, about 20 MPa to about 50 MPa, about 22 MPa to about 50 MPa, about 22 MPa to about 45 MPa, about 22 MPa to about 40 MPa, about 25 MPa to about 40 MPa, or about 25 MPa to about 35 MPa. Further, it can be beneficial for the CO₂ introduced into the combustor to have a temperature of at least about 200 °C. In further embodiments, the CO₂ introduced into the combustor can be at a temperature of at least about 250 °C, at least about 300 °C, at least about 350 °C, at least about 400 °C, at least about 450 °C, at least about 500 °C, at least about 550 °C, at least about 600 °C, at least about 650 °C, at least about 700 °C, at least about 750 °C, at least about 800 °C, at least about 850 °C, or at least about 900 °C.

In some embodiments, it can be desirable for the fuel introduced into the combustor to be provided under specific conditions. For example, in certain embodiments, it can be desirable for the carbon containing fuel to be introduced into the combustor at a defined pressure and/or temperature. In some embodiments, the carbon containing fuel can be introduced into the combustor under conditions that are identical or substantially similar to the conditions of the CO₂ circulating fluid. The phrase "substantially similar conditions" can mean a condition parameter that is within 5%, within 4%, within 3%, within 2%, or within 1% of the referenced condition parameter described herein (e.g., the condition parameter for the CO₂ circulating fluid). In certain embodiments, the carbon containing fuel may be mixed with the CO₂ circulating fluid prior to introduction into the combustor. In such embodiments, it would be expected that the carbon containing fuel and the CO₂ circulating fluid would be under identical or substantially similar conditions (which specifically may encompass the conditions described in relation to the CO₂ circulating fluid). In other embodiments, the carbon containing fuel may be introduced to the combustor separately from the CO₂ circulating fluid. In such cases, the carbon containing fuel still may be introduced at a pressure as described in relation to the CO₂ circulating fluid. In some embodiments, it may be useful to maintain the carbon containing fuel at a temperature that is different than the temperature of the CO₂ circulating fluid prior to introduction to the combustor. For example, the carbon containing fuel can be introduced to the combustor at a temperature of about 30 °C to about 800 °C, about 35 °C to about 700 °C, about 40 °C to about 600 °C, about 45 °C to about 500 °C, about 50 °C to about 400 °C, about 55 °C to about 300 °C, about 60 °C to about 200 °C, about 65 °C to about 175 °C, or about 70 °C to about 150 °C.

In other embodiments, it can be desirable for the O₂ introduced into the combustor to be provided under specific conditions. Such conditions may be incident to the method of providing the O₂. For example, it can be desirable to provide the O₂ at a specific pressure. Specifically, it can be beneficial for the O₂ introduced into the combustor to have a pressure of at least about 8 MPa. In further embodiments, the O₂ introduced into the combustor can be at a pressure of at least about 10 MPa, at least about 12 MPa, at least about 14 MPa, at least about 15 MPa, at least about 16 MPa, at least about 18 MPa, at least about 20 MPa, at least about 22 MPa, at least about 24 MPa, at least about 25 MPa, at least about 30 MPa, at least about 35 MPa, at least about 40 MPa, at least about 45 MPa, or at least about 50 MPa. Provision of the O₂ can encompass the use of an air separator (or oxygen separator), such as a cryogenic O₂ concentrator, an O₂ transport separator, or any similar apparatus such as an O₂ ion transport separator for separating O₂ from ambient air. Separately, or in combination therewith, the provision of the O₂ can include pressurizing the O₂ to achieve the desired pressure, as described above. Such action can cause heating of the O₂. In some embodiments, it may be desirable for the O₂ to be at a desired temperature that is different from the temperature achieved inherently by pressurizing the gas. For example, it may be desirable for the O₂ to be provided to the combustor at a temperature of 30 °C to about 900 °C, about 35 °C to about 800 °C, about 40 °C to about 700 °C, about 45 °C to about 600 °C, about 50 °C to about 500 °C, about 55 °C to about 400 °C, about 60 °C to about 300 °C, about 65 °C to about 250 °C, or about 70 °C to about 200 °C. In some embodiments, the O₂ can be introduced into the combustor under conditions identical or substantially similar to the conditions of the CO₂ circulating fluid and/or the carbon containing fuel. This may arise from mixing of components prior to introduction into the combustor or may arise from specific methods of preparing the O₂ for introduction into the combustor. In particular embodiments, the O₂ may be combined with an amount of CO₂ in a defined molar proportion so that the O₂ may be provided at the same temperature as the CO₂ circulating fluid stream. For example, the combination could be carried out at a temperature below 100 °C while the CO₂ is at a supercritical pressure. This eliminates danger of combustion associated with heating pure O₂ alone due to the diluting effect of the CO₂. Such mixture could be at a CO₂/O₂ ratio of about 1:2 to about 5:1, about 1:1 to about 4:1, or about 1:1 to about 3:1.

In some embodiments, it can be useful for the O₂ supplied to the combustor to be substantially purified (i.e., upgraded in terms of the molar content of O₂ in relation to other components naturally present in air). In certain embodiments, the O₂ can have a purity of greater than about 50% molar, greater than about 60% molar, greater than about 70% molar, greater than about 80% molar, greater than about 85% molar, greater than about 90% molar, greater than about 95% molar, greater than about 96% molar, greater than about 97% molar, greater than about 98% molar, greater than about 99% molar, or greater than about 99.5% molar. In other embodiments, the O₂ can have a molar purity of about 85% to about 99.6% molar, about 85% to about 99% molar, about 90% to about 99% molar, about 90% to about 98% molar, or about 90% to about 97% molar. Overall CO₂ recovery from the carbon in the fuel favors the use of higher purities in the range of at least about 99.5% molar.

The CO₂ circulating fluid can be introduced to the combustor at the inlet of the combustor along with the O₂ and the carbon containing fuel. As described above in relation to a transpiration cooled combustor, however, the CO₂ circulating fluid also can be introduced to the transpiration cooled combustor as all or part of the transpiration cooling fluid directed into the transpiration member through one or more transpiration fluid supply passages formed in the transpiration cooled combustor. In some embodiments, the CO₂ circulating fluid can be introduced into the combustor at the inlet of the combustor (i.e., along with the O₂ and the fuel), and the CO₂ circulating fluid also can be introduced into the combustor through the transpiration member as all or part of the transpiration cooling fluid. In other embodiments, the CO₂ circulating fluid can be introduced into the combustor only through the transpiration member as all or part of the transpiration cooling fluid (i.e., no CO₂ being introduced into the combustor inlet with the O₂ and the fuel).

In some embodiments, the invention may be characterized in relation to the ratio of the various components introduced into the combustion chamber. In order to achieve maximum efficiency of combustion it can be useful to combust the carbon containing fuel at a high temperature. The temperature of combustion and the temperature of the combustion product stream leaving the combustor, however, may need to be controlled within defined parameters. To this end, it can be useful to provide the CO₂ circulating fluid at a specific ratio to the fuel so that combustion temperature and/or the turbine inlet temperature can be controlled within the desired range while also maximizing the amount of energy that can be converted to power. In specific embodiments, this can be achieved by adjusting the ratio of the CO₂ circulating fluid stream to the carbon in the fuel. The desired ratio can be influenced by the desired turbine inlet temperature as well as the temperature difference between the inlet and outlet streams at the hot end of the heat exchanger, as is more fully described herein. The ratio specifically can be described as the molar ratio of the CO₂ in the CO₂ circulating fluid to the carbon present in the carbon containing fuel. For determining the molar amount of CO₂ introduced into the combustor, in some embodiments, the entire content of CO₂ provided to the combustor (i.e., introduced at the inlet with the fuel and the O₂, as well as any CO₂ used as a transpiration cooling fluid) is included in the calculation. In specific embodiments, however, the calculation may be based solely on the molar amount of CO₂ introduced at the combustor inlet (i.e., excluding any CO₂ used as a transpiration cooling fluid). In embodiments wherein the CO₂ is introduced into the combustor only as a transpiration cooling fluid, the calculation is based upon the content of CO₂ introduced into the combustor as the transpiration cooling fluid. Thus, the ratio may be described as the molar content of CO₂ input to the combustor inlet in relation to the carbon in the fuel input to the combustor. Alternately, the ratio may be described as the molar content of CO₂ input to the combustor through the transpiration cooling fluid in relation to the carbon in the fuel input to the combustor.

In certain embodiments, the ratio of CO₂ circulating fluid to carbon in the fuel introduced into the combustor, on a molar basis, can be about 10 to about 50 (i.e., about 10 moles of CO₂ per 1 mole of carbon in the fuel to about 50 moles of CO₂ per 1 mole of carbon in the fuel). In further embodiments, the ratio of CO₂ in the circulating fluid to carbon in the fuel can be about 15 to about 50, about 20 to about 50, about 25 to about 50, about 30 to about 50, about 15 to about 45, about 20 to about 45, about 25 to about 45, about 30 to about 45, about 15 to about 40, about 20 to about 40, about 25 to about 40, or about 30 to about 40. In other embodiments, the ratio of CO₂ in the circulating fluid to carbon in the fuel can be at least about 5, at least about 10, at least about 15, at least about 20, at least about 25, or at least about 30.

The molar ratio of CO₂ introduced into the combustor to carbon present in the carbon containing fuel can have an important impact on overall system thermal efficiency. This impact on efficiency also may be impacted by the design and function of further components of the system, including the heat exchanger, the water separator, and the pressurization unit. The combination of the various elements of the system and method described herein leads to the ability to achieve high thermal efficiency at the specific CO₂/C ratios described herein. Previously known systems and methods that do not include the various elements described herein typically would require a CO₂/C molar ratio that is significantly lower than used in the present invention to achieve efficiencies approaching those achieved herein. The present invention, however, has identified highly effective systems and methods for recycling CO₂ that enables the use of CO₂/C molar ratios that greatly exceed those that can be used in the known art. The use of high CO₂/C molar ratios according to the present invention further is advantageous for diluting impurities in the combustion stream. The corrosive or erosive effects of impurities (e.g., chlorides and sulfur) on system components are thus greatly diminished. High chloride and/or high sulfur coal presently cannot be used in known systems because the combustion products from such coal (which includes HCl and H₂SO₄) are too corrosive and erosive for the power plant components to withstand. Many other impurities (e.g., solid ash particles and volatile materials containing elements such as lead, iodine, antimony, and mercury) also can cause sever internal damage to power plant components at high temperatures. The dilutive effect of the recycled CO₂ can greatly ameliorate or eliminate the deleterious effects of such impurities on power plant components. The selection of CO₂/C molar ratios then can involve a complex consideration of effects on efficiency and plant component erosion and corrosion and of the design of the CO₂ recycle system components and function. The present invention enables the highly efficient recycle of CO₂ and thus the increased CO₂/C molar ratios with a high thermal efficiency that could not have been predicted by the known art. The high CO₂/C molar ratios thus convey at least the aforementioned advantages.

Similarly, it can be useful to control the content of O₂ introduced into the combustor. This particularly can depend upon the nature of the operation of the combustor. As more fully described herein, the methods and systems of the invention can allow for operation in a fully oxidizing mode, a fully reducing mode, or variations of both. In a fully oxidizing mode, the amount of O₂ provided to the combustor preferably would be at least a stoichiometric amount necessary to achieve complete oxidization of the carbon containing fuel. In certain embodiments, the amount of O₂ provided would be in excess of the noted stoichiometric amount by at least about 0.1% molar, at least about 0.25% molar, at least about 0.5% molar, at least about 1% molar, at least about 2% molar, at least about 3% molar, at least about 4% molar, or at least about 5% molar. In other embodiments, the amount of O₂ provided would be in excess of the noted stoichiometric amount by about 0.1% to about 5% molar, about 0.25% to about 4% molar, or about 0.5% to about 3% molar. In a fully reducing mode, the amount of O₂ provided to the combustor preferably would be a stoichiometric amount necessary to convert the carbon containing fuel to the components H₂, CO, CH₄, H₂S, and NH₃ plus an excess of at least about 0.1% molar, at least about 0.25% molar, at least about 0.5% molar, at least about 1% molar, at least about 2% molar, at least about 3% molar, at least about 4% molar, or at least about 5% molar. In other embodiments, the amount of O₂ provided would be in excess of the noted stoichiometric amount by about 0.1% to about 5% molar, about 0.25% to about 4% molar, or about 0.5% to about 3% molar.

The methods of the invention can, in some embodiments, be characterized in relation to the physical state of the CO₂ throughout the various steps in the process. CO₂ is recognized as existing in various states depending upon the physical conditions of the material. CO₂ has a triple point at 0.518 MPa and -56.6 °C, but CO₂ also has a critical pressure and temperature of 7.38 MPa and 31.1 °C. Beyond this critical point, CO₂ exists as a supercritical fluid, and the present invention has realized the ability to maximize power generation efficiency by keeping the CO₂ in a specified state at specific points in the cycle. In specific embodiments, the CO₂ introduced into the combustor is preferably in the form of a supercritical fluid.

Efficiency of a power generating system or method typically is understood to describe the ratio of energy output by the system or method to energy input into the system or method. In the case of a power production system or method, efficiency often is described as the ratio of electricity or power (e.g., in megawatts or Mw) output to the customer grid to the total lower heating value thermal energy of the fuel combusted to generate the electricity (or power). This ratio then may be referred to as the net system or method efficiency (on an LHV basis). This efficiency can take into account all of the energy required for internal system or method processes, including production of purified oxygen (e.g., via an air separation unit), pressurization of CO₂ for transport to a pressurized pipeline, and other system or method conditions requiring energy input.

In various embodiments, the systems and methods of the present invention can make use of predominantly CO₂ as a working fluid in a cycle in which a carbon containing fuel is combusted (i.e., in a combustor) in substantially pure O₂ at a pressure in excess of the critical pressure of CO₂ to produce a combustion product stream. This stream is expanded across a series of turbines and is then passed through a recuperator heat exchanger. In the heat exchanger, the turbine exhaust preheats a recycle CO₂ circulating fluid in a supercritical state. This preheated, recycled CO₂ circulating fluid is input into the combustor where it mixes with the products from combustion of the carbon containing fuel to give a total flow at a defined maximum turbine inlet temperature. The invention can provide excellent efficiency at least in part because of the recognition of the benefits of minimizing the temperature difference at the hot end of the recuperator heat exchanger. This minimization can be achieved by using a low temperature level heat source to heat a portion of the recycle CO₂ prior to introduction to the combustor. At these lower temperature levels, the specific heat and density of the supercritical CO₂ is very high, and this extra heating can allow the turbine exhaust flow to preheat the CO₂ to a much higher temperature, and this can significantly reduce the temperature difference at the hot end of the recuperator heat exchanger. Useful low temperature heat sources in specific embodiments are the air compressors used in the cryogenic air separation plant operated adiabatically or the hot exhaust flow from a conventional gas turbine. In specific embodiments of the present invention, the temperature difference at the hot end of the recuperator heat exchanger is less than about 50 °C, and preferably in the range of about 10 °C to about 30 °C. The use of a low pressure ratio (e.g., below about 12) is a further factor which can increase efficiency. The use of CO₂ as a working fluid coupled with the low pressure ratio reduces the energy loss in raising the pressure of the cooled turbine exhaust to the recycle pressure. A further advantage is the ability to produce the quantity of carbon in the fuel converted to CO₂ as a high pressure fluid above the supercritical pressure of CO₂ at pipeline pressure (typically about 10 MPa to about 20 MPa) with very little additional parasitic power consumption at near 100% carbon capture from the fuel. Such system and method parameters are further described herein in even greater detail. Moreover, various combinations of combustors, turbines, and heat exchange can be identified for providing efficiencies and cost reductions even greater than a basic example of the presently disclosed systems and methods. Certain exemplary embodiments of such combinations are described herein; however, the invention is first described below in relation to basic elements of the systems and methods so as to provide a full description of the nature of the invention and, in particular, the several components thereof that can impart distinct advantages over the known art. Thereafter, the even further advantages of the presently disclosed systems and methods that may be realized through proper combinations of system elements and working conditions arising from the present invention are exemplified in additional embodiments.

Returning to **FIG. 5****,** the carbon containing fuel **254** introduced to the combustor **220** along with the O₂ **242** and the CO₂ circulating fluid **236** is combusted to provide a combustion product stream **40.** In specific embodiments, the combustor **220** can be a transpiration cooled combustor or any further suitable combustor, such as those already described above. Combustion temperature can vary depending upon the specific process parameters - e.g., the type of carbon containing fuel used, the molar ratio of CO₂ to carbon in the fuel as introduced into the combustor, and/or the molar ratio of CO₂ to O₂ introduced into the combustor. In specific embodiments, the combustion temperature is a temperature as described above in relation to the description of the transpiration cooled combustor. In particularly preferred embodiments, combustion temperatures in excess of about 1,300 °C, as described herein, may be advantageous.

It also can be useful to control combustion temperature such that the combustion product stream leaving the combustor has a desired temperature. For example, it can be useful for the combustion product stream exiting the combustor to have a temperature of at least about 700 °C, at least about 750 °C, at least about 800 °C, at least about 850 °C, at least about 900 °C, at least about 950 °C, at least about 1,000 °C, at least about 1,050 °C, at least about 1,100 °C, at least about 1,200 °C, at least about 1,300 °C, at least about 1,400 °C, at least about 1,500 °C, or at least about 1,600 °C. In some embodiments, the combustion product stream may have a temperature of about 700 °C to about 1,600 °C, about 800 °C to about 1,600 °C, about 850 °C to about 1,500 °C, about 900 °C to about 1,400 °C, about 950 °C to about 1,350 °C, or about 1,000 °C to about 1,300 °C.

As described above, the pressure of the CO₂ throughout the power production cycle can be a critical parameter to maximize power cycle efficiency. While it can be important for the materials introduced into the combustor to have a specifically defined pressure, it likewise can be important for the combustion product stream to have a defined pressure. Specifically, the pressure of the combustion product stream can be related to the pressure of the CO₂ circulating fluid that is introduced into the combustor. In specific embodiments the pressure of the combustion product stream can be at least about 90% of the pressure of the CO₂ introduced into the combustor - i.e., in the circulating fluid. In further embodiments, the pressure of the combustion product stream can be at least about 91%, at least about 92%, at least about 93%, at least about 94%, at least about 95%, at least about 96%, at least about 97%, at least about 98%, or at least about 99% of the pressure of the CO₂ introduced into the combustor.

The chemical makeup of the combustion product stream exiting the combustor can vary depending upon the type of carbon containing fuel used. Importantly, the combustion product stream will comprise CO₂ that will be recycled and reintroduced into the combustor or further cycles, as more fully described below. Moreover, excess CO₂ (including CO₂ produced by combustion of the fuel) can be withdrawn from the CO₂ circulating fluid (particularly at a pressure suitable for direct transfer to a CO₂ pipeline) for sequestration or other disposal that does not include release to the atmosphere. In further embodiments, the combustion product stream may comprise one or more of water vapor, SO₂, SO₃, HCI, NO, NO₂, Hg, excess O₂, N₂, Ar, and possibly other contaminants that may be preset in the fuel that is combusted. These materials present in the combustion product stream may persist in the CO₂ circulating fluid stream unless removed, such as by processes described herein. Such materials present in addition to the CO₂ may be referred to herein as "secondary components."

As seen in **FIG. 5****,** the combustion product stream **40** can be directed to a turbine **320** (which represents a series of turbines) wherein the combustion product stream **40** is expanded to generate power (e.g., via a generator to
produce electricity, which is not shown in the illustration). The turbines **320** can have an inlet for receiving the combustion product stream **40** and an outlet for release of a turbine discharge stream **50** comprising CO₂. Although a single turbine **320** is shown in **FIG. 5****,** it is understood that the invention encompasses the use of a series of turbines, the multiple turbines optionally being optionally separated by one or more further components, such as a further combustion component, a compressing component, a separator component, or the like. In addition to the further disclosure otherwise provided herein, advantages associated with such multi-turbine embodiments can be recognized particularly in light of the exemplary embodiment described in Example 3.

Again, process parameters may be closely controlled in this step to maximize cycle efficiency. Existing natural gas power plant efficiency is critically dependent on turbine inlet temperatures. For example, extensive work has been done as great cost to achieve turbine technology allowing for inlet temperatures as high as about 1,350 °C. The higher the turbine inlet temperature, the higher the plant efficiency, but also the more expensive the turbine is, and potentially, the shorter its lifetime. Some utilities are balking at paying the higher prices and having the risk of shorter life as well. Although the present invention can make use of such turbines to even further increase efficiency in some embodiments, such is not required. In specific embodiments, the present systems and methods can achieve the desired efficiency while using turbine inlet temperature in a much lower range, as described above. Thus, the invention may be characterized in terms of achieving a specific efficiency, as described herein, while providing a combustion product stream to a turbine inlet at a defined temperature, as described herein, which may be significantly less than temperatures recognized in the art as necessary to achieve the same efficiency with the same fuel.

As noted above, the combustion product stream **40** leaving the combustor **220** preferably has a pressure that is closely aligned to the pressure of the CO₂ circulating fluid **236** entering the combustor **220.** In specific embodiments, the combustion product stream **40** is thus at a temperature and pressure such that the CO₂ present in the stream is in a supercritical fluid state. When the combustion product stream **40** is expanded across the turbines **320,** the pressure of the stream is reduced. Preferably, this pressure drop is controlled such that the pressure of the combustion product stream **40** is in a defined ratio with the pressure of the turbine discharge stream **50.** In certain embodiments, the pressure ratio of the combustion product stream at the inlet of the turbines compared to the turbine discharge stream at the out of the turbines is less at least about 20. This can be defined as the inlet pressure (Iₚ); to outlet pressure (Oₚ) ratio (i.e., Iₚ/Oₚ).

In specific embodiments, it can be desirable for the turbine discharge stream to be under conditions such that the CO₂ in the stream is no longer in a supercritical fluid state but is rather in a gaseous state. For example, providing the CO₂ in a gaseous state can facilitate removal of any secondary components. In some embodiments, the turbine discharge stream has a pressure that is below the pressure where the CO₂ would be in a supercritical state. Preferably, the turbine discharge stream has a pressure that is less than about 7.3 MPa, is less than or equal to about 7 MPa, less than or equal to about 6.5 MPa, less than or equal to about 6 MPa, less than or equal to about 5.5 MPa, less than or equal to about 5 MPa, less than or equal to about 4.5 MPa, less than or equal to about 4 MPa, less than or equal to about 3.5 MPa, less than or equal to about 3 MPa, less than or equal to about 2.5 MPa, less than or equal to about 2 MPa, or less than or equal to about 1.5 MPa. In other embodiments, the pressure of the turbine discharge stream can be about 1.5 MPa to about 7 MPa, about 3 MPa to about 7 MPa, or about 4 MPa to about 7 MPa. Preferably, the pressure of the turbine discharge stream is less than the CO₂ condensing pressure at the cooling temperatures to be encountered by the stream (e.g., ambient cooling). Thus, it is preferable according to the invention that the CO₂ downstream from the turbines **320** (and preferably upstream from the pressurization unit **620**) be maintained in a gaseous state and not allowed to reach conditions wherein liquid CO₂ may form.

In addition to the advantages arising from utilization of the preferential pressure ratios described above, further advantages can be provided when multiple turbines are utilized in the inventive systems and methods. In particular, the above pressure ratios may be applied to only a single turbine in a series. One or more further turbines in the series may be adapted to provide a discharge at a low end of the pressure ranges described above. For example, in embodiments where a turbine provides a discharge at a pressure of less than or equal to the supercritical pressure of CO₂ or even less than or equal to 1.5 MPa, the turbine or turbines may be adapted to discharge streams at pressures that are near or at ambient pressure.

Although passage of the combustion product stream through the turbines may lead to some amount of temperature decrease, the turbine discharge stream typically will have a temperature that could hinder removal of any secondary components present in the combustion product stream. For example, the turbine discharge stream may have a temperature of about 500 °C to about 1,000 °C, about 600 °C to about 1,000 °C, about 700 °C to about 1,000 °C, or about 800 °C to about 1,000 °C. Because of the relatively high temperature of the combustion product stream, it can be beneficial for the turbine to be formed of materials capable of withstanding such temperatures. It also may be useful for the turbines to comprise a material that provides good chemical resistance to the type of secondary materials that may be present in the combustion product stream.

In some embodiments, it thus can be useful to pass the turbine discharge stream **50** through at least one heat exchanger **420** that cools the turbine discharge stream **50** and provides a CO₂ circulating fluid stream **60** having a temperature in a defined range. In specific embodiments, the CO₂ circulating fluid **60** leaving the heat exchanger **420** (or the final heat exchanger in the series when two or more heat exchangers are used) has a temperature of less than about 200 °C, less than about 150 °C, less than about 125 °C, less than about 100 °C, less than about 95 °C, less than about 90 °C, less than about 85 °C, less than about 80 °C, less than about 75 °C, less than about 70 °C, less than about 65 °C, less than about 60 °C, less than about 55 °C, less than about 50 °C, less than about 45 °C, or less than about 40 °C.

As noted above, it can be beneficial for the pressure of the turbine discharge to have a pressure in a specific ratio with the pressure of the combustion product stream. In specific embodiments, the turbine discharge stream will be directly passed through the one or more heat exchangers described herein without passing through any further components of the system. Thus, the pressure ratio also may be described in relation to the ratio of the pressure of the combustion product stream as it exits the combustor compared to the pressure of the stream entering the hot end of the heat exchanger (or the first heat exchanger when a series of heat exchangers is used). Again, this pressure ratio preferably is less than about 12. In further embodiments, the pressure ratio of the combustion product stream to the stream entering the heat exchanger can be less than about 11, less than about 10, less than about 9, less than about 8, or less than about 7. In other embodiments, this pressure ratio can be about 1.5 to about 10, about 2 to about 9, about 2 to about 8, about 3 to about 8, or about 4 to about 8.

A turbine discharge stream (or a portion thereof) passes directly to a combustor and then to one or more additional turbines (and, optionally, one or more further combustors) prior to passage through a heat exchanger. It further is understood that a discharge stream of a turbine in a series as discussed herein may be at a lower temperature than the inlet stream of the turbine.

While the use of a transpiration cooled combustor allows for high heat combustion, the systems and methods of the present invention can be characterized by the ability to also provide a turbine discharge stream to a heat exchanger (or series or heat exchangers) at a temperature that is sufficiently low to reduce costs associated with the system, increase the lifespan of the heat exchanger(s), and improve performance and reliability of the system. In specific embodiments, the hottest working temperature for a heat exchanger in a system or method according to the present invention is less than about 1,100 °C, less than about 1,000 °C, less than about 975 °C, less than about 950 °C, less than about 925 °C or less than about 900 °C.

In certain embodiments, it can be particularly useful for the heat exchanger **420** to comprise at least two heat exchangers in series for receiving the turbine discharge stream **50** and cool it to a desired temperature. The type of heat exchanger used can vary depending upon the conditions of the stream entering the heat exchanger. For example, the turbine discharge stream **50** may be at a relatively high temperature, as described above, and it may thus be useful for the heat exchanger directly receiving the turbine discharge stream **50** to be formed from high performance materials designed to withstand extreme conditions. For example, the first heat exchanger in the heat exchanger series may comprise an INCONEL® alloy or similar material. Preferably, the first heat exchanger in the series comprises a material capable of withstanding a consistent working temperature of at least about 700 °C, at least about 750 °C, at least about 800 °C, at least about 850 °C, at least about 900 °C, at least about 950 °C, at least about 1,000 °C, at least about 1,100 °C, or at least about 1,200 °C. It also may be useful for one or more of the heat exchangers to comprise a material that provides good chemical resistance to the type of secondary materials that may be present in the combustion product stream. INCONEL® alloys are available from Special Metals Corporation, and some embodiments can include austenitic nickel-chromium-based alloys. Examples of alloys that may be useful include INCONEL® 600, INCONEL® 601, INCONEL® 601GC, INCONEL® 603XL, INCONEL® 617, INCONEL® 625, INCONEL® 625LCF, INCONEL® 686, INCONEL® 690, INCONEL® 693, INCONEL® 706, INCONEL® 718, INCONEL® 718SPF™, INCONEL® 722, INCONEL® 725, INCONEL® 740, INCONEL® X-750, INCONEL® 751, INCONEL® MA754, INCONEL® MA758, INCONEL® 783, INCONEL® 903, INCONEL® N06230, INCONEL® C-276, INCONEL® G-3, INCONEL® HX, INCONEL® 22. An example of a favorable heat exchanger design is a diffusion bonded compact plate heat exchanger with chemically milled fins in the plates manufactured in a high temperature material, such as one of the alloys described above. Suitable heat exchangers can include those available under the tradename HEATRIC® (available from Meggitt USA, Houston, TX).

The first heat exchanger in the series preferably can sufficiently transfer heat from the turbine discharge stream such that one or more further heat exchangers present in the series can be formed of more conventional materials - e.g., stainless steel. In specific embodiments, at least two heat exchangers or at least three heat exchangers are used in a series to cool the turbine discharge stream to the desired temperature. The usefulness of using multiple heat exchangers in a series particularly can be seen in the description below regarding transfer of the heat from the turbine discharge stream to the CO₂ circulating fluid to re-heat the circulating fluid prior to introduction into the combustor.

In some embodiments, the methods and systems may be characterized as being a single stage combustion method or system. This can be achieved though use of a high efficiency combustor, such as a transpiration cooled combustor described above. Essentially, the fuel can be substantially completely combusted in the single combustor such that it is unnecessary to provide a series of combustors to completely combust the fuel. Accordingly, in some embodiments, the inventive methods and systems can be described such that the transpiration cooled combustor is the only combustor. In further embodiments, the methods and systems can be described such that the combustion occurs only in the single transpiration cooled combustor prior to passage of the discharge stream into the heat exchanger. In still further embodiments, the methods and systems can be described such that the turbine discharge stream is passed directly into the heat exchanger without passage through a further combustor.

After cooling, the CO₂ circulating fluid stream **60** exiting the at least one heat exchanger **420** can undergo further processing to separate out any secondary components remaining in the CO₂ circulating fluid stream **60** from combustion of the fuel. As shown in **FIG. 5****,** the circulating fluid stream **60** can be directed to one or more separation units **520.** As discussed in greater detail below, the present invention can be particularly characterized by the ability to provide a high efficiency method of generating power from combustion of a carbon containing fuel with no atmospheric release of CO₂. This can be achieved, at least in part, by using the CO₂ formed in combustion of the carbon containing fuel as the circulating fluid in the power production cycle. In some embodiments, though, the continuous combustion and recycling of CO₂ as the circulating fluid may cause an accumulation of CO₂ in the system. In such cases, it can be useful to withdraw at least a portion of the CO₂ from the circulating fluid (e.g., an amount approximately equivalent to the quantity of CO₂ derived from combustion of the carbon containing fuel). Such withdrawn CO₂ can be disposed of by any suitable method. In specific embodiments, the CO₂ may be directed to a pipeline for sequestration or disposal by suitable means, as further described below.

It can be a requirement of a CO₂ pipeline system specification that the CO₂ entering the pipeline be substantially free of water to prevent corrosion of the carbon steel used for the pipeline. Although "wet" CO₂ could be input directly into a stainless steel CO₂ pipeline, this is not always possible and, in fact, it can be more desirable to use a carbon steel pipeline because of cost concerns. Accordingly, in certain embodiments, water present in the CO₂ circulating fluid (e.g., water formed during combustion of the carbon-containing fuel and persisting in the combustion product stream, the turbine discharge stream, and the CO₂ circulating fluid stream) can be removed mostly as a liquid phase from the cooled CO₂ circulating fluid stream. In specific embodiments, this can be achieved by providing the CO₂ circulating fluid (e.g., in a gaseous state) at a pressure that is less than the point at which CO₂ present in the gas mixture is liquefied when the gas mixture is cooled to the lowest temperature achieved with ambient temperature cooling means. For example, the CO₂ circulating fluid particularly can be provided at a pressure of less than 7.38 MPa during separation of secondary components therefrom. An even lower pressure may be required if cooling means at a temperature in the low ambient range or substantially less than ambient are used. This allows for separation of water as a liquid and also minimizes contamination of the purified CO₂ circulating stream **65** leaving the separation unit. This also can limit the turbine discharge pressure to a value which is less than the critical pressure of the turbine exhaust gas. The actual pressure can depend upon the temperature of the available ambient cooling means. For example, if the water separation takes place at 30 °C, then a pressure of 7 MPa allows for a 0.38 MPa margin to the CO₂ condensing pressure. The CO₂ circulating fluid leaving the heat exchanger and entering the separation unit may be provided at a pressure that is substantially the same as the pressure at the outlet of the series of turbines.

In specific embodiments, the purified CO₂ circulating stream **65** after water separation comprises no water vapor or substantially no water vapor. In some embodiments, the purified CO₂ circulating stream can be characterized as comprising water vapor in an amount of only less than 1.5% on a molar basis, less than 1.25% on a molar basis, less than 1% on a molar basis, less than 0.9% on a molar basis, or less than 0.8% on a molar basis, less than 0.7% on a molar basis, less than 0.6% on a molar basis, less than 0.5% on a molar basis, less than 0.4% on a molar basis, less than 0.3% on a molar basis, less than 0.2% on a molar basis, or less than 0.1% on a molar basis. In some embodiments, the purified CO₂ circulating fluid stream can comprise water vapor only in an amount of about 0.01% to about 1.5% on a molar basis, about 0.01% to about 1% on a molar basis, about 0.01% to about 0.75% on a molar basis, about 0.01% to about 0.5% on a molar basis, about 0.01% to about 0.25% on a molar basis, about 0.05% to about 0.5% on a molar basis, or about 0.05% to about 0.25% on a molar basis.

It can be highly advantageous to provide the CO₂ circulating fluid at the above-defined temperature and pressure conditions to facilitate separation of secondary components, such as water. In other words, the present invention can particularly provide for maintaining the CO₂ circulating fluid under desired conditions such that the CO₂ and the water in the CO₂ circulating fluid prior to separation are in desired states that facilitate separation. By providing the CO₂ circulating fluid at a pressure as described above, the temperature of the fluid stream can be decreased to a point where water in the stream will be in a liquid state and thus be more easily separable from the gaseous CO₂.

In certain embodiments, it can be desirable to provide further drying conditions so that the purified CO₂ circulating fluid is completely or substantially free of water. As noted above, separation of water from the CO₂ circulating fluid based on phase differences in the materials can leave a minor portion (i.e., low concentration) of water remaining in the CO₂ circulating fluid. In some embodiments, it may be acceptable to continue with the CO₂ circulating fluid having the minor portion of water remaining therein. In other embodiments, it can be useful to subject the CO₂ circulating fluid to further treatment to facilitate removal of all or part of the remaining water. For example, low concentration of water may be removed by desiccant dryers or other means that would suitable in light of the present disclosure.

Providing the CO₂ circulating fluid to the separation units at the defined pressure can be particularly beneficial for again maximizing efficiency of the power cycle. Specifically, providing the CO₂ circulating fluid at the defined pressure range can allow for the purified CO₂ circulating fluid in the gas phase to be compressed to a high pressure with minimal total power consumption. As described below, such pressurization can be required so that part of the purified CO₂ circulating fluid can be recycled to the combustor and part can be supplied at a required pipeline pressure (e.g., about 10 MPa to about 20 MPa). This further illustrates the benefits of minimizing the inlet to outlet pressure ratio of the expansion turbines, as described above. This functions to increase the overall cycle efficiency and also to allow for the discharge pressure from the turbines to be in the desirable range described above for separation of water and other secondary components from the CO₂ circulating fluid.

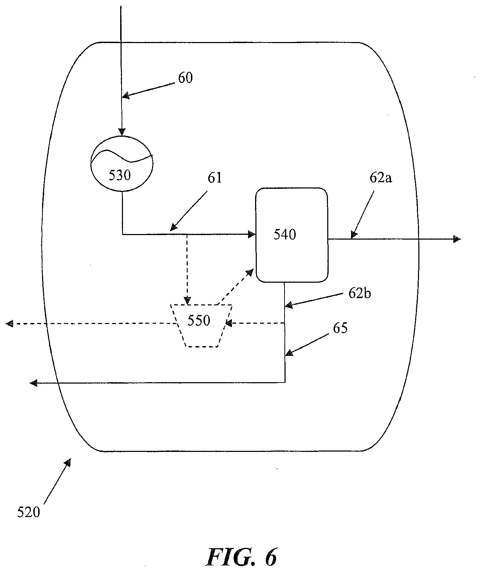

One embodiment of the flow of the CO₂ circulating fluid through a separation unit **520** is illustrated in **FIG. 6****.** As seen therein, the CO₂ circulating fluid stream **60** from the heat exchanger can be passed through a cold water heat exchanger **530** that uses water to further remove heat from the CO₂ circulating fluid **60** (or any similarly functioning device) and discharge a mixed phase CO₂ circulating fluid **61** wherein the CO₂ remains a gas and the water in the CO₂ circulating fluid is converted to a liquid phase. For example, the passage of the CO₂ circulating fluid **60** through the cold water heat exchanger **530** can cool the CO₂ circulating fluid to a temperature of less than about 50 °C, less than about 55 °C, less than about 40 °C, less than about 45 °C, less than about 40 °C, or less than about 30 °C. Preferably, the pressure of the CO₂ circulating fluid is substantially unchanged by passage through the cold water heat exchanger **530.** The mixed phase CO₂ circulating fluid **61** this is directed to a water separation unit **540** wherein a liquid water stream **62a** is discharged from the separator **520.** Also exiting the water separation unit **540** is the enriched CO₂ circulating fluid stream **62b.** This enriched stream can directly exit the separator **520** as the purified CO₂ circulating fluid stream **65.** In alternate embodiments (as illustrated by the streams and component represented by dashed lines), the enriched CO₂ circulating fluid stream **62b** may be directed to one or more additional separation units **550** for removal of further secondary components, as more fully described below. In specific embodiments, any further secondary components of the CO₂ circulating fluid can be removed after removal of water. The CO₂ circulating fluid then exits the one or more additional separator units as the purified CO₂ circulating fluid **65.** In some embodiments, however, the mixed phase CO₂ circulating fluid **61** may first be directed for removal of one or more secondary components prior to removal of water, and the partially purified stream may then be directed to the water separation unit **540.** One of skill armed with this disclosure may envision the various combinations of separators that may be desirable, and all such combinations are intended to be incorporated by the present invention.

As noted above, in addition to water, the CO₂ circulating fluid may contain other secondary components, such as fuel-derived, combustion-derived, and oxygen-derived impurities. Such secondary components also can be removed from the cooled, gaseous CO₂ circulating fluid in and around the same time as water separation. For example, in addition to water vapor, secondary components such as SO₂, SO₃, HCI, NO, NO₂, Hg, and excess O₂, N₂ and Ar can be removed. These secondary components of the CO₂ circulating fluid (often recognized as impurities or contaminants) can all be removed from the cooled CO₂ circulating fluid using appropriate methods (e.g., methods defined in U.S. Patent Application Publication No. 2008/0226515 and European Patent Application Nos. EP1952874 and EP1953486). The SO₂ and SO₃ can be converted 100% to sulfuric acid, while >95% of the NO and NO₂ can be converted to nitric acid. Any excess O₂ present in the CO₂ circulating fluid can be separated as an enriched stream for optional recycle to the combustor. Any inert gases present (e.g., N₂ and Ar) can be vented at low pressure to the atmosphere. In certain embodiments, the CO₂ circulating fluid can be thus purified such that the CO₂ derived from the carbon in the fuel that is combusted can be ultimately delivered as a high density, pure stream. In specific embodiments, the purified CO₂ circulating fluid can comprise CO₂ in a concentration of at least 98.5% molar, at least 99% molar, at least 99.5% molar, or at least 99.8% molar. Moreover, the CO₂ circulating fluid can be provided at a desired pressure for direct input into a CO₂ pipeline - e.g., at least about 10 MPa, at least about 15 MPa, or at least about 20 MPa.

To summarize the foregoing, in one embodiment, combustion of the carbon containing fuel **254** in the presence of O₂ **242** and a CO₂ circulating fluid **236** in a suitable combustor **220** can form a combustion product stream **40** having a relatively high temperature and pressure. This combustion product stream **40** comprising a relatively large amount of CO₂ can be passed through the turbines **320** to expand the combustion product stream 40, thereby decreasing the pressure of the stream and generating power. The turbine discharge stream **50** leaving the outlet of the turbines **320** is at a decreased pressure but still retains a relatively high temperature. Because of contaminants and impurities in the combustion product stream, it is beneficial to separate out such contaminants and impurities prior to recycling the CO₂ circulating fluid back into the system. To achieve this separation, the turbine discharge stream **50** is cooled by passage through the one or more heat exchangers **420.** Separation of the secondary products (e.g., water and any other contaminants and impurities) can be achieved as described above. In order to recycle the CO₂ circulating fluid back into the combustor, it is necessary to both re-heat and re-pressurize the CO₂ circulating fluid. In certain embodiments, the present invention can be particularly characterized by the implementation of specific process steps to maximize efficiency of the power generation cycle while simultaneously preventing discharge of pollutants (e.g., CO₂) into the atmosphere. This particularly can be seen in relation the re-heating and re-pressurizing of the cooled and purified CO₂ circulating fluid exiting the separation unit.

As further illustrated in **FIG. 5****,** the purified CO₂ circulating fluid **65** leaving the one or more separation units **520** can be passed through one or more pressurization units **620** (e.g., pumps, compressors, or the like) to increase the pressure of the purified CO₂ circulating fluid **65.** In certain embodiments, the purified CO₂ circulating fluid **65** can be compressed to a pressure of at least about 7.5 MPa or at least about 8 MPa. In some embodiments, a single pressurization unit can be used to increase the pressure of the purified CO₂ circulating fluid to the desired pressure described herein for introduction into the combustor **220.**

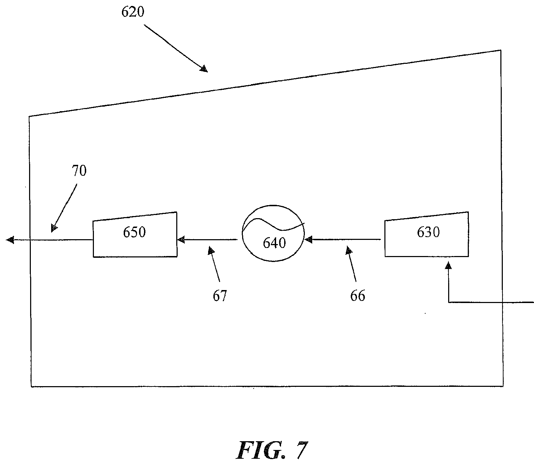

In specific embodiments, pressurization can be carried out using a series of two or more compressors (e.g., pumps) in the pressurization unit **620.** One such embodiment is shown in **FIG.** 7, wherein the purified CO₂ circulating fluid **65** is passed through a first compressor **630** to compress the purified CO₂ circulating fluid **65** to a first pressure (which preferably is above the critical pressure of the CO₂) and thus form stream **66.** Stream **66** can be directed to a cold water heat exchanger **640** that withdraws heat (e.g., heat formed by the pressurizing action of the first compressor) and forms stream **67,** which preferably is at a temperature that is near ambient. Stream **67** can be directed to a second compressor **650** that is used to pressurize the CO₂ circulating fluid to a second pressure that is greater than the first pressure. As described below, the second pressure can be substantially similar to the pressure desired for the CO₂ circulating fluid when input (or recycled) to the combustor.

In specific embodiments, the first compressor **630** can be used to increase the pressure of the purified CO₂ circulating fluid **65** such that the purified CO₂ circulating fluid is transformed from a gaseous state to a supercritical fluid state. In specific embodiments, the purified CO₂ circulating fluid can be pressurized in the first compressor **630** to a pressure of about 7.5 MPa to about 20 MPa, about 7.5 MPa to about 15 MPa, about 7.5 MPa to about 12 MPa, about 7.5 MPa to about 10 MPa, or about 8 MPa to about 10 MPa. The stream **66** exiting the first compressor **630** (which is in a supercritical fluid state) is then passed through the cold water heat exchanger **640** (or any similarly functioning device) that can cool the CO₂ circulating fluid to a temperature sufficient to form a high density fluid that can more efficiently be pumped to an even greater pressure. This can be significant in light of the large volume of CO₂ that is being recycled for use as the circulating fluid. Pumping a large volume of CO₂ in the supercritical fluid state can be a significant energy drain on the system. The present, however, realizes the beneficial increase in efficiency that can be provided by densifying the CO₂ and thus reducing the total volume of supercritical CO₂ that is pumped back to the combustor for recycle. In specific embodiments, the CO₂ circulating fluid can be provided at a density of at least about 200 kg/m³, at least about 250 kg/m³, at least about 300 kg/m³, at least about 350 kg/m³, at least about 400 kg/m³, at least about 450 kg/m³, at least about 500 kg/m³, at least about 550 kg/m³ , at least about 600 kg/m³, at least about 650 kg/m³, at least about 700 kg/m³ , at least about 750 kg/m3, at least about 800 kg/m³, at least about 850 kg/m³, at least about 900 kg/m³, at least about 950 kg/m³, or at least about 1,000 kg/m³ after discharge from the cold water heat exchanger **640** (and prior to passage through the heat exchanger unit **420** for heating). In further embodiments, the density may be about 150 kg/m³ to about 1,1,100 kg/m³, about 200 kg/m³ to about 1,000 kg/m³, about 400 kg/m³ to about 950 kg/m³, about 500 kg/m³ to about 900 kg/m³, or about 500 kg/m³ to about 800 kg/m³.

In specific embodiments, passage of the stream **66** through the cold water heat exchanger 640 can cool the CO₂ circulating fluid to a temperature of less than about 60 °C, less than about 50 °C, less than about 40 °C, or less than about 30 °C. In other embodiments, the temperature of the CO₂ circulating fluid leaving the coldwater heat exchanger **640** as stream **67** can be about 15 °C to about 50 °C, about 20 °C to about 45 °C, or about 20 °C to about 40 °C. The CO₂ circulating fluid in stream **67** entering the second compressor **650** preferably is under conditions that facilitate the energy efficient pumping of the stream to a desired pressure as described herein for introduction of the CO₂ circulating fluid into the combustor. For example, the pressurized, supercritical CO₂ circulating fluid stream **70** can be further pressurized to a pressure of at least about 12 MPa, at least about 15 MPa, at least about 16 MPa, at least about 18 MPa, at least about 20 MPa, or at least about 25 MPa. In some embodiments, the pressurized, supercritical CO₂ circulating fluid stream **70** can be further pressurized to a pressure of about 15 MPa to about 50 MPa, about 20 MPa to about 45 MPa, or about 25 MPa to about 40 MPa. Any type of compressor capable of working under the noted temperatures and capable of achieving the described pressures can be used, such as a high pressure multi-stage pump.

The pressurized CO₂ circulating fluid stream **70** leaving the one or more pressurization units **620** can be directed back to the heat exchangers previously used to cool the turbine discharge stream **50.** As shown in **FIG. 5****,** the pressurized CO₂ circulating fluid stream **70** first may be passed through a stream splitter **720** that forms CO₂ pipeline fluid stream **80** and CO₂ circulating fluid stream **85** (which would be substantially identical to CO₂ circulating fluid stream **70** except for the actual amount of CO₂ present in the stream). Thus, in some embodiments, at least a portion of the CO₂ in the pressurized CO₂ circulating fluid stream is introduced into a pressurized pipeline for sequestration. The amount of CO₂ removed from the CO₂ circulating fluid stream and directed to the pipeline (or other sequestration or disposal means) can vary depending upon the desired content of CO₂ to be introduced into the combustor to control combustion temperature and the actual content of CO₂ present in the combustion discharge stream exiting the combustor. In some embodiments, the amount of CO₂ withdrawn as described above can be substantially the amount of CO₂ formed from the combustion of the carbon containing fuel in the combustor.

To achieve a high efficiency operation, it can be beneficial for the CO₂ circulating fluid leaving the pressurization unit **620** to be heated to a temperature at which the super-critical fluid has a much lower specific heat. This is equivalent to providing a very large heat input over a comparatively low temperature range. The use of an external heat source (e.g., a relatively low temperature heat source) to provide additional heating for a portion of the recycled CO₂ circulating fluid allows the heat exchanger unit **420** to operate with a small temperature difference between turbine exhaust stream **50** and the recycled CO₂ circulating fluid stream **236** at the hot end of the heat exchanger unit **420** (or the first heat exchanger when a series of two or more heat exchangers is used). In specific embodiments, passage of the pressurized CO₂ circulating fluid through the one or more heat exchangers can be useful for heating the pressurized CO₂ circulating fluid stream to a desired temperature for entry of the pressurized CO₂ circulating fluid stream into the combustor. In certain embodiments, the pressurized CO₂ circulating fluid stream is heated to a temperature of at least about 200 °C, at least about 300 °C, at least about 400 °C, at least about 500 °C, at least about 600 °C, at least about 700 °C, or at least about 800 °C prior to input of the CO₂ circulating fluid stream into the combustor. In some embodiments, heating may be to a temperature of about 500 °C to about 1,200 °C, about 550 °C to about 1,000 °C, or about 600 °C to about 950 °C.

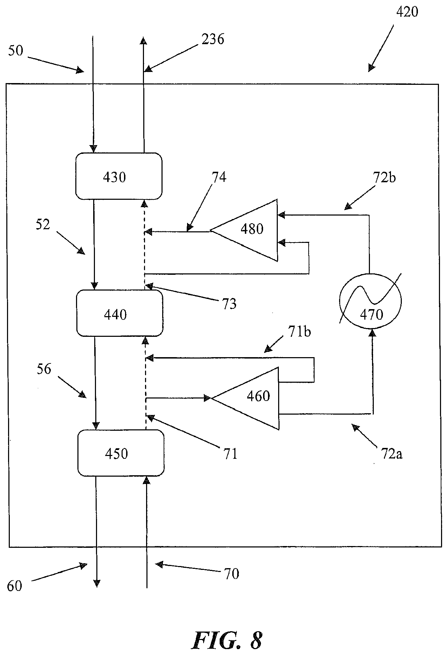

**FIG. 8** illustrates one embodiment of a heat exchange unit **420** wherein three individual heat exchangers are used in series to withdraw heat from the turbine discharge stream **50** to provide a CO₂ circulating fluid stream **60** under suitable conditions for removal of secondary components and simultaneously add heat to the pressurized, supercritical CO₂ circulating fluid stream **70** (or **85**) prior to recycling and introduction of the CO₂ circulating fluid stream **236** into the combustor. As further described below, the present systems and methods may be retrofitted to conventional power systems (e.g., coal fired power plants) to increase efficiency and/or output thereof. In some embodiments, the heat exchange unit **420** described as follows may thus be referred to as the primary heat exchange unit in such a retrofit where a secondary heat exchange unit also is used (as illustrated in **FIG. 12**). The secondary heat exchange unit thus could be one or more heat exchangers used to superheat a steam stream, for example. The use of the terms primary heat exchange unit and secondary heat exchange unit should not be construed as limiting the scope of the invention and are only used to provide clarity of description.

In the embodiments of **FIG. 8****,** the turbine discharge stream 50 enters the heat exchanger series **420** by first passing through the first heat exchanger **430** to provide stream **52,** which will have a lower temperature than the temperature of the turbine discharge stream **50.** The first heat exchanger **430** may be described as a high temperature heat exchanger as it receives the hottest stream in the series - i.e., the turbine discharge stream **50** - and thus transfers heat in the highest temperature range in the heat exchanger series **420.** As described above, the first heat exchanger **430** receiving the relatively high temperature turbine discharge stream **50** can comprise special alloys or other materials useful to make the heat exchanger suitable for withstanding the noted temperatures. The temperature of the turbine discharge stream **50** can be significantly reduced by passage through the first heat exchanger **430** (which also can apply to other embodiments where less than three or more than three individual heat exchangers are used). In some embodiments, the temperature of the stream **52** leaving the first heat exchanger **430** can be lower than the temperature of the turbine discharge stream **50** by at least about 100 °C, at least about 200 °C, at least about 300 °C, at least about 400 °C, at least about 450 °C, at least about 500 °C, at least about 550 °C, at least about 575 °C, or at least about 600 °C. In specific embodiments, the temperature of stream **52** may be about 100 °C to about 800 °C, about 150 °C to about 600 °C, or about 200 °C to about 500 °C. In preferred embodiments, the pressure of the stream **52** leaving the first heat exchanger **430** is substantially similar to the pressure of the turbine discharge stream **50.** Specifically, the pressure of the stream **52** leaving the first heat exchanger **430** can be at least 90%, at least 91%, at least 92%, at least 93%, at least 94%, at least 95%, at least 96%, at least 97%, at least 98%, at least 99%, at least 99.5%, or at least 99.8% of the pressure of the turbine discharge stream **50.**

The stream **52** leaving the first heat exchanger **430** is passed through the second heat exchanger **440** to produce stream **56,** which has a temperature that is less than the temperature of the stream **52** entering the second heat exchanger **440.** The second heat exchanger **440** may be described as an intermediate temperature heat exchanger as it transfers heat in an intermediate temperature range (i.e., a range less than the first heat exchanger **430** but greater than the third heat exchanger **450**). In some embodiments, the temperature difference between the first stream **52** and the second stream **56** can be substantially less than the temperature difference between the turbine discharge stream **50** and the stream **52** leaving the first heat exchanger **430.** In some embodiments, the temperature of the stream **56** leaving the second heat exchanger **440** can be lower than the temperature of the stream **52** entering the second heat exchanger **440** by about 10 °C to about 200 °C, about 20 °C to about 175 °C, about 30 °C to about 150 °C, or about 40 °C to about 140 °C. In specific embodiments, the temperature of stream **56** may be about 75 °C to about 600 °C, about 100 °C to about 400 °C, or about 100 °C to about 300 °C. Again, it can be preferred for the pressure of the stream **56** leaving the second heat exchanger **440** to be substantially similar to the pressure of the stream **52** entering the second heat exchanger **440.** Specifically, the pressure of the stream **56** leaving the second heat exchanger **440** can be at least 90%, at least 91%, at least 92%, at least 93%, at least 94%, at least 95%, at least 96%, at least 97%, at least 98%, at least 99%, at least 99.5%, or at least 99.8% of the pressure of the stream **52** entering the second heat exchanger **440.**

The stream **56** leaving the second heat exchanger **440** is passed through the third heat exchanger **450** to produce the CO₂ circulating fluid stream **60,** which has a temperature that is less than the temperature of the stream **56** entering the third heat exchanger **450.** The third heat exchanger **450** may be described as a low temperature heat exchanger as it transfers heat in the lowest temperature range of the heat transfer series **420.** In some embodiments, the temperature of the CO₂ circulating fluid stream **60** leaving the third heat exchanger **450** can be lower than the temperature of the stream **56** entering the third heat exchanger **450** by about 10 °C to about 250 °C, about 15 °C to about 200 °C, about 20 °C to about 175 °C, or about 25 °C to about 150 °C. In specific embodiments, the temperature of stream **60** may be about 40 °C to about 200 °C, about 40 °C to about 100 °C, or about 40 °C to about 90 °C. Again, it can be preferred for the pressure of the CO₂ circulating fluid stream **60** leaving the third heat exchanger **450** to be substantially similar to the pressure of the stream **56** entering the third heat exchanger **450.** Specifically, the pressure of the CO₂ circulating fluid stream **60** leaving the third heat exchanger **450** can be at least 90%, at least 91%, at least 92%, at least 93%, at least 94%, at least 95%, at least 96%, at least 97%, at least 98%, at least 99%, at least 99.5%, or at least 99.8% of the pressure of the stream **56** entering the third heat exchanger **450.**

The CO₂ circulating fluid stream **60** leaving the third heat exchanger **450** (and thus leaving the heat exchanger unit **420** in general) can be directed to the one or more separation units **520,** as described above. Also as described above, the CO₂ circulating fluid stream can undergo one or more types of separation to remove secondary components from the stream, which is then pressurized for return to the combustor as the recycled, circulating fluid (optionally having a portion of the CO₂ separated out for entry into a CO₂ pipeline or other means of sequestration or disposal without venting to the atmosphere).

Returning to **FIG. 8****,** the pressurized CO₂ circulating fluid stream **70** (or **85** if first passed through a separation apparatus, as shown in **FIG. 5**), can be directed back through the same series of three heat exchangers so that the heat originally withdrawn via the heat exchangers can be used to impart heat to the pressurized CO₂ circulating fluid stream **70** prior to entry into the combustor 220. Typically, heat imparted to the pressurized CO₂ circulating fluid stream **70** by passage through the three heat exchangers (**450, 440,** and **430**) can be relatively proportional to the amount of heat withdrawn by the heat exchangers as described above.

In some embodiments, the invention may be characterized by the temperature difference of the streams exiting and entering the cold end of the heat exchanger (or the last heat exchanger in a series). Referring to **FIG. 8****,** this specifically may relate to the temperature difference of streams 60 and **70.** This temperature difference of the streams at the cold end of the heat exchanger (of the last heat exchanger in a series) specifically is greater than zero and may be in the range of about 2 °C to about 50 °C, about 3 °C to about 40 °C, about 4 °C to about 30 °C, or about 5 °C to about 20 °C.

In some embodiments, the pressurized CO₂ circulating fluid stream **70** can be passed directly through the three heat exchangers in series. For example, the pressurized CO₂ circulating fluid stream **70** (i.e., at a relatively low temperature) can pass through the third heat exchanger **450** to form stream **71** at an increased temperature, which can be passed directly through the second heat exchanger **440** to form stream **73** at an increased temperature, which can be passed directly through the first heat exchanger **430** to form the high temperature, pressurized CO₂ circulating fluid stream **236** that can be directed to the combustor **220.**

In particular embodiments, however, the present invention can be characterized by the use of an external heat source to further increase the temperature of the recycled CO₂ circulating fluid. For example, as illustrated in **FIG. 8****,** after passage of the pressurized CO₂ circulating fluid stream **70** through the third heat exchanger **450,** the formed stream **71,** instead of passing directly to the second heat exchanger **440** can be passed through a splitting component **460** that splits stream **71** into two streams **71b** and **72a.** Stream **71b** can be passed through the second heat exchanger **440** as otherwise described above. Stream **72a** can be passed through a side heater **470** that can be used to impart an additional amount of heat to the pressurized CO₂ circulating fluid stream **70** in addition to the heat imparted by the heat exchangers themselves.

The relative amounts of the pressurized CO₂ circulating fluid from the stream **71** that are directed to the second heat exchanger **440** and the side heater **470** can vary depending upon the working conditions of the system and the desired final temperature of the pressurized CO₂ circulating fluid stream for entry into the combustor **220.** In certain embodiments, the molar ratio of CO₂ in the stream **71b** directed to the second heat exchanger **440** and the stream **72a** directed to the side heater **470** can be about 1:2 to about 20:1 (i.e., about 1 mole of CO₂ in stream **71b** per 2 moles of CO₂ in stream **72a** to about 20 moles of CO₂ in stream **71b** per 1 mole of CO₂ in stream **72a).** In further embodiments, the molar ratio of CO₂ in the stream **71b** directed to the second heat exchanger **440** and the stream **72a** directed to the side heater **470** can be about 1:1 to about 20:1, about 2:1 to about 16:1, about 2:1 to about 12:1, about 2:1 to about 10:1, about 2:1 to about 8:1, or about 4:1 to about 6:1.

The side heater can comprise any apparatus useful for imparting heat to the CO₂ circulating fluid. In some embodiments, the energy (i.e., heat) provided by the side heater can be input into the system from an outside source. In particular embodiments according to the invention, however, the efficiency of the cycle can be increased by utilizing waste heat that is generated at one or more points in the cycle. For example, production of O₂ for input into the combustor can produce heat. Known air separation units can generate heat as a by-product of the separation process. Moreover, it can be useful for the O₂ to be provided at an increased pressure, such as described above, and such pressurization of the gas can also generate heat as a by-product. For example, O₂ may be produced by the operation of a cryogenic air separation process in which the oxygen is pressurized in the process by pumping liquid oxygen that is efficiently heated to ambient temperature conserving refrigeration. Such a cryogenic pumped oxygen plant can have two air compressors, both of which can be operated adiabatically with no inter-stage cooling so that the hot, pressurized air can be cooled down to a temperature that is close to and/or greater than the temperature of the stream that is heated by the external source (e.g., stream **72a** in **FIG. 8**). In known art settings, such heat is unutilized or can actually be a drain on the system as secondary cooling systems are required to eliminate the by-product heat. In the present invention, however, a coolant may be used to withdraw the generated heat from the air separation process and provide the heat to the side heater illustrated in **FIG. 8****.** In other embodiments, the side heater could itself be the air separation unit (or an associated device), and the CO₂ circulating fluid (e.g., stream **72a** in **FIG. 8**) could itself be directly circulated through a coolant system on or associated with the air separation unit to withdraw the heat generated in the air separation process. More specifically, the added heat can be obtained by operating the CO₂ compressor adiabatically and removing the heat of compression in after-coolers against a circulating heat transfer fluid which transfers the heat of compression to heat part of the high pressure CO₂ circulating fluid or by direct heat transfer to the high pressure recycled CO₂ circulating fluid stream (e.g., stream **72a** in **FIG. 8**)**.** Further, the addition of such heat is not necessarily limited to the position described in relation to **FIG. 8** but could be input to the cycle at any point after separation of the secondary components from the CO₂ circulating fluid (but preferably before passage of the CO₂ circulating fluid through the heat exchanger directly upstream from the input into the combustor). Of course, any similar method of utilizing waste generated in the power production cycle also would be encompassed by the present disclosure, such as using a supply of steam at a suitable condensing temperature or the hot exhaust gas from a conventional open cycle gas turbine.

The amount of heat imparted by the side heater **470** can vary depending upon the materials and apparatuses used as well as the ultimate temperature to be achieved for the CO₂ circulating fluid stream **236** for entry into the combustor **220.** In some embodiments, the side heater **470** effectively increases the temperature of the stream **72a** by at least about 10 °C, at least about 20 °C, at least about 30 °C, at least about 40 °C, at least about 50 °C, at least about 60 °C, at least about 70 °C, at least about 80 °C, at least about 90 °C, or at least about 100 °C. In other embodiments, the side heater **470** effectively increases the temperature of the stream **72a** by about 10 °C to about 200 °C, about 50 °C to about 175 °C, or about 75 °C to about 150 °C. In specific embodiments, the side heater **470** increases the temperature of stream **72a** to within at least about 15 °C, within at least about 12 °C, within at least about 10 °C, within at least about 7 °C, or within at least about 5 °C of the temperature of stream **73** leaving heat exchanger **440.**

By this addition of a further heat source, stream **71** leaving the third heat exchanger **450** can be superheated beyond the ability of the available heat in the second heat exchanger **440** to heat stream **71** if the entire amount of CO₂ in the stream was directed through the second heat exchanger **440.** By splitting the stream, the heat available in the second heat exchanger **440** can be fully imparted to the partial content of CO₂ circulating fluid in stream **71b** while the heat available from the side heater **470** can be fully imparted to the partial content of the CO₂ circulating fluid in stream **72a.** Thus, it can be seen that the temperature of the combined streams entering the first heat exchanger **430** when the alternative splitting method is utilized can be greater than the temperature of stream **73** exiting the second heat exchanger **440** if the full amount of the CO₂ circulating fluid in stream **71** is directed to the second heat exchanger **440** instead of being split and separately heated, as described above. In some embodiments, the increased heat gained by the splitting method can be significant enough to limit whether or not the CO₂ circulating fluid stream **236** is sufficiently heated prior to entering the combustor.

As seen in **FIG. 8****,** stream **71b** leaving the splitter **460** is passed through the second heat exchanger **440** to form stream **73,** which is directed to the mixer **480** that combines stream **73** with stream **72b** discharged from the side heater **470.** The combined stream **74** is then passed through the first heat exchanger **430** to heat the CO₂ circulating fluid to a temperature that is substantially close to the temperature of the turbine discharge stream when entering the first heat exchanger **430.** This closeness in temperatures of the fluid streams at the hot end of the first heat exchanger can apply to further embodiments of the invention where less than three or more than three heat exchangers are used and can apply to the first heat exchanger through which the CO₂ circulating fluid is passed after discharge from the turbines. The ability to achieve this closeness in temperature of the fluid streams at the hot end of the first heat exchanger can be a key characteristic of the invention for attaining desired efficiency levels. In certain embodiments, the difference between the temperature of the turbine discharge stream entering the first heat exchanger in line from the turbines (i.e., after expanding in the turbines) and the temperature of the CO₂ circulating fluid stream leaving the heat exchanger for recycling into the combustor can be less than about 80 °C, less than about 75 °C, less than about 70 °C, less than about 65 °C, less than about 60 °C, less than about 55 °C, less than about 50 °C, less than about 45 °C, less than about 40 °C, less than about 35 °C, less than about 30 °C, less than about 25 °C, less than about 20 °C, or less than about 15 °C.

As can be seen from the foregoing, the efficiency of the systems and methods of the present invention can be greatly facilitated by precise control of the temperature difference at the hot end of heat exchanger **420** (or the first heat exchanger **430** in the series illustrated in **FIG. 8**) between the turbine discharge stream **50** and the recycled CO₂ circulating fluid stream **236.** In preferred embodiments, this temperature difference is less than 50 °C. Although not wishing to be bound by theory, it has been found according to the present invention that heat available for heating the recycled CO₂ circulating fluid (e.g., heat withdrawn from the turbine discharge stream in the one or more heat exchangers) can be inadequate for sufficiently heating the total stream of recycled CO₂ circulating fluid. The present invention has realized that this can be overcome by dividing stream **71** so that stream **71b** enters the heat exchanger **440** and stream **72a** enters the external heat source **470** that provides the additional, external source of heat that raises the temperature of stream **72b** leaving external heat source **470** to be substantially close to the temperature of stream **73** leaving the heat exchanger **440,** as already described above. Streams **72b** and **73** then combine to form stream **74.** The flow-rate of stream **71b** (and also stream **72a**) can be controlled by the temperature difference at the cold end of heat exchanger **440.** The amount of external heat required to overcome the heat inadequacy described above can be minimized by making the temperature of stream **56** as low as possible and then minimizing the cold end temperature difference of heat exchanger **440.** The water vapor present in stream **56** arising from the combustion products reaches its dew point at a temperature that depends on the composition of the stream **56** and its pressure. Below this temperature the condensation of water greatly increases the effective mCp of stream **56** to stream **60** and provides all the heat required to heat the total recycle stream **70** to stream **71.** The temperature of stream **56** leaving heat exchanger **440** preferably can be within about 5 °C of the dew point of stream **56.** The temperature difference at the cold end of heat exchanger **440** between streams **56** and **71** preferably can be at least about 3 °C, at least about 6 °C, at least about 9 °C, at least about 12 °C, at least about 15 °C, at least about 18 °C, or at least about 20 °C.

Returning to **FIG. 5****,** the CO₂ circulating fluid **236** can be preheated prior to being recycled into the combustor **220,** such as described in relation to the at least one heat exchanger **420,** which receives the hot turbine discharge stream **50** after passage through the expansion turbines **320.** To maximize the efficiency of the cycle, it can be useful to operate the expansion turbines **320** at as high an inlet temperature as possible consistent with the available materials of construction of the hot gas inlet path and the highly stressed turbine blades, as well as the maximum temperature allowable in the heat exchanger **420** consistent with the system operating pressures. The hot inlet path of the turbine inlet stream and the first rows of turbine blades can be cooled by any useful means. In some embodiments, efficiency can be maximized by using part of the high pressure, recycle CO₂ circulating fluid. Specifically, the lower temperature CO₂ circulating fluid (e.g., in the range of about 50 °C to about 200 °C) can be withdrawn from the cycle before the cold end of the heat exchanger **420** or from an intermediate point in the heat exchanger **420** when a series of multiple heat exchanger units is utilized (e.g., from streams **71, 72a, 71b, 72b, 73,** or **74** in **FIG. 8**). The blade cooling fluid can be discharged from holes in the turbine blade and be input directly into the turbine flow.

Operation of a high efficiency burner, such as the transpiration cooled combustor described herein, can produce a combustion gas which is an oxidizing gas with excess oxygen concentration (such as in the range of about 0.1% to about 5% molar). Alternately, the combustor can produce a combustion gas which is a reducing gas with certain concentrations of one or more of H₂, CO, CH₄, H₂S, and NH₃. This is particularly beneficial according to the invention to use a series of turbine units (e.g., 2, 3, or more units). Beneficially, all of the units can operate
with the same inlet temperature, and this allows for maximizing power output for a given first turbine feed pressure and overall pressure ratio.

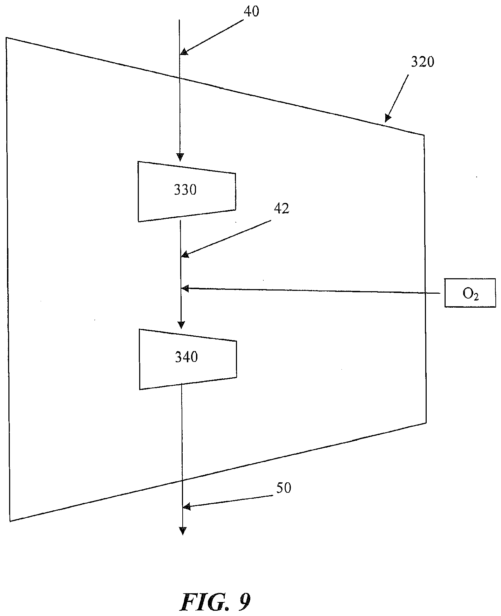

One example of a turbine unit **320** utilizing two turbines **330, 340** operated in series in the reducing mode is shown in **FIG. 9****.** As seen therein, the combustion product stream **40** is directed to the first turbine **330.** In such embodiments, the combustion product stream **40** is designed (e.g., through control of the fuel used, the amount of O₂ used, and the operating conditions of the combustor) to be a reducing gas with one or more combustible components therein, as described above. The combustion product stream **40** is expanded across the first turbine **330** to produce power (such as in association with an electric generator, not shown in this illustration) and form a first discharge stream **42.** Prior to introduction into the second turbine **340,** a predetermined amount of O₂ can be added to the first turbine discharge stream **42** to combust the flammable components present in the first turbine discharge stream **42.** This leaves excess oxygen while raising the inlet temperature at the second turbine unit **340** to substantially the same value as the inlet temperature for the first turbine unit **330.** For example, the temperature of the discharge stream **42** from the first turbine unit **330** may be in the range of about 500 °C to about 1,000 °C. When in the reducing mode, the addition of the O₂ to the discharge stream **42** at this temperature can cause the gas in the stream to be heated by combustion of the excess fuel gas to a temperature in the range of about 700 °C to about 1,600 °C, which is substantially the same temperature range as combustion product stream **40** exiting the combustion chamber **220** prior to entering the first turbine unit **330.** In other words, the operating temperature at the inlet of each of the two turbines is substantially the same. In specific embodiments, the operating temperature at the inlet of the turbines differs by no more than about 10%, no more than about 9%, no more than about 8%, no more than about 7%, or no more than about 6%, no more than about 5%, no more than about 4%, no more than about 3%, no more than about 2%, or no more than about 1%. Similar re-heat steps for further turbine units also could be accomplished to the extent residual fuel remains. Combustion can be enhanced by the use of a suitable catalyst in the oxygen fed combustion space, if required. The advantages of such systems and methods according to the present disclosure utilizing a plurality of turbines and, optionally, a plurality of combustors are even further discussed below. In certain embodiment, a power cycle as described herein can be used to retrofit existing power stations, such as by introducing a high temperature, high pressure heating fluid (e.g.,, the turbine discharge stream described herein) into the steam superheating cycle of a conventional Rankine cycle power station. This could be a coal fired or a nuclear power station with a boiling water reactor (BWR) or pressurized water reactor (PWR) heat cycle. This effectively increases the efficiency and power output of the steam Rankine power station by superheating the steam to a far higher temperature than the maximum temperature of superheated steam produced in the existing system. In the case of a pulverized coal fired boiler, the steam temperatures are currently up to a maximum of about 600 °C while the steam conditions in a nuclear power station are generally up to about 320 °C. Using the superheating possible with the heat exchange in the present inventive systems and methods, the steam temperature can be raised to over 700 °C. This leads to direct conversion of heat energy to extra shaft power since the additional fuel burned to superheat the steam is converted to extra power in the steam based power station without increasing the quantity of steam condensed. This may be accomplished by providing a secondary heat exchange unit. For example, the turbine discharge stream descried in relation to the present, inventive methods and systems could be directed through the secondary heat exchange unit prior to passage through the primary heat exchange unit, as otherwise described herein. The heat obtained in the secondary heat exchange unit could be used to superheat the steam from the boiler, as described above. The superheated steam could be directed to one or more turbines to generate power. The turbine discharge stream, after passage through the secondary heat exchange unit, could then be directed to the primary heat exchange unit, as otherwise described herein. Such system and method is described in Example 2 and illustrated in **FIG. 12****.** In addition, it is possible to take low pressure steam from the inlet of the final steam turbine and use this for heating part of the recycled CO₂ circulating fluid, as described above. In specific embodiments, condensate from the steam power station can be heated to an intermediate temperature prior to de-aeration using the CO₂ circulating fluid stream, which leaves the cold end of the heat exchanger unit (for example, at a temperature about 80 °C in some embodiments). This heating normally uses bleed steam taken from the inlet to the final LP steam turbine stage so the net effect on the steam power station efficiency of the deficit for the present side-stream heating is compensated by the preheating of condensate, which conserves bleed steam.

The above-described general method for power production (i.e., a power cycle) can be implemented according to the invention using a suitable power production system as described herein. Generally, a power production system according to the invention may comprise any of the components described herein in relation to the power production method. For example, a power production system may comprise a combustor for combusting a carbon containing fuel in the presence of O₂ and a CO₂ circulating fluid. Specifically, the combustor may be a transpiration cooled combustor, as described herein; however, other combustors capable of operating under the conditions otherwise described herein also could be used. The combustor specifically may be characterized in relation to the combustion conditions under which it operates, as well as specific components of the combustor itself. In some embodiments, the system may comprise one or more injectors for providing the carbon containing fuel (and optionally a fluidizing medium) the O₂, and the CO₂ circulating fluid. The system may include components for liquid slag removal. The combustor may produce a fuel gas at a temperature at which solid ash particles can be effectively filtered from the gas, and the gas can be mixed with quench CO₂ and be burned in a second combustor. The combustor can include at last one combustion stage that combusts the carbon containing fuel in the presence of the CO₂ circulating fluid to provide a combustion product stream comprising CO₂ at a pressure and temperature as described herein.

The system further comprises a series of power production turbines in fluid communication with the combustor. The turbines can have an inlet for receiving the combustion product stream and an outlet for release of a turbine discharge stream comprising CO₂. Power can be produced as the fluid stream expands, the turbines being designed to maintain the fluid stream at a desired pressure ratio (Iₚ/Oₚ), as described herein.

The system further can comprise at least one heat exchanger in fluid communication with the turbines for receiving the turbine discharge stream and cooling the stream to form a cooled CO₂ circulating fluid stream. Likewise, the at least one heat exchanger can be used for heating the CO₂ circulating fluid that is input into the combustor. The heat exchanger(s) specifically may be characterized in relation to the materials from which it is constructed that allows for operation under specific conditions as described herein.

The system also can comprise one or more devices for separating the CO₂ circulating fluid stream exiting the heat exchanger into CO₂ and one or more further components for recovery or disposal. Specifically, the system may comprise means for separating water (or other impurities described herein) from the CO₂ circulating fluid stream.

The system further can comprise one or more devices (e.g., compressors) in fluid communication with the at least one heat exchanger (and/or in fluid communication with one or more of the separation devices) for compressing the purified CO₂ circulating fluid. Moreover, the system can comprise means for separating the CO₂ circulating fluid into two streams, one stream for passage through the heat exchanger and into the combustor and a second stream for delivery into a pressurized pipeline (or other means for sequestration and/or disposal of the CO₂).

In some embodiments, even further components may be included in the system. For example, the system may comprise an O₂ separation unit for delivery of O₂ into the combustor (or into an injector or similar device for mixing the O₂ with one or more further materials). In some embodiments, the air separation unit may generate heat. Thus, it can be useful for the system to further comprise one or more heat transfer components that transfers heat from the air separation unit to the CO₂ circulating fluid stream upstream from the combustor. In further embodiments, a system according to the invention may comprise any and all of the components otherwise described herein in relation the power generation cycle and the methods of generating power.

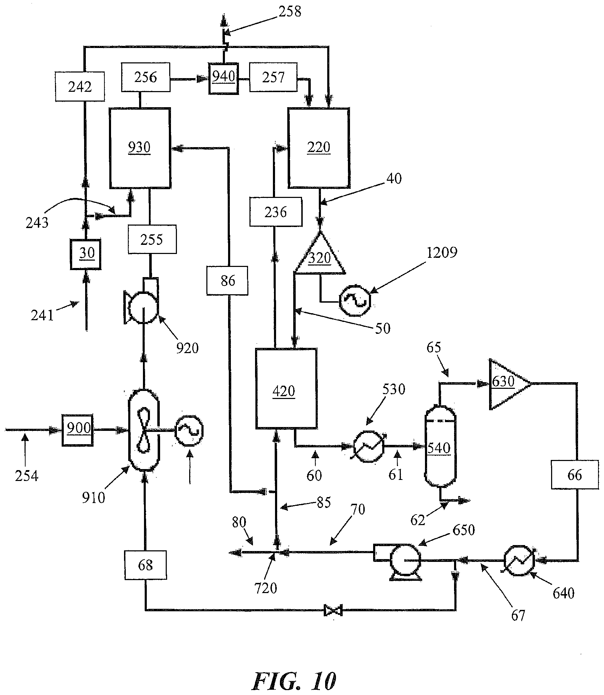

In further embodiments, the invention encompasses systems and methods particularly useful in power production using a fuel (such as coal) that leaves an incombustible residue on combustion. In certain embodiments, such incombustible materials can be removed from the combustion product stream through use of an appropriate device, such as a contaminant removal apparatus illustrated in **FIG. 4****.** In other embodiments, however, it can be useful to manage incombustible materials though use of a multi-combustor system and method, such as illustrated in **FIG. 10****.**

As shown in **FIG. 10****,** the coal fuel **254** can be passed through a mill apparatus **900** to provide a powdered coal. In other embodiments, the coal fuel **254** could be provided in a particularized condition. In specific embodiments, the coal may have an average particle size of about 10 µm to about 500 µm, about 25 µm to about 400 µm, or about 50 µm to about 200 µm. In other embodiments, the coal may be described in that greater than 50%, 60%, 70%, 80%, 90%, 91%, 92%, 93%, 94%, 95%, 96%, 97%, 98%, 99%, or 99.5% of the coal particles have an average size of less than about 500 µm, 450 µm, 400 µm, 350 µm, 300 µm, 250 µm, 200 µm, 150 µm, or 100 µm. The powdered coal can be mixed with a fluidizing substance to provide the coal in the form of a slurry. In **FIG. 10****,** the powdered coal is combined in the mixer **910** with a CO₂ side draw **68** from the recycled CO₂ circulating fluid. In **FIG. 10****,** the CO₂ side draw **68** is withdrawn from stream **67,** which has undergone processing to provide the CO₂ circulating fluid in a supercritical, high density state. In specific embodiments, the CO₂ used to form the coal slurry can have a density of about 450 kg/m³ to about 1,100 kg/m³. More particularly, the CO₂ side draw 68 may cooperate with the particulate coal to form a slurry **255** having, for example, between about 10 weight% and about 75 weight% or between about 25 weight % and about 55 weight % of the particulate coal. Moreover, the CO₂ from the side draw **68** used to form the slurry may be at a temperature of less than about 0 °C, less than about -10 °C, less than about -20 °C, or less than about -30 °C. In further embodiments, the CO₂ from the side draw **68** used to form the slurry may be at a temperature of about 0 °C to about -60 °C, about -10 °C to about -50 °C, or about -18 °C to about -40 °C.

The powdered coal/CO₂ slurry **255** is transferred from the mixer **910** via pump **920** to a partial oxidation combustor **930.** An O₂ stream is formed using an air separation unit **30** that separates air **241** into purified O₂, as described herein. The O₂ stream is split into O₂ stream **243,** which is directed to the partial oxidation combustor **930,** and O₂ stream **242,** which is directed to the combustor **220.** In the embodiment of **FIG. 10****,** a CO₂ stream **86** is withdrawn from the recycled CO₂ circulating fluid stream **85** for use in cooling the partial oxidation combustor **930.** In further embodiments, CO₂ for use in cooling the partial oxidation combustor **930** may be taken from stream **236** instead of stream **86** or, the CO₂ may be taken from both stream **86** and stream **236.** Preferably, the amount of CO₂ withdrawn is sufficient to cool the temperature of stream **256** such that ash is present in a solid form that can be safely removed. As otherwise described herein, the CO₂, coal, and O₂ are provided to the partial oxidation combustor **930** in ratios such that the coal is only partially oxidized to produce a partially oxidized combustion product stream **256** comprising CO₂ along with one or more of H₂, CO, CH₄, H₂S, and NH₃. The CO₂, coal, and O₂ also are introduced into the partial oxidation combustor **930** in necessary ratios such that the temperature of the partially oxidized combustion product stream **256** is sufficiently low that all of the ash present in the stream **256** is in the form of solid particles that can be easily removed by one or more cyclone separators and/or filters. The embodiment of **FIG. 10** illustrates ash removal via filter **940.** In specific embodiments, the temperature of the partially oxidized combustion stream **256** can be less than about 1,100 °C, less than about 1,000 °C, less than about 900 °C, less than about 800 °C, or less than about 700 °C. In further embodiments, the temperature of the partially oxidized combustion stream **256** can be about 300 °C to about 1,000 °C, about 400 °C to about 950 °C, or about 500 °C to about 900 °C.

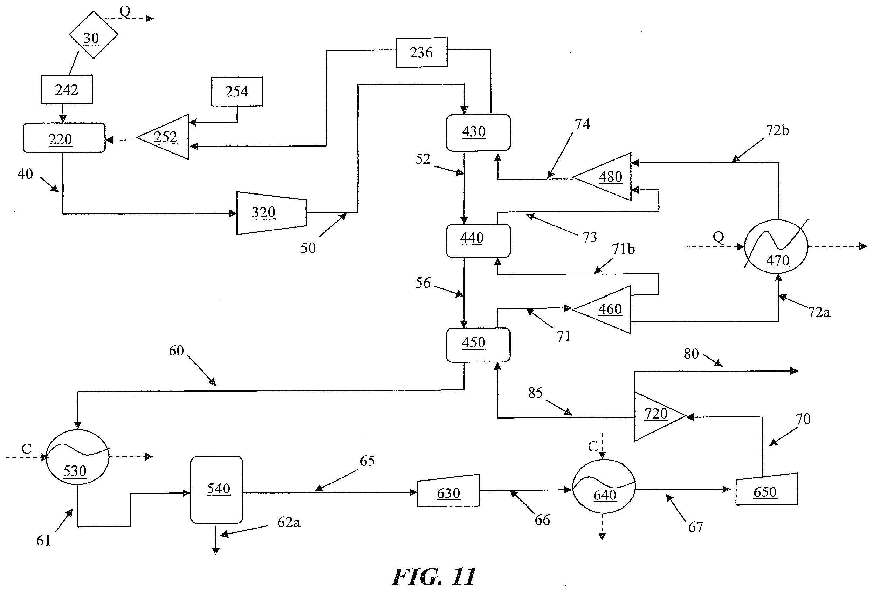

The filtered, partially oxidized combustion stream **257** can be directly input into the second combustor **220,** which can be a transpiration cooled combustor, as otherwise described herein. This input is provided along with the O₂ stream **242,** and the recycled CO₂ circulating fluid stream **236.** Combustion at this point can proceed similarly as otherwise described herein. The combustible materials in the partially oxidized combustion stream **256** are combusted in combustor **220** in the presence of O₂ and CO₂ to provide the combustion stream **40.** This stream is expanded across the turbines **320** to produce power (e.g., via generator **1209**)**.** The turbine discharge stream **50** is passed through a heat exchanger unit **420** (which may be a series of heat exchangers, such as described in relation to **FIG. 8**)**.** The CO₂ circulating fluid stream **60** is passed through the cold water heat exchanger **530** to form stream **61,** which is passed to separator **540** for removal of secondary components (e.g., H₂O, SO₂, SO₄, NO₂, NO₃, and Hg) in stream **62.** The separator **540** may be substantially similar to the column **1330** described in relation to **FIG. 12** below. Preferably, the separator **540** comprises a reactor that provides a contactor with sufficient residence times such that the impurities can react with water to form materials (e.g., acids) that are easily removed. The purified CO₂ circulating fluid stream **65** is passed through a first compressor **630** to form stream **66,** which is cooled with cold water heat exchanger **640** to provide the supercritical, high density CO₂ circulating fluid **67.** As described above, a portion of stream **67** can be withdrawn as stream **68** for use as the fluidizing medium in the mixer **910** to form the coal slurry stream **255.** The supercritical,
high density CO₂ circulating fluid stream **67** otherwise is further pressurized in compressor **650** to form the pressurized, supercritical, high density CO₂ circulating fluid stream **70.** A portion of the CO₂ in stream **70** may be withdrawn at point **720,** as described herein in relation to **FIG. 5** and **FIG. 11** to provide stream **80** to a CO₂ pipeline or other means of sequestration. The remaining portion of the CO₂ proceeds as pressurized, supercritical, high density CO₂ circulating fluid stream **85,** a portion of which may be withdrawn as stream **86** to use for cooling of the partial oxidation combustor 930, as described above. Otherwise, the stream **85** is passed back through the heat exchanger **420** (or series of heat exchangers, as described in relation to **FIG. 8**) to heat the stream and ultimately form the recycled CO₂ circulating fluid stream **236** for input to the combustor **220.** As described above, an external heat source may be used in combination with heat exchanger unit **420** to provide the necessary efficiency. Likewise, other system and method parameters as otherwise described herein can be applied to the system and method according to **FIG. 10****,** such as stream temperatures and pressures, as well as other operating conditions for the turbine unit **320,** the heat exchanger unit **420,** the separation unit **520,** and the compressor unit **630.**

The foregoing disclosure has pointed to several elements of the presently disclosed systems and methods that can provide unexpected increases in efficiency that have not been heretofore disclosed in the art. Surprisingly, the present invention is even further beneficial in that significant additional gains can be achieved through utilization of directed temperature and/or pressure drops at any point of a closed power production cycle as described herein utilizing a CO₂ working fluid. Specific combinations of expanders and combustors can be adapted for operation in series or parallel, can encompass a variety of conditions wherein heating of a fluid in the combustor and/or cooling of the fluid in the expander is optional, and can be positioned in one or more segments of the closed cycle to recover available energy in a manner that has not heretofore been recognized.

In particular embodiments, for example, systems and methods of the present disclosure can comprise a turbine system that is adapted to maximize power output for a given fixed high pressure recycle CO₂ flow and pressure by utilizing one or more further turbines. In specific embodiments, the one or more of the further turbines can take part or all of the discharge flow from the first turbine. The flow from the first turbine optionally can be reheated using a second oxy-fuel combustor, and the re-heated flow can then be expanded to near atmospheric pressure through the one or more further turbines. The flow from the one or more further expanders can be used to provide at least part of the total cooling flow used for heating the recycle high pressure CO₂ stream.

The inlet pressure of the second turbine (or subsequent turbines in a series) can be defined by the discharge pressure of the first turbine (or the immediate upstream turbine in a series) minus the pressure drop through piping and any interposing combustor between turbines. Further, the discharge temperature of the second turbine (or subsequent turbines in a series) can be defined by the maximum design temperature of the recuperative heat exchanger at the pressure that is defined by the pressure of the inlet stream of the highest pressure turbine.

In one embodiment, two turbines may be used and the entire flow from the first turbine can be reheated and mixed with the combustion products of a hydrocarbon and/or carbonaceous gaseous fuel with pure oxygen in a second, interposing, combustor and then expanded in a second turbine producing additional shaft power. Since the outlet temperature of the second turbine is fixed by the design conditions of the recuperative heat exchanger, the inlet temperature of the second turbine is similarly fixed once the second turbine outlet pressure is determined.

In some embodiments, one or more of the turbines used in the disclosed systems and methods may be adapted to provide mechanical energy from turbine shaft power (i.e., rather than producing electrical energy). One or more turbines may thus be in a mechanical working connection with one or more further component of the present systems and methods (e.g., a compressor, a pump, an air separation unit). For example, a plurality of turbines may be in mechanical connection with a master gear box or the like, which can be in mechanical connection with one or more further components, including a generator. In another example, a plurality of turbines may each separately be in mechanical connection with a single component utilizing the shaft power from the turbine. In other embodiments, the mechanical working connection can be utilized in combination with a further system or method. In particular, any industrial system or method benefitting from the provision of power from mechanical rotation may be combined with the presently disclosed systems and methods.

In further embodiments, the power output of the second turbine (or a further turbine when three or more turbines are used) can be maximized through operation such that the discharge pressure of the turbine is close to atmospheric pressure. Specifically, this can allow for pressure drop through the recuperative heat exchanger, the ambient cooler, and the liquid water separator components of the overall power production cycle. The pressure preferably may be above 0.9 bar (0.09 MPa) to avoid large volumetric flow rates in the recycle CO₂ compressor.

In some embodiments, a single, multi-stage turbine may be used according to the present disclosure. In other embodiments, a plurality of single stage turbines may be used.

The fixed outlet temperature of the second turbine can leads to an inlet temperature defined by the first turbine outlet pressure and the second turbine pressure ratio. In general it has been found that the first turbine inlet temperature can now be fixed at the highest possible value consistent with design, material, and life considerations which means that the first turbine power output can be considerably increased compared to a single turbine case. The reason for this is that since all the first turbine outlet flow now enters the second turbine, there is now no longer a temperature constraint on the first turbine outlet temperature caused by design considerations for the recuperative heat exchanger because the first turbine outlet flow no longer passes through the recuperative heat exchanger. The second turbine inlet temperature can be higher than the first turbine discharge temperature arising from the second oxy-fuel combustor that heats by direct combustion the second turbine inlet flow in the case of full first temperature flow into the second turbine. The recycle CO₂ inlet temperature to the first combustor and the second turbine outlet temperature are virtually identical for the single and two turbine cases as defined with all of the first turbine discharge flow entering the second turbine. The power output of the first turbine is however considerably increased by increasing the inlet temperature with the oxy-fuel combustion of more gaseous fuel in the first combustor. The value of the additional fuel burned in the two turbine case is converted to shaft power at near 100% efficiency. This leads to a significant increase in total power output and efficiency for the two turbine system compared to a single turbine system. The increment in the installed equipment and cost of the two turbine system is basically to take the single turbine case and add the second turbine and combustor plus the additional recycle compressor to increase the pressure from near atmospheric to the cooled turbine outlet pressure of the single turbine case. This is not a large increment of cost compared to the increase in power output which is up to 280%. Using representative real process design numbers for a system, the efficiency using natural gas fuel is in the range 58.5% to 62% at (lower heating value basis) at ISO Conditions with all CO₂ produced at atmospheric pressure. Compression of the CO₂ net product to 300 bar (30 MPa) will reduce these efficiencies by approximately 1.8 percentage points depending mainly on compressor and turbine efficiencies.

The additional fuel and oxygen used in the second combustor adds to the second turbine flow and results in a small additional turbine exhaust flow available for other heating duties once the amount of turbine flow required to heat the high pressure recycle CO₂ has been used in the recuperative heat exchanger. This additional small flow is typically in the range 4% to 8% of the total second turbine flow when all first turbine flow passes to the second turbine. This flow at turbine discharge temperature can be used to preheat the fuel used in the two turbines and the oxidant used in the second combustor. Note that the oxidant used in the first combustor is generally diluted with CO₂ and heated in the recuperative heat exchanger.

The two turbine system can use low temperature level heat to contribute to the heating of the high pressure CO₂ recycle stream derived typically from adiabatic compression of at least part of the air feed to the cryogenic air separation plant, although other heat sources also are encompassed. In some embodiments, part of the heat energy present in the excess second turbine discharge flow may be used to provide at least part of this low temperature level recycle CO₂ heating duty. The operation of the second turbine at a discharge pressure near atmospheric means that a portion of oxygen required for the first combustor can be produced from the oxygen plant at near atmospheric pressure. It can then be mixed with recycle CO₂ at approximately atmospheric pressure following liquid water separation giving a composition of from 15% to 40% molar O₂, which is then compressed to the discharge pressure of the CO₂ high pressure recycle stream with an increment of pressure equivalent to the pressure drop through the first combustor burner system. This can provide an alternative to production of oxygen from the air separation plant at the higher pressures required for the combustors.

In some embodiments, the flow in the second turbine can be limited to the quantity with a CO₂ content which is equal to the oxidized carbon present in the fuel used in the first and second combustors. In this case the entire second expander discharge flow at near atmospheric pressure can be passed through a separate set of passages in the recuperative heat exchanger. It can be discharged to the atmosphere after leaving the cold end of the recuperative heat exchanger. If the net CO₂ product is to be recovered for disposal, it can be compressed to the suction pressure of the high pressure recycle CO₂ compressor and produced at any pressure from that point up to the recycle pressure entering the recuperative heat exchanger for delivery to a pipeline system for disposal.

In some embodiments of a two turbine system, the entire first turbine flow can pass through the second turbine, which has a near atmospheric discharge pressure. Such embodiments may be integrated with a pressurized liquid natural gas heating facility used for delivery of natural gas from an LNG receiving terminal into a high pressure natural gas pipeline system. Such a system using a single turbine is described in co-pending U.S. Patent Application No. 13/666,522. In such embodiments, the near atmospheric pressure CO₂ from the second turbine, following liquid water separation, can be compressed to a pressure in the range about 6 bar (0.6 MPa) to about 10 bar (1 MPa), which is above the CO₂ freezing pressure of 5.18 bar (0.518 MPa). The CO₂ gas is then dried in a desiccant drier to a dewpoint below -56°C and passed into a liquefaction heat exchanger where it is liquefied against a stream of high pressure natural gas at inlet conditions typically having a pressure in the range of about 40 bar (4 MPa) to about 70 bar (7 MPa) and a temperature in the range of about -160°C to about -140 °C. The natural gas leaves the CO₂ liquefier at a temperature approach of about 10°C to about 20°C to the CO₂ inlet temperature. The liquefied CO₂ is pumped in a multi-stage centrifugal pump to the required CO₂ recycle pressure. The net CO₂ product can be produced from the plant as liquid CO₂ at approximately 6 bar (6 MPa) to 10 bar (1 MPa) pressure. This liquid CO₂
can easily be shipped for disposal or use for enhanced oil recovery. Such use is described in U.S. Patent Publication No. 2012/0067568 to Palmer et al. In the case of its use for enhanced oil recovery the O₂ and inert gas content can be adjust to fall into the parts per million range to meet required purity specifications. A particular variant of this system is to operate the second turbine with a discharge pressure in the range of about 6.5 bar (0.65 MPa) to about 10.5 bar (1.05 MPa) so that no CO₂ compressor is required following cooling in the recuperative heat exchanger, ambient cooler and water separation. The inlet temperature of the second turbine will be reduced due to the lower pressure ratio. Both of these embodiments can provide very high efficiencies due to the large reduction in CO₂ compression power and the saving in natural gas which would normally be consumed in a submerged combustion water bath heater for raising the high pressure cold natural gas temperature to near ambient for pipeline transportation.

### EXPERIMENTAL

The invention is further described below in relation to specific examples. The examples are provided to illustrate certain embodiments of the invention and should not be construed as limiting of the invention.

### EXAMPLE 1

### System and Method for Power Production with Methane Combustion Using a Recycled CO₂ Circulating Fluid

One background example for carrying out a system and method according to the present invention is illustrated in **FIG. 11****.** The following description describes the system in relation to a specific cycle under specific conditions using computer modeling.

In this model, a methane (CH4) fuel stream **254** at a temperature of 134 °C and a pressure of 30.5 MPa is combined with a recycled CO₂ circulating fluid stream **236** at a temperature of 860 °C and a pressure of 30.3 MPa (and thus in a supercritical fluid state) in a mixer **252** prior to introduction into a transpiration cooled combustor **220.** An air separation unit **30** is used to provide concentrated O₂ **242** at a temperature of 105 °C and a pressure of 30.5 MPa. The air separation unit also produces heat (**Q**) that is drawn off for use in the process. The O₂ **242** is combined in the combustor **220** with the methane fuel stream **254** and the CO₂ circulating fluid **236** where combustion occurs to provide combustion product stream **40** at a temperature of 1189 °C and a pressure of 30 MPa. The CO₂, O₂, and methane are provided in a molar ratio of about 35:2:1 (i.e., lbmol/hr - pound moles per hour). Combustion in this embodiment uses energy input at a rate of 344,935 Btu/hr (363,932 kJ/hr).

The combustion product stream **40** is expanded across the turbine **320** to produce the turbine discharge stream **50** at a temperature of 885 °C and a pressure of 5 MPa (the CO₂ in the turbine discharge stream **50** being in a gaseous state). Expansion of the combustion product stream **40** across the turbine **320** produces power at a rate of 83.5 kilowatts per hour (kW/hr).

The turbine discharge stream **50** is then passed through a series of three heat exchangers to successively cool the stream for removal of secondary components. Passage through the first heat exchanger **430** produces stream **52** at a temperature of 237 °C and a pressure of 5 MPa. Stream **52** is passed through the second heat exchanger **440** to produce stream **56** at a temperature of 123 °C and a pressure of 5 MPa. Stream **56** is passed through the third heat exchanger **450** to produce stream **60** at a temperature of 80 °C and a pressure of 5 MPa.

After passage of the recycle CO₂ circulating fluid through the series of heat exchangers, the stream **60** is even further cooled by passage through a cold water heat exchanger **530.** Water (**C**) at a temperature of 24 °C is cycled through the cold water heat exchanger **530** to cool the CO₂ circulating fluid stream **60** to a temperature of 27 °C and thus condense any water present in the CO₂ circulating fluid stream. The cooled CO₂ circulating fluid stream **61** is then passed through a water separation unit **540** such that liquid water is removed and discharged as stream **62a.** The "dried" CO₂ circulating fluid stream **65** is discharged from the water separation unit **540** at a temperature of 34 °C and a pressure of 3 MPa.

The dry CO₂ circulating fluid stream **65** (which is still in a gaseous state) is next passed through a first compression unit **630** in a two step pressurization scheme. The CO₂ circulating fluid stream is pressurized to 8 MPa, which likewise raises the temperature of the CO₂ circulating fluid stream to 78 °C. This requires a power input of 5.22 kW/hr. This supercritical fluid CO₂ circulating fluid stream **66** is then passed through a second cold water heat exchanger **640** where the supercritical fluid CO₂ circulating fluid stream **66** is cooled with water at a temperature of 24 °C to produce a cooled supercritical fluid CO₂ circulating fluid stream **67** at a temperature of 27 °C, a pressure of 8 MPa, and a density of 762 kg/m³. This stream is then passed through a second compression unit **650** to form the pressurized CO₂ circulating fluid stream **70** at a temperature of 69 °C and a pressure of 30.5 MPa. This requires a power input of 8.23 kW/hr. This stream is passed through a pipeline splitter **720** whereby 1 lbmol of CO₂ is directed to a pressurized pipeline via stream **80,** and 34.1 lbmol of CO₂ is directed as stream **85** back through the series of three heat exchangers to re-heat the CO₂ circulating fluid stream prior to entry into the combustor **220.**

The pressurized CO₂ circulating fluid stream **85** is passed through the third heat exchanger **450** to form stream **71** at a temperature of 114 °C and a pressure of 30.5 MPa. Stream **71** is passed through splitter **460** such that 27.3 lbmol of CO₂ is directed as stream **71b** to the second heat exchanger **440,** and 6.8 lbmol of CO₂ is directed in stream **72a** through a side heater **470.** Stream **71b** and stream **72a** each have a temperature of 114 °C at a pressure of 30.5 MPa. The side heater **470** uses heat (**Q**) from the air separator unit **30** to provide additional heat to the CO₂ circulating fluid stream. Passage of stream **71b** through the second heat exchanger **440** produces stream 73 at a temperature of 224 °C and a pressure of 30.5 MPa. Passage of stream **72a** through the side heater **470** forms stream **72b** which likewise is at a temperature of 224 °C and a pressure of 30.4 MPa. Streams **73** and **72b** are combined in the mixer **480** to form stream **74** at a temperature of 224 °C and a pressure of 30.3 MPa. Stream **74** is then passed through the first heat exchanger **430** to provide the recycled CO₂ circulating fluid stream **236** at a temperature of 860 °C and a pressure of 30.0 MPa for inlet back into the combustor **220.**

Efficiency for the foregoing, modeled cycle was calculated based on the energy generated in comparison to the LHV of the methane fuel and the additional energy input into the system, as described above. Under the modeled conditions, an efficiency of approximately 53.9% was achieved. This is particularly surprising in that such an excellent efficiency can be achieved while simultaneously preventing atmospheric discharge of any CO₂ (particularly any CO₂ arising from combustion of the carbon containing fuel).

### EXAMPLE 2

### System and Method for Power Production with a Pulverized Coal Power Station Retrofit to Use a Recycled CO₂ Circulating Fluid

Another background example for carrying out a system and method according to the present invention is illustrated in **FIG. 12****.** The following description describes the system in relation to a specific cycle under specific conditions using mathematical modeling. This model illustrates the ability to retrofit a system and method as described herein to a conventional pulverized coal fired power station.

An O₂ stream **1056** at a pressure 30.5 MPa is introduced into a transpiration cooled combustor **220** along with a carbon containing fuel **1055** (e.g., coal-derived gas produced by partial oxidation) at a pressure of 30.5 MPa and a CO₂ circulating fluid stream **1053** at a pressure of 30.5 MPa. The O₂ may be received from an air separator or similar device that can produce heat (**Q**), which can be drawn off for use in the system, such as to produce steam for expansion or to add heat to a cooled CO₂ circulating fluid stream. Combustion of the fuel in the combustor **220** produces a combustion product stream **1054** at a temperature of 1,150 °C and a pressure of 30.0 MPa. This stream is expanded across a turbine **320** (which may generally be referred to as a primary power production turbine) to produce power by driving an electric generator **1209.** The expansion turbine discharge stream **1001** at a temperature of 775 °C and a pressure of about 3.0 MPa is introduced into the hot end of a heat exchanger **1100** where the heat from the turbine discharge stream **1001** is used to superheat the high pressure steam flow **1031** and the intermediate pressure steam flow **1032** produced in a conventional pulverized coal fired power station **1800.** Boiler feed water **1810** and coal **1810** are input to the power station **1800** to produce the steam flows **1031** and **1032** by combustion of the coal **1810.** The transfer of heat in the heat exchanger superheats the steam flows **1031** and **1032** from a temperature of about 550 °C to a temperature of about 750 °C to form the steam flows **1033** and **1034,** which are returned to the power station as described below. This method achieves very high steam temperatures without the need for expensive high temperature alloys to be used in the large steam boilers of a conventional power station burning coal at near atmospheric pressure. The steam flows **1033** and **1034** are expanded in a three stage turbine **1200** (which may generally be referred to as a secondary power production turbine) driving an electric generator **1210.** The steam **1035** exiting the turbine **1200** is condensed in a condenser **1220.** Treated condensate **1036** is pumped to high pressure in with a feed water pump **1230** and then is vaporized and superheated in the coal fired boiler **1800** for discharge into the heat exchanger **1100,** as described above. This system is used to increase the power output and efficiency of an existing coal fired power station.

The heat exchanger **100** is a Heatric type diffusion bonded plate heat exchanger with chemically milled passages typically constructed with a high temperature, high nickel content alloy, such as 617 alloy, which is capable of handling high pressures and temperatures allowing significant steam superheat and operation under oxidizing conditions. This heat exchanger is a high efficiency heat transfer unit with high heat transfer coefficients for all fluids.

The remaining portion of the system and method illustrated in FIG. 12 is similar in structure and operation to the systems and methods otherwise described herein. Specifically, the expansion turbine discharge stream **1001** is cooled in the heat exchanger **1100** and leaves the cool end of the heat exchanger **1100** as discharge stream **1037,** which is at a temperature of 575 °C. This stream **1037** is then passed through a second heat exchanger **1300** where it is cooled to a temperature of 90 °C and a pressure of 2.9 MPa to from stream **1038.** This stream is further cooled against a portion of the condensate **1057** from the power station condenser **1230** in a third heat exchanger **1310** to a temperature of 40 °C to form stream **1039,** which is further cooled to a temperature of 27 °C against cooling water in a cold water heat exchanger **1320** to form stream **1040** at a pressure of 2.87 MPa. The heat exchanger **1300** can be a Heatric 310 stainless steel diffusion bonded unit.

The cooled stream **1040** at 30 °C is fed into the base of a packed column **1330,** which is equipped with a circulation pump **1340** that provides a counter-current weak acid circulation stream giving counter-current contacting between the incoming gas and the scrubbing weak acid. The SO₂, SO₃, NO, and NO₂ are converted to HNO₃ and H₂SO₄ and absorbed in the liquid together with condensed water and any other water soluble components. The net liquid product from the column **1330** is removed in line **1042,** and the pressure is reduced to atmospheric pressure and enters a separator **1360.** Dissolved CO₂ flashes off in line **1043,** is compressed using a pump **1350** to a pressure of 2.85 MPa, and flows as stream **1044** to join with stream **1045** leaving the top of column **1330.** These combined streams form the CO₂ circulating fluid that will be recycled back into the combustor. Dilute H₂SO₄ and HNO₃ in water leaves as stream **1046** from the base of the separator **1360.** The concentrations depend on the fuel composition and the temperature in the contactor column **1330.** Note that nitric acid preferably is present in the acid stream **1046,** as nitric acid will react with any mercury present and remove this impurity completely.

The recycled CO₂ circulating fluid stream entering the compressor **1380** is first dried to a dew point of about -60 °C in a desiccant dryer and then purified to remove O₂, N₂, and Ar using a low temperature separation scheme, such as shown in European patent application EP1952874 A1.

The compressed, recycled CO₂ circulating fluid stream **1047** leaving compressor **1380** at a pressure of 8.5 MPa is cooled against cooling water at 27 °C in a cold water heat exchanger **1370** forming dense, supercritical CO₂ fluid stream **1048,** which is pumped to a pressure of 30.5 MPa and a temperature of 74 °C in the pump **1390** to form the high pressure, recycled CO₂ circulating fluid stream **1050.** A portion of the CO₂ is removed from the stream **1050** as a CO₂ product stream **1049** to be sequestered or otherwise disposed of without discharge to the atmosphere. In this embodiment, the CO₂ product stream **1049** is reduced in pressure to the required pipeline pressure of about 20 MPa and passed into a CO₂ pipeline.

The remaining portion of the high pressure, recycled CO₂ circulating fluid stream (now stream **1051)** enters the cold end of the heat exchanger **1300.** This stream, which is a dense supercritical fluid at 74 °C, must receive a considerable amount of low grade heat to convert it to a fluid with a much lower specific heat at a temperature of 237 °C. In this embodiment, such low grade heat is provided by an LP steam stream **1052** at a pressure of 0.65 MPa taken from the steam stream entering the low pressure steam turbine of the conventional power station together with adiabatic heat of compression derived from the air compressors in the cryogenic oxygen plant supplying the O₂ stream **1056.** The low pressure steam exits the heat exchanger **1300** as stream **1301.** Optionally, all of the heat can be provided by using a number of available steam streams from the coal fired power station at pressures up to 3.8 MPa. This energy also could be provided from the heat (**Q**) formed by the air separation unit, as described above. The side stream heating of part of the recycle CO₂ stream provides a large part of the heat required at the cold end of the heat exchanger **1300** and allows a small temperature difference of only about 25 °C at the hot end of the heat exchanger **1300,** which increases overall efficiency.

The high pressure, high temperature, recycled CO₂ circulating fluid stream **1053** leaves the heat exchanger **1300** at a temperature of 550 °C and enters the combustor **220,** where it is used to cool the combustion gases derived from combustion of a natural gas stream **1055** (in this embodiment) with the 97% molar oxygen stream **1056** to produce the combustion product stream **1054,** as described above. In this embodiment, the turbine hot path and the first rows of turbine blades are cooled using a CO₂ stream **1058** taken from the pump discharge stream **1050** at a temperature of 74 °C. If the system described above is operated as a stand alone power station with natural gas fuel simulated by pure CH₄, then the recycle CO₂ stream **1053** enters the combustor at a temperature of about 750 °C and the turbine exhaust **1001** enters the heat exchanger **1300** at a temperature of about 775 °C.

The efficiency of the stand alone power system in this embodiment is 53.9% (LHV). This figure includes the power consumption for the cryogenic O₂ plant and the natural gas feed and CO₂ compressors. If the fuel was a simulated coal with a heating value of 27.92 Mj/kg (e.g., partially oxidized with ash removed in a first combustor and filtration unit followed by the combustion of the fuel gas and CO₂ mixture in a second combustor), then the efficiency would be 54% (LHV). In both cases virtually 100% of the CO₂ derived from carbon in the fuel would be produced at 20 MPa pipeline pressure.

The system and method described above and illustrated in **FIG. 12** with coal fuel can be characterized as being applied to a power station with specific parameters described below. The effect of converting a pulverized coal fired power station according to the present invention is calculated as follows:

| | | | |
|---|---|---|---|
| Steam conditions | HP steam: | 16.6 MPa, 565 °C, | flow: 473 14 kg/sec |
| | LP steam: | 4.02 MPa, 565 °C, | flow: 371.62 kg/sec |
| | Net power output: | 493.7.Mw | |
| | Coal for existing station: | 1256.1 Mw | |
| | Efficiency (LHV) net: | 39.31% | |
| | CO₂ capture %: | 0 | |

Converted plant with existing station upgrade incorporating a present system and method:

| | |
|---|---|
| CO₂ power system net power output: | 371.7 Mw |
| Existing station net power: | 639.1 Mw |
| Total net power: | 1010.8Mw |
| Coal for CO₂ power system: | 1053.6 Mw |
| Coal for existing station: | 1256.1 Mw |
| Overall efficiency (LHV) net: | 43.76% |
| CO₂ capture %: | 45.6% * |

| | |
|---|---|
| *Note that no CO₂ is captured from the existing station in this example. | |

### EXAMPLE 3

### System and Method for Power Production with Methane Combustion Using a Recycled CO₂ Circulating Fluid with a Multiple Expansion Steps

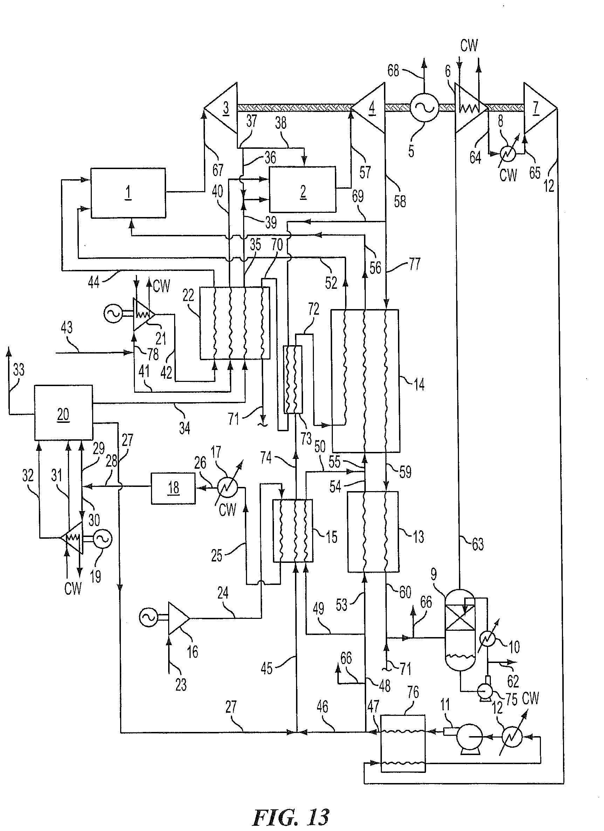

FIG. 13 shows a system and method according to the present disclosure comprising two turbines operating in series with two combustors that are burning natural gas using pure oxygen as oxidant to preheat the inlet streams to each of the turbines. The presence of the second expansion turbine significantly increases the pressure ratio of the total turbine system while retaining virtually the same heat duty of the recuperative heat exchanger. The illustrated embodiment further benefits from the efficiency increase provided by input of externally generated heat (as described herein) at a temperature level in the range of approximately 150 °C to 400 °C into the recycle high pressure CO₂ stream in the recuperative heat exchanger. The source of this additional heat is the adiabatic compression heat of the main air compressor in the cryogenic air separation plant.

The embodiment described in this example can be defined by the following advantages. Two turbines are used in series to expand a heated high pressure recycle CO₂ stream between a high pressure in the range of 100 bar to 600 bar over a pressure ratio which is greater than 20. Preferably, the discharge pressure of the second turbine is below 1.5 bar and optimally at about 1.1 bar. In other embodiments, such pressure drops may be achieved through the use of three or more turbines. The two turbines have inlet flows which are preheated by combustion of a hydrocarbon or carbonaceous fuel in pure oxygen. In other embodiments, combustion may not be required prior to each expansion step. The second turbine derives its inlet flow from at least part of the discharge flow from the first turbine together with combustion products from the preheating second combustor. The maximum outlet temperature of the second turbine is fixed by the maximum allowable temperature of the material used to construct the recuperative heat exchanger at its hot end and at the pressure of the high pressure recycle CO₂ stream which enters the combustor of the first turbine. When the total flow from the first turbine is used as the inlet flow to the second combustor then the inlet temperature of the first turbine can be as high as possible based on the properties of the materials used for its construction in order to maximize the power output of the first and second turbines. When the total flow from the first turbine is used as the inlet flow to the second combustor, the pressure ratio of the first turbine is fixed by the need to maximize the power output available from the first plus the second turbine at a given inlet pressure and recycle high pressure CO₂ temperature to the first combustor and a given outlet pressure and defined outlet temperature of the second turbine. Each inlet temperature and pressure for the first turbine leads to a different optimum pressure ratio for the first turbine once the inlet pressure of the first turbine and outlet pressure of the second turbine are defined. At least part of the outlet flow from the second turbine is used to provide at least part of the heat duty in the recuperative heat exchanger used to preheat the high pressure recycle CO₂ stream which enters the first combustor. Generally there is an excess of second turbine outlet flow above that required for passage through the recuperative heat exchanger to heat the high pressure recycle CO₂ and oxygen flows to the first combustor. This is used for at least part of the preheating of oxygen for the second combustor plus natural gas for the first and second combustors.

An exemplary embodiment of a power production system according to the present disclosure is shown in FIG. 13. It is understood that reference numerals in FIG. 13 relate only to elements illustrated in FIG. 13. The presence of like reference numerals in one or more of FIG. 1 to FIG. 12 is not intended to reference like elements.

The system of FIG. 13 comprises two turbines in series 3 and 4 which receive high temperature CO₂ rich fluid streams 67 and 57 and are mounted in this case on a common shaft driving an electrical generator 5 producing electric power output 68. The turbine 3 inlet flow stream 67 is at a pressure of 295 bar and a temperature of 1154°C. It has been heated in a combustor 1 by combustion of a natural gas stream 44 (simulated in this case by pure methane properties) at 204 °C and 304.4 bar using an oxidant stream 52 at 304.2 bar and 735 °C comprising 25.6 mol% O₂ and 74.4% CO₂, together with a recycle CO₂ stream 56 at 303.4 bar and 735 °C. The total recycle CO₂ plus CO₂ diluent in the CO₂+O₂ oxidant is 29.2 times greater than the CO₂ produced by complete oxidation of the CH₄ fuel. The exhaust stream 37 at 30 bar and 746°C leaving turbine 1 splits into two parts. Stream 36 mixes with an oxygen stream 35 at 30 bar and 316°C and provides a combined oxidant stream 39 which combusts a methane stream 40 at 30 bar and 204°C. The combustion products are quenched with the second part stream 38 giving a turbine 4 inlet stream 57 at 29.1 bar and 1269°C. Turbine outlet stream 58 at 1.1 bar and 738°C is cooled in the recuperative heat exchangers 14 and 13 leaving as stream 60. This stream together with a part of stream 58, stream 71, which has been used for preheating feed streams, is at 1.04 bar pressure and 79°C. It is cooled in a direct contact water cooler 9 to 17.2°C leaving as stream 63. The liquid water leaving the base of the packing used for direct contact between water and CO₂ collects in the base of 9 and is pumped by pump 75 through the water cooler 10 to the top of the tower 9. The net product water produced by the power cycle is removed as stream 62 for disposal. The outlet stream 63 is compressed in a multistage axial/centrifugal compressor system shown as two separate units 6 which is intercooled and 7 which has no intercoolers separated by an intercooler 8 with inlet and outlet streams 64 and 65 at a pressure of 30 bar. These two separate CO₂ recycle compressor elements are directly mounted on the common gas turbine plus electrical generator drive shaft. This provides a braking load on the turbines to prevent over-speed as the system runs down in pressure after a system trip-out. The compressor 7 outlet stream 12 at 57.5 bar and 93.3°C is used to heat the outlet from a pump 11 in heat exchanger 76 at 305 bar from 54.4°C to 73.9°C. The outlet 57.5 bar CO₂ stream is cooled to 60°C and further cooled and condensed in heat exchanger 12 forming a liquid CO₂ feed to pump 11. Heating the CO₂ inlet to the recuperative heat exchanger 13 ensures stream 60 is above its dew-point. Note that these temperatures and the corresponding CO₂ pressure 57.5 bar are relevant to ISO conditions for the system. At higher ambient temperatures the discharge pressure of compressor 7 would be fixed approximately in the range 57.5 bar up to 100 bar, but in all these cases the CO₂ would be at a high density appropriate for a multi-stage centrifugal pump 11. The pump 11 discharge flow 47 divides into two streams. Stream 46 mixes with an oxygen stream 27 at 305 bar and 15.5°C forming the oxidant stream 45 which is heated in the pre-heaters 15 and 73 to a temperature of 252°C and then heated in the recuperative heat exchanger 14 to form the high pressure oxidant stream 52. Stream 48 divides again into two streams. The major high pressure recycle CO₂ flow stream 53 is heated in 13 and 14 forming the heated recycle stream 52. The minor flow stream 49 bypasses the lower temperature recuperative heat exchanger 13 and is heated to 185°C stream 50 in heat exchanger 15 against the air stream 24, which has been adiabatically compressed in compressor 16 with inlet atmospheric air flow 23, to 5.7 bar and 226°C. Stream 50 re-joins heated CO₂ stream 54 and the combined stream 55 is further heated in 14 forming the heated recycle CO₂ stream 56. The cooled air feed stream 25 leaving 15 at 79.4°C is cooled in a direct contact water cooler 17 and passed through a thermal swing adsorber 18 which removes all water and CO₂. The bulk of the air stream 29 enters the cold box of a cryogenic air separation plant 20. The minor portion 30 enters a five stage, integrally geared air compressor 19 which produces two pressurized air streams 31 at 60 bar and 32 at 100 bar which also enter the cold box and are used for heating the product oxygen streams 34 at 30 bar and 27 at 305 bar to near ambient temperature. The second turbine discharge stream 58 divides into two parts. The major portion 77 is required for preheating the recycle CO₂ and oxidant streams in the recuperative heat exchangers 13 and 14. The minor portion 69 passes in series through the preheating heat exchangers 73 and 22. Unit 22 is used to preheat the total methane feed stream 43 at 40 bar and 15°C which divides into a portion 41 used as fuel in combustor 2 and a portion 78 which is compressed to 304.5 bar in the intercooled compressor 21 and delivered to the pre-heater 22 as stream 42. The net CO₂ product stream 66 derived from the oxidized methane stream 77 can be produced at 1.04 bar from stream 60 or at 304.9 bar from steam 48 or at any inter-stage pressure in compressors 6 and 7.

In an alternative embodiment, all the oxygen from the air separator can be delivered at 32 bar pressure. The O₂ for combustor 1 is mixed with CO₂ taken from stream 65 and compressed in an additional compressor to 305 bar. It is then preheated as described above and used as oxidant stream 52. The remaining O₂ stream is preheated and delivered as stream 35 to combustor 2.

In a further alternative embodiments, the portion of oxygen for combustor 2 from the air separator can be delivered at 30 bar and the portion required for combustor 1 at 1.2 bar can be taken and mixed with a portion of CO₂ taken from stream 63. The oxidant mixture is then compressed to 305 bar in a multistage compressor then heated in 15, 73 and 14 as before.

The effect of increasing the inlet temperature of turbine 1 can be seen in the table below which is based on the case where the O₂ for combustor 1 is produced at 1.2 bar pressure from the ASU and mixed with 1 bar CO₂ from stream 65 and compressed in an intercooled multistage compressor to 305 bar. This table is based on ISO conditions using pure methane as the fuel with net CO₂ product at 1 bar pressure and all water derived from fuel combustion produced as liquid at17.2°C. All these cases are based on a turbine 1 inlet pressure of 295 bar and outlet pressure of 30 bar and a turbine 2 inlet pressure of 29.1 bar and an outlet pressure of 1.1 bar.

| | | | |
|---|---|---|---|
| Turbine inlet temperature | 1154.4 °C | 1250.0 °C | 1349.4 °C |
| Net power output | 742.5 Mw | 763.7 Mw | 788.3 Mw |
| Contained O₂ flow at 1.2 bar | 3226.5 MT/day | 4022.6 MT/day | 4873.1 MT/day |
| Contained O₂ flow at 30 bar | 5511.0 MT/day | 4863.9 MT/day | 4178.8 MT/day |
| Net efficiency (LHV basis) | 58.58% | 59.23% | 59.85% |

Many modifications and other embodiments of the invention will come to mind to one skilled in the art to which this invention pertains having the benefit of the teachings presented in the foregoing descriptions and associated drawings. Therefore, it is to be understood that the invention is not to be limited to the specific embodiments disclosed but that its scope is defined by the appended claims. Although specific terms are employed herein, they are used in a generic and descriptive sense only and not for purposes of limitation.

## Claims

1. A method of power generation comprising:
expanding a compressed recycle CO₂ stream at a pressure of at least about 12 MPa to about 60 MPa across a series of a first turbine (3) and a last turbine (4) over a pressure ratio of at least about 20 so as to output from the last turbine a last turbine discharge stream that optionally is at a pressure of less than about 0.15 MPa;
heating a discharge stream from the first turbine (3) prior to passage into the last turbine (4) in a combustor (2) by combusting a hydrocarbon or carbonaceous fuel in the presence of an oxidant and the first turbine discharge stream so as to form a combustor exhaust stream at a temperature of at least about 800 °C;
cooling the last turbine discharge stream in a recuperator heat exchanger (14);
isolating at least a portion of the CO₂ from the cooled turbine discharge stream to form the recycle CO₂ stream;
compressing the recycle CO₂ stream;
heating the compressed recycle CO₂ stream in the recuperator heat exchanger (14) against the last turbine discharge stream; and
passing the recycle CO₂ stream to the series of turbines (3, 4).

2. The method of claim 1, wherein the compressing comprises passing the recycle CO₂ stream through a multistage compressor (6, 7) that compresses the recycle CO₂ stream to a pressure of at least about 5.75 MPa and then through a pump (11) that increases the pressure to at least about 12 MPa; particularly wherein multistage compressor comprises a first compressor (6) including at least two units that are intercooled; and more particularly wherein the multistage compressor comprises a second compressor (7), and wherein the method further comprises intercooling between the first compressor and the second compressor; preferably wherein the recycle CO₂ stream exiting the first compressor (6) is at a pressure of at least about 3 MPa.

3. The method of claim 1 or claim 2, further comprising withdrawing a portion of the last turbine discharge stream upstream from the recuperator heat exchanger (14) and passing the withdrawn portion of the last turbine discharge stream through one or more further heat exchangers (22) so as to provide heat to one or more further streams, which optionally is one or both of the hydrocarbon or carbonaceous fuel and the oxygen input to the combustor (2) or to an optional further combustor.

4. The method of any one of claims 1 through 3, wherein the method further comprises providing additional heat from a different source to at least a portion of the recycle CO₂ stream prior to expanding the recycle CO₂ stream across the series of turbines; particularly wherein the method further comprises withdrawing a side stream from the compressed recycle CO₂ stream and adding the additional heat to the withdrawn side stream of compressed recycle CO₂; preferably wherein the combination of the heating in the recuperator heat exchanger against the last turbine discharge stream and the additional heat from a different source is sufficient so that the temperature difference between the recycle CO₂ expanded across the series of turbines (3, 4) and the temperature of the last turbine discharge stream is less than about 50 °C.

5. The method of any claim 4, wherein the source of the additional heat is an air separation unit (20).

6. The method of any one of claims 1 through 5, further comprising passing the recycle CO₂ stream into a further combustor (1) prior to expanding the compressed recycle CO₂ stream across the series of turbines (3, 4), and wherein an exhaust stream from the further combustor (1) enters the first turbine (3) at a pressure of about 12 MPa to about 60 MPa.

7. The method of any one of claims 1 through 6, further comprising passing the compressed recycle CO₂ stream into a liquefaction heat exchanger so as to liquefy the compressed recycle CO₂ stream against a stream of high pressure liquid natural gas (LNG) and increase the temperature of the LNG stream; particularly wherein the method comprises one or both of the following features:
the LNG stream is at a pressure of about 4 MPa to about 7 MPa and a temperature of about -160 °C to about -140 °C; and
the LNG stream exiting the liquefaction heat exchanger is at a temperature that is within about 10°C to about 20°C of the inlet temperature of the compressed recycle CO₂ stream into the liquefaction heat exchanger.

8. The method of any one of claims 1 through 7, wherein one or both of the first and last turbines (3, 4) are in a mechanical working connection with one or more further components used in the method such that the shaft power provided by one or both of the first and last turbines is mechanically transferred to the one or more further components; particularly wherein the method comprises one or both of the following features:
the one or more further components is a compressor(6), a pump (11), or an air separation unit (20); and
one or both of the first and last turbines (3,4) also provide shaft power to a generator (5).

9. The method of any one of claims 1 through 8, wherein one or both of the first and last turbines (3, 4) comprises one or more radial turbines.

10. A power generation system comprising:
a first turbine (3) and a second turbine (4) in series that are adapted to expand a high pressure recycle CO₂ stream between a high pressure of about 10 MPa to about 60 MPa over a pressure ratio that is greater than 20;
a combustor (2) that has an inlet in a working arrangement with an outlet of the first turbine (3) and that has an outlet in a working arrangement with an inlet of the second turbine (4) and that is adapted to heat the high pressure recycle CO₂ stream;
a recuperator heat exchanger (14) having a first inlet in a working arrangement with an outlet of the second turbine (4) and adapted to transfer heat between a discharge stream from the outlet of the second turbine and the high pressure recycle CO₂ stream; and
at least one compressor (6, 7) having an outlet in a working arrangement with a second inlet of the recuperator heat exchanger and adapted to pressurizing the recycle CO₂ stream to a pressure of at least about 10 MPa;
wherein an outlet of the recuperator heat exchanger (14) is in a working arrangement with an inlet of the first turbine (3) such that the heated, compressed recycle CO₂ stream passes from the outlet of the at least one compressor (6, 7) to an inlet of the first turbine via the recuperator heat exchanger (14).

11. The power generation system of claim 10, wherein the combustor (2) is a second combustor, and wherein the system further comprises a first combustor (1) having an inlet and an outlet and being adapted to combust a fuel in the presence of a recycle CO₂ stream and provide a first combustor exhaust stream at a pressure of about 12 MPa to about 60 MPa;
wherein the first turbine (3) is in a working arrangement with the first combustor (1) and comprises an inlet adapted to receive the first combustor exhaust stream and an outlet adapted to output a first turbine discharge stream;
wherein the second combustor (2) in a working arrangement with an outlet of the first turbine (3) and comprises an inlet adapted to receive the first turbine discharge stream and an outlet adapted to output a second combustor exhaust stream;
wherein the second turbine (4) is in a working arrangement with the second combustor (2) and comprises an inlet adapted to receive the second combustor exhaust stream and an outlet adapted to output a second turbine discharge stream that optionally is at a pressure of less than about 0.15 MPa, the first and second turbines being adapted to expand their respective streams such that the pressure ratio at the inlet of the first turbine to the outlet of the second turbine is at least about 20;
wherein the first inlet of the recuperator heat exchanger (14) is adapted to receive the second turbine discharge stream and transfer heat therefrom to the recycle CO₂ stream; and
wherein the outlet of the at least one compressor (6, 7) is in a working arrangement with the second inlet of the recuperator heat exchanger (14) such that the compressed recycle CO₂ stream passes to the recuperator heat exchanger for heating against the second turbine discharge stream, the at least one compressor being adapted to pressurize the recycle CO₂ stream to a pressure of at least about 12 MPa;
wherein the outlet of the recuperator heat exchanger (14) is in a working arrangement with the inlet of the first combustor (1) such that the heated, compressed recycle CO₂ stream passes to the first combustor prior to passage to the inlet of the first turbine.

12. The power generation system of claim 11, further comprising a divider positioned upstream from the recuperator heat exchanger and adapted to divide out a portion of the second turbine discharge stream, and optionally further comprising one or more further heat exchangers (73, 22) adapted for receiving the divided portion of the second turbine discharge stream and heating one or more further streams.

13. The power generation system of claim 11 or claim 12, wherein the at least one compressor (6, 7) comprises a multistage compressor adapted to compress the recycle CO₂ stream to a pressure of at least about 5.75 MPa and a pump (11) adapted to increases the pressure to at least about 12 MPa; particularly wherein multistage compressor (6, 7) comprises a first compressor (6) including at least two units that are intercooled; and more particularly wherein the multistage compressor comprises a second compressor (7), and wherein the system further comprises an intercooler (8) between the first compressor (6) and the second compressor (7).

14. The power generation system of claim 11, further comprising a heat transfer element in a working arrangement with the recuperator heat exchanger and adapted to provide additional heat from a different source to at least a portion of the recycle CO₂ stream; particularly wherein the source of the additional heat is an air separation unit (20).

15. The power generation system of any one of claims 10 through 14, further comprising a liquefaction heat exchanger; particularly wherein the liquefaction heat exchanger is adapted to position the compressed recycle CO₂ stream and a stream of high pressure liquid natural gas (LNG) in a heat exchange relationship so as to liquefy the compressed recycle CO₂ stream and increase the temperature of the LNG stream.

16. The power generation system of any one of claims 10 through 15, wherein one or both of the first and second turbines (3, 4) are in a mechanical working connection with one or more further components of the system, said mechanical working connection being adapted to mechanically transfer shaft power provided by one or both of the first and second turbines (3, 4) to the one or more further components; particularly wherein the one or more further components is a compressor (6), a pump (11), or an air separation unit (20).

17. The power generation system of any one of claims 10 through 16, wherein one or both of the first and second turbines (3, 4) comprises one or more radial turbines.

## Patentansprüche

1. Ein Verfahren zum Erzeugen von Leistung, umfassend:
Expandieren eines komprimierten Recycle-CO₂-Stroms bei einem Druck von mindestens ungefähr 12 MPa auf ungefähr 60 MPa über eine Reihe von einer ersten Turbine (3) und einer letzten Turbine (4) über ein Druckverhältnis von mindestens ungefähr 20, um aus der letzten Turbine einen letzten Turbinenabgabestrom auszugeben, welcher optional bei einem Druck von weniger als ungefähr 0,15 MPa ist;
Erwärmen eines Abgabestroms aus der ersten Turbine (3) in einer Brennkammer (2) vor Einleitung in die letzte Turbine (4) durch Verbrennen eines kohlenwasserstoff- oder kohlenstoffhaltigen Brennstoffs in Gegenwart eines Oxidans und des ersten Turbinenabgabestroms, um einen Brennkammerabgasstrom bei einer Temperatur von mindestens ungefähr 800 °C zu bilden;
Kühlen des letzten Turbinenabgabestroms in einem Rekuperator-Wärmetauscher (14);
Isolieren mindestens eines Teils des CO₂ aus dem gekühlten Turbinenabgabestrom, um den Recycle-CO₂-Strom zu bilden;
Komprimieren des Recycle-CO₂-Stroms;
Erwärmen des komprimierten Recycle-CO₂-Stroms in dem Rekuperator-Wärmetauscher (14) gegen den letzten Turbinenabgabestrom; und
Leiten des Recycle-CO₂-Stroms zu der Reihe von Turbinen (3, 4).

2. Das Verfahren nach Anspruch 1, wobei das Komprimieren umfasst:
Leiten des Recycle-CO₂-Stroms durch einen mehrstufigen Verdichter (6, 7) hindurch, welcher den Recycle-CO₂-Strom auf einen Druck von mindestens ungefähr 5,75 MPa verdichtet, und dann durch eine Pumpe (11) hindurch, welche den Druck auf mindestens ungefähr 12 MPa erhöht; wobei insbesondere der mehrstufige Verdichter einen ersten Verdichter (6) umfasst, welcher mindestens zwei Einheiten umfasst, welche zwischengekühlt sind; und wobei insbesondere der mehrstufige Verdichter einen zweiten Verdichter (7) umfasst, und wobei das Verfahren ferner eine Zwischenkühlung zwischen dem ersten Verdichter und dem zweiten Verdichter umfasst; wobei insbesondere der aus dem ersten Verdichter (6) austretende Recycle-CO₂-Strom bei einem Druck von mindestens ungefähr 3 MPa ist.

3. Das Verfahren nach Anspruch 1 oder Anspruch 2, ferner umfassend:
Abziehen eines Teils des letzten Turbinenabgabestroms stromaufwärts des Rekuperator-Wärmetauschers (14) und Leiten des abgezogenen Teils des letzten Turbinenabgabestroms durch einen oder mehrere weitere Wärmetauscher (22) hindurch, um einem oder mehreren weiteren Strömen Wärme bereitzustellen, bei denen es sich optional um eines oder beides von dem kohlenwasserstoff- oder kohlenstoffhaltigen Brennstoff und dem Sauerstoff handelt, welche der Brennkammer (2) oder einer optionalen weiteren Brennkammer eingespeist werden.

4. Das Verfahren nach einem der Ansprüche 1 bis 3, wobei das Verfahren ferner umfasst: Bereitstellen von zusätzlicher Wärme aus einer anderen Quelle an mindestens einen Teil des Recycle-CO₂-Stroms vor dem Expandieren des Recycle-CO₂-Stroms über die Reihe von Turbinen; wobei insbesondere das Verfahren ferner umfasst: Abziehen eines Seitenstroms von dem komprimierten Recycle-CO₂-Strom und Hinzufügen der zusätzlichen Wärme zu dem abgezogenen Seitenstrom von komprimiertem Recycle-CO₂; wobei vorzugsweise die Kombination aus der Erwärmung in dem Rekuperator-Wärmetauscher gegen den letzten Turbinenabgabestrom und der zusätzlichen Wärme aus einer anderen Quelle ausreichend ist, so dass die Temperaturdifferenz zwischen dem über die Reihe von Turbinen (3, 4) expandierten Recycle-CO₂ und der Temperatur des letzten Turbinenabgabestroms kleiner ist als ungefähr 50 °C.

5. Das Verfahren nach Anspruch 4, wobei die Quelle für die zusätzliche Wärme eine Luftzerlegungseinheit (20) ist.

6. Das Verfahren nach einem der Ansprüche 1 bis 5, ferner umfassend:
Leiten des Recycle-CO₂-Stroms in eine weitere Brennkammer (1) hinein, bevor der komprimierte Recycle-CO₂-Strom über die Reihe von Turbinen (3, 4) expandiert wird, und wobei ein Abgasstrom aus der weiteren Brennkammer (1) mit einem Druck von ungefähr 12 MPa bis ungefähr 60 MPa in die erste Turbine (3) eintritt.

7. Das Verfahren nach einem der Ansprüche 1 bis 6, ferner umfassend:
Leiten des komprimierten Recycle-CO₂-Stroms in einen Verflüssigungswärmetauscher hinein, um den komprimierten Recycle-CO₂-Strom gegen einen Strom von Hochdruck-Flüssigerdgas (LNG) zu verflüssigen und die Temperatur des LNG-Stroms zu erhöhen; wobei insbesondere das Verfahren eines oder beide der folgenden Merkmale umfasst:
der LNG-Strom ist bei einem Druck von ungefähr 4 MPa bis ungefähr 7 MPa und bei einer Temperatur von ungefähr -160 °C bis ungefähr -140 °C; und
der aus dem Verflüssigungswärmetauscher austretende LNG-Strom ist bei einer Temperatur, welche innerhalb von ungefähr 10 °C bis ungefähr 20 °C der Eintrittstemperatur des komprimierten Recycle-CO₂-Stroms in den Verflüssigungswärmetauscher liegt.

8. Das Verfahren nach einem der Ansprüche 1 bis 7, wobei eine oder beide der Turbinen, welche sind die erste und die letzte Turbine (3, 4), in einer mechanischen Arbeitsverbindung mit einer oder mehreren weiteren Komponenten stehen, welche in dem Verfahren verwendet werden, derart, dass die Wellenleistung, welche von einer oder beiden der Turbinen, welche sind die erste und die letzte Turbine, bereitgestellt wird, mechanisch auf die eine oder die mehreren weiteren Komponenten übertragen wird; wobei insbesondere das Verfahren eines oder beide der folgenden Merkmale umfasst:
die eine oder die mehreren weiteren Komponenten sind ein Verdichter (6), eine Pumpe (11) oder eine Luftzerlegungseinheit (20); und
eine oder beide der Turbinen, welche sind die erste und die letzte Turbine (3, 4), stellen ferner Wellenleistung an einen Generator bereit.

9. Das Verfahren nach einem der Ansprüche 1 bis 8, wobei eine oder beide der Turbinen, welche sind die erste und die letzte Turbine (3, 4), eine oder mehrere Radialturbinen umfassen.

10. Ein Leistungserzeugungssystem, umfassend:
eine erste Turbine (3) und eine zweite Turbine (4) in Reihe, welche dazu ausgebildet sind, einen Hochdruck-Recycle-CO₂-Strom zwischen einem hohen Druck von ungefähr 10 MPa auf ungefähr 60 MPa über ein Druckverhältnis, welches größer ist als 20, zu expandieren;
eine Brennkammer (2), welche einen Einlass in einer Arbeitsanordnung mit einem Auslass der ersten Turbine (3) aufweist und einen Auslass in einer Arbeitsanordnung mit einem Einlass der zweiten Turbine (2) aufweist und welche ausgebildet ist, den Hochdruck-Recycle-CO₂-Strom zu erwärmen;
einen Rekuperator-Wärmetauscher (14) mit einem ersten Einlass in einer Arbeitsanordnung mit einem Auslass der zweiten Turbine (4), welcher ausgebildet ist, Wärme zwischen einem Abgabestrom aus dem Auslass der zweiten Turbine und dem Hochdruck-Recycle-CO₂-Strom zu übertragen; und
mindestens einen Verdichter (6, 7) mit einem Auslass in einer Arbeitsanordnung mit einem zweiten Einlass des Rekuperator-Wärmetauschers, welcher ausgebildet ist, den Recycle-CO₂-Strom unter einen Druck von mindestens ungefähr 10 MPa zu setzen;
wobei ein Auslass des Rekuperator-Wärmetauschers (14) in einer Arbeitsanordnung mit einem Einlass der ersten Turbine (3) steht, derart, dass der erwärmte komprimierte Recycle-CO₂-Strom von dem Auslass des mindestens einen Verdichters (6, 7) über den Rekuperator-Wärmetauscher (14) zu einem Einlass der ersten Turbine fließt.

11. Das Leistungserzeugungssystem nach Anspruch 10, wobei die Brennkammer (2) eine zweite Brennkammer ist, und wobei das System ferner eine erste Brennkammer (1) umfasst, welche einen Einlass und einen Auslass aufweist und ausgebildet ist, einen Brennstoff in Gegenwart eines Recycle-CO₂-Stroms zu verbrennen und einen ersten Brennkammerabgasstrom bei einem Druck von ungefähr 12 MPa bis ungefähr 60 MPa bereitzustellen;
wobei die erste Turbine (3) in einer Arbeitsanordnung mit der ersten Brennkammer (1) steht und einen Einlass, welcher ausgebildet ist, den ersten Brennkammerabgasstrom aufzunehmen, und einen Auslass, welcher ausgebildet ist, einen ersten Turbinenabgabestrom auszugeben, umfasst;
wobei die zweite Brennkammer (2) in einer Arbeitsanordnung mit einem Auslass der ersten Turbine (3) steht und einen Einlass, welcher ausgebildet ist, den ersten Turbinenabgabestrom aufzunehmen, und einen Auslass, welcher ausgebildet ist, einen zweiten Brennkammerabgasstrom auszugeben, umfasst;
wobei die zweite Turbine (4) in einer Arbeitsanordnung mit der zweiten Brennkammer (2) steht und umfasst: einen Einlass, welcher ausgebildet ist, den zweiten Brennkammerabgasstrom aufzunehmen, und einen Auslass, welcher ausgebildet ist, einen zweiten Turbinenabgabestrom auszugeben, welcher optional bei einem Druck von weniger als ungefähr 0,15 MPa ist, wobei die erste und die zweite Turbine ausgebildet sind, ihre jeweiligen Ströme zu expandieren, derart, dass das Druckverhältnis zwischen dem Einlass der ersten Turbine und dem Auslass der zweiten Turbine mindestens ungefähr 20 beträgt;
wobei der erste Einlass des Rekuperator-Wärmetauschers (14) ausgebildet ist, den zweiten Turbinenabgabestrom aufzunehmen und Wärme von demselben auf den Recycle-CO₂-Strom zu übertragen; und
wobei der Auslass des mindestens einen Verdichters (6, 7) in einer Arbeitsanordnung mit dem zweiten Einlass des Rekuperator-Wärmetauschers (14) steht, derart, das der komprimierte Recycle-CO₂-Strom zur Erwärmung gegen den zweiten Turbinenabgabestrom dem Rekuperator-Wärmetauscher zufließt, wobei der mindestens eine Verdichter ausgebildet ist, den Recycle-CO₂-Strom unter einen Druck von mindestens ungefähr 12 MPa zu setzen;
wobei der Auslass des Rekuperator-Wärmetauschers (14) in einer Arbeitsanordnung mit dem Einlass der ersten Brennkammer (1) steht, derart, das der erwärmte komprimierte Recycle-CO₂-Strom der Brennkammer zufließt, bevor er dem Einlass der ersten Turbine zugeleitet wird.

12. Das Leistungserzeugungssystem nach Anspruch 11, ferner umfassend einen Teiler, welcher stromaufwärts des Rekuperator-Wärmetauschers positioniert ist und dazu ausgebildet ist, einen Teil des zweiten Turbinenabgabestroms herauszutrennen, und optional ferner umfassend einen oder mehrere weitere Wärmetauscher (73, 22), welche ausgebildet sind, den abgetrennten Teil des zweiten Turbinenabgabestroms aufzunehmen und einen oder mehrere weitere Ströme zu erwärmen.

13. Das Leistungserzeugungssystem nach Anspruch 11 oder Anspruch 12, wobei der mindestens eine Verdichter (6, 7) einen mehrstufigen Verdichter umfasst, welcher ausgebildet ist, den Recycle-CO₂-Strom auf einen Druck von mindestens ungefähr 5,75 MPa zu verdichten, und eine Pumpe (11), welche ausgebildet ist, den Druck auf mindestens ungefähr 12 MPa zu erhöhen; wobei insbesondere der mehrstufige Verdichter (6, 7) einen ersten Verdichter (6) umfasst, welcher mindestens zwei Einheiten umfasst, welche zwischengekühlt sind; und wobei insbesondere der mehrstufige Verdichter einen zweiten Verdichter (7) umfasst, und wobei das System ferner einen Zwischenkühler (8) zwischen dem ersten Verdichter (6) und dem zweiten Verdichter (7) umfasst.

14. Das Leistungserzeugungssystem nach Anspruch 11, ferner umfassend ein Wärmeübertragungselement, welches in einer Arbeitsanordnung mit dem Rekuperator-Wärmetauscher steht und ausgebildet ist, zusätzliche Wärme von einer anderen Quelle an mindestens einen Teil des Recycle-CO₂-Stroms bereitzustellen; wobei insbesondere die Quelle der zusätzlichen Luft eine Luftzerlegungseinheit (20) ist.

15. Das Leistungserzeugungssystem nach einem der Ansprüche 10 bis 14, ferner umfassend einen Verflüssigungswärmetauscher; wobei insbesondere der Verflüssigungswärmetauscher ausgebildet ist, den komprimierten Recycle-CO₂-Strom und einen Strom von Hochdruck-Flüssigerdgas (LNG) in eine Wärmetauschbeziehung zu positionieren, um den komprimierten Recycle-CO₂-Strom zu verflüssigen und die Temperatur des LNG-Stroms zu erhöhen.

16. Das Leistungserzeugungssystem nach einem der Ansprüche 10 bis 15, wobei eine oder beide der Turbinen, welche sind die erste und die zweite Turbine (3, 4), in einer mechanischen Arbeitsverbindung mit einer oder mehreren weiteren Komponenten des Systems stehen, wobei die mechanische Arbeitsverbindung ausgebildet ist, Wellenleistung, welche von einer oder beiden der Turbinen, welche sind die erste und die zweite Turbine (3, 4), bereitgestellt ist, mechanisch auf die eine oder die mehreren weiteren Komponenten zu übertragen; wobei insbesondere die eine oder die mehreren weiteren Komponenten ein Verdichter (6), eine Pumpe (11) oder eine Luftzerlegungseinheit (20) sind.

17. Das Leistungserzeugungssystem nach einem der Ansprüche 10 bis 16, wobei eine oder beide der Turbinen, welche sind die erste und die letzte Turbine (3, 4), eine oder mehrere Radialturbinen umfassen.

## Revendications

1. Procédé de production d'énergie électrique comprenant :
la dilatation d'un courant de CO₂ de recyclage comprimé à une pression d'au moins environ 12 MPa à environ 60 MPa à travers une série d'une première turbine (3) et d'une dernière turbine (4) sur un rapport de pression d'au moins environ 20 afin de sortir à partir de la dernière turbine un dernier courant d'évacuation de turbine qui est facultativement à une pression de moins d'environ 0,15 MPa ;
le chauffage d'un courant d'évacuation provenant de la première turbine (3) avant son passage dans la dernière turbine (4) dans une chambre de combustion (2) par la combustion d'un combustible hydrocarboné ou carboné en présence d'un oxydant et du premier courant d'évacuation de turbine afin de former un courant d'échappement de chambre de combustion à une température d'au moins environ 800 °C ;
le refroidissement du dernier courant d'évacuation de turbine dans un échangeur de chaleur de récupération (14) ;
l'isolement d'au moins une partie du CO₂ provenant du courant d'évacuation de turbine refroidi pour former le courant de CO₂ de recyclage ;
la compression du courant de CO₂ de recyclage ;
le chauffage du courant CO₂ de recyclage comprimé dans l'échangeur de chaleur de récupération (14) contre le dernier courant d'évacuation de turbine ; et
le passage du courant de CO₂ de recyclage dans la série de turbine (3, 4).

2. Procédé selon la revendication 1, dans lequel la compression comprend le passage du courant de CO₂ de recyclage à travers un compresseur à étages multiples (6, 7) qui comprime le courant de CO₂ de recyclage jusqu'à une pression d'au moins environ 5,75 MPa et ensuite à travers une pompe (11) qui augmente la pression jusqu'à au moins environ 12 MPa ; en particulier dans lequel le compresseur à étages multiples comprend un premier compresseur (6) comprenant au moins deux unités qui sont à refroidissement intermédiaire ; et plus particulièrement dans lequel le compresseur à étages multiples comprend un second compresseur (7), et dans lequel le procédé comprend en outre un refroidissement intermédiaire entre le premier compresseur et le second compresseur ; de préférence dans lequel le courant de CO₂ de recyclage sortant du premier compresseur (6) est à une pression d'au moins environ 3 MPa.

3. Procédé selon la revendication 1 ou la revendication 2, comprenant en outre le retrait d'une partie du dernier courant d'évacuation de turbine en amont de l'échangeur de chaleur de récupération (14) et le passage de la partie retirée du dernier courant d'évacuation de turbine à travers un ou plusieurs échangeurs de chaleur (22) supplémentaires afin de fournir de la chaleur à un ou plusieurs courants supplémentaires, qui sont facultativement un ou les deux parmi le combustible hydrocarboné ou carboné et l'entrée d'oxygène dans la chambre de combustion (2) ou dans une chambre de combustion supplémentaire facultative.

4. Procédé selon l'une quelconque des revendications 1 à 3, dans lequel le procédé comprend en outre la fourniture de chaleur supplémentaire provenant d'une source différente à au moins une partie du courant de CO₂ de recyclage avant la dilatation du courant de CO₂ de recyclage à travers la série de turbine ; en particulier dans lequel le procédé comprend en outre le retrait d'un courant de soutirage à partir du courant de CO₂ de recyclage comprimé et l'ajout de la chaleur supplémentaire au courant de soutirage retiré de CO₂ de recyclage comprimé ; de préférence dans lequel la combinaison de la chaleur dans l'échangeur de chaleur de récupération contre le dernier courant d'évacuation de turbine et la chaleur supplémentaire provenant d'une source différente est suffisante pour que la différence de température entre le CO₂ de recyclage dilaté à travers la série de turbines (3, 4) et la température du dernier courant d'évacuation de turbine soit inférieure à environ 50 °C.

5. Procédé selon la revendication 4, dans lequel la source de chaleur supplémentaire est une unité de séparation d'air (20).

6. Procédé selon l'une quelconque des revendications 1 à 5, comprenant en outre le passage du courant de CO₂ de recyclage dans une chambre de combustion (1) supplémentaire avant la dilatation du courant de CO₂ de recyclage comprimé à travers la série de turbines (3, 4), et dans lequel un courant d'échappement provenant de la chambre de combustion (1) supplémentaire entre dans la première turbine (3) à une pression d'environ 12 MPa à environ 60 MPa.

7. Procédé selon l'une quelconque des revendications 1 à 6, comprenant en outre le passage du courant de CO₂ de recyclage comprimé dans un échangeur de chaleur de liquéfaction afin de liquéfier le courant de CO₂ de recyclage comprimé contre un courant de gaz naturel liquéfié (LNG) à haute pression et d'augmenter la température du courant de LNG ; en particulier dans lequel le procédé comprend une ou les deux parmi les caractéristiques suivantes :
le courant de LNG est à une pression d'environ 4 MPa à environ 7 MPa et une température d'environ -160 °C à environ -140 °C ; et
le courant de LNG sortant de l'échangeur de chaleur de liquéfaction est à une température qui est entre environ 10 °C et environ 20 °C de la température d'entrée du courant de CO₂ de recyclage comprimé dans l'échangeur de chaleur de liquéfaction.

8. Procédé selon l'une quelconque des revendications 1 à 7, dans lequel une ou les deux parmi les première et dernière turbines (3, 4) sont dans une connexion de travail mécanique avec un ou plusieurs composants supplémentaires utilisés dans le procédé de façon que la puissance d'arbre fournie par l'une ou les deux parmi les première et dernière turbines soit transférée mécaniquement aux un ou plusieurs composants supplémentaires ; en particulier dans lequel le procédé comprend une ou les deux parmi les caractéristiques suivantes :
les un ou plusieurs composants supplémentaires sont un compresseur (6), une pompe (11), ou une unité de séparation d'air (20) ; et
une ou les deux parmi les première et dernière turbines (3, 4) fournissent également une puissance d'arbre à un générateur (5).

9. Procédé selon l'une quelconque des revendications 1 à 8, dans lequel une ou les deux parmi les première et dernière turbines (3, 4) comprennent une ou plusieurs turbines radiales.

10. Système de production d'énergie électrique comprenant :
une première turbine (3) et une seconde turbine (4) en série qui sont adaptées pour dilater un courant de CO₂ de recyclage à haute pression entre une pression élevée d'environ 10 MPa et environ 60 MPa sur un rapport de pression qui est supérieur à 20 ;
une chambre de combustion (2) qui comporte une entrée dans un agencement de travail avec une sortie de la première turbine (3) et qui comporte une sortie dans un agencement de travail avec une entrée de la seconde turbine (4) et qui est adaptée pour chauffer le courant de CO₂ de recyclage à haute pression ;
un échangeur de chaleur de récupération (14) comportant une première entrée dans un agencement de travail avec une sortie de la seconde turbine (4) et adapté pour transférer de la chaleur entre un courant d'évacuation provenant de la sortie de la seconde turbine et le courant de CO₂ de recyclage à haute pression ; et
au moins un compresseur (6, 7) comportant une sortie dans un agencement de travail avec seconde entrée de l'échangeur de chaleur de récupération et adapté pour pressuriser le courant de CO₂ de recyclage jusqu'à une pression d'au moins environ 10 MPa ;
dans lequel une sortie de l'échangeur de chaleur de récupération (14) est dans un agencement de travail avec une entrée de la première turbine (3) de façon que le courant de CO₂ de recyclage comprimé et chauffé passe depuis la sortie de l'au moins un compresseur (6, 7) vers une entrée de la première turbine via l'échangeur de chaleur de récupération (14).

11. Système de production d'énergie électrique selon la revendication 10, dans lequel la chambre de combustion (2) est une seconde chambre de combustion, et dans lequel le système comprend en outre une première chambre de combustion (1) comportant une entrée et une sortie et étant adaptée pour brûler un combustible en présence d'un courant de CO₂ de recyclage et fournir un premier courant d'échappement de chambre de combustion à une pression d'environ 12 MPa à environ 60 MPa ;
dans lequel la première turbine (3) est dans un agencement de travail avec la première chambre de combustion (1) et comprend une entrée adaptée pour recevoir le premier courant d'échappement de chambre de combustion et une sortie adaptée pour sortir un premier courant d'évacuation de turbine ;
dans lequel la seconde chambre de combustion (2) dans un agencement de travail avec une sortie de la première turbine (3) et comprend une entrée adaptée pour recevoir le premier courant d'évacuation de turbine et une sortie adaptée pour sortir un second courant d'échappement de chambre de combustion ;
dans lequel la seconde turbine (4) est dans un agencement de travail avec la seconde chambre de combustion (2) et comprend une entrée adaptée pour recevoir le second courant d'échappement de chambre de combustion et une sortie adaptée pour sortir un second courant d'évacuation de turbine qui est facultativement à une pression de moins d'environ 0,15 MPa, les première et seconde turbines étant adaptées pour dilater leurs courants respectifs de façon que le rapport de pression à l'entrée de la première turbine vers la sortie de la seconde turbine soit au moins d'environ 20 ;
dans lequel la première entrée de l'échangeur de chaleur de récupération (14) est adaptée pour recevoir le second courant d'évacuation de turbine et transférer la chaleur de celui-ci vers le courant de CO₂ de recyclage ; et
dans lequel la sortie de l'au moins un compresseur (6, 7) est dans un agencement de travail avec la seconde entrée de l'échangeur de chaleur de récupération (14) de façon que le courant de CO₂ de recyclage comprimé passe vers l'échangeur de chaleur de récupération pour chauffer contre le second courant d'évacuation de turbine, l'au moins un compresseur étant adapté pour pressuriser le courant de CO₂ de recyclage jusqu'à une pression d'au moins environ 12 MPa ;
dans lequel la sortie de l'échangeur de chaleur de récupération (14) est dans un agencement de travail avec l'entrée de la première chambre de combustion (1) de façon que le courant de CO₂ de recyclage comprimé et chauffé passe vers la première chambre de combustion avant son passage vers l'entrée de la première turbine.

12. Système de production d'énergie électrique selon la revendication 11, comprenant en outre un diviseur positionné en amont de l'échangeur de chaleur de récupération et adapté pour diviser une partie du second courant d'évacuation de turbine, et facultativement comprenant en outre un ou plusieurs échangeurs de chaleur (73, 22) supplémentaires adaptés pour recevoir la partie divisée du second courant d'évacuation de turbine et chauffer un ou plusieurs courants supplémentaires.

13. Système de production d'énergie électrique selon la revendication 11 ou la revendication 12, dans lequel l'au moins un compresseur (6, 7) comprend un compresseur à étages multiples adapté pour comprimer le courant de CO₂ de recyclage jusqu'à une pression d'au moins environ 5,75 MPa et une pompe (11) adaptée pour augmenter la pression jusqu'à au moins environ 12 MPa ; en particulier dans lequel le compresseur à étages multiples (6, 7) comprend un premier compresseur (6) comprenant au moins deux unités qui sont à refroidissement intermédiaire ; et plus particulièrement dans lequel le compresseur à étages multiples comprend un second compresseur (7), et dans lequel le système comprend en outre un refroidisseur intermédiaire (8) entre le premier compresseur (6) et le second compresseur (7).

14. Système de production d'énergie électrique selon la revendication 11, comprenant en outre un élément de transfert de chaleur dans un agencement de travail avec l'échangeur de chaleur de récupération et adapté pour fournir de la chaleur supplémentaire provenant d'une source différente à au moins une partie du courant de CO₂ de recyclage ; en particulier dans lequel la source de la chaleur supplémentaire est une unité de séparation d'air (20).

15. Système de production d'énergie électrique selon l'une quelconque des revendications 10 à 14, comprenant en outre un échangeur de chaleur de liquéfaction ; en particulier dans lequel l'échangeur de chaleur de liquéfaction est adapté pour positionner le courant de CO₂ de recyclage comprimé et un courant de gaz naturel liquéfié (LNG) à haute pression dans une relation d'échange de chaleur afin de liquéfier le courant de CO₂ de recyclage comprimé et augmenter la température du courant de LNG.

16. Système de production d'énergie électrique selon l'une quelconque des revendications 10 à 15, dans lequel une ou les deux parmi les première et seconde turbines (3, 4) sont dans une connexion de travail mécanique avec un ou plusieurs composants supplémentaires du système, ladite connexion de travail mécanique étant adaptée pour transférer mécaniquement une puissance d'arbre fournie par une ou les deux parmi les première et seconde turbines (3, 4) aux un ou plusieurs composants supplémentaires ; en particulier dans lequel les un ou plusieurs composants supplémentaires sont un compresseur (6), une pompe (11), ou une unité de séparation d'air (20).

17. Système de production d'énergie électrique selon l'une quelconque des revendications 10 à 16, dans lequel une ou les deux parmi les première et seconde turbines (3, 4) comprennent une ou plusieurs turbines radiales.
